(19) **Europäisches Patentamt / European Patent Office / Office européen des brevets**

(11) **EP 4 738 125 A1**

(12) # EUROPEAN PATENT APPLICATION
published in accordance with Art. 153(4) EPC

(43) Date of publication:
06.05.2026 Bulletin 2026/19

(21) Application number: 24933029.1

(22) Date of filing: 24.05.2024

(51) International Patent Classification (IPC):
*G06F 11/30* (2006.01)

(86) International application number:
PCT/CN2024/095299

(87) International publication number:
WO 2025/200109 (02.10.2025 Gazette 2025/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.03.2024 CN 202410382672

(71) Applicant: Suzhou Metabrain Intelligent
Technology Co., Ltd.
Suzhou, Jiangsu 215000 (CN)

(72) Inventors:
• LI, Jinfeng
Suzhou, Jiangsu 215000 (CN)
• HUANG, Jiaming
Suzhou, Jiangsu 215000 (CN)
• LIANG, Wenjun
Suzhou, Jiangsu 215000 (CN)
• WANG, Yun
Suzhou, Jiangsu 215000 (CN)
• ZHU, Baobin
Suzhou, Jiangsu 215000 (CN)
• LIN, Jinyun
Suzhou, Jiangsu 215000 (CN)
• WU, An
Suzhou, Jiangsu 215000 (CN)

(74) Representative: Studio Torta S.p.A.
Via Viotti, 9
10121 Torino (IT)

(54) **HARD DISK MONITORING SYSTEM, METHOD AND DEVICE, STORAGE MEDIUM, AND BASEBOARD MANAGEMENT CONTROLLER**

(57)  The present application relates to the technical field of hard disk monitoring, and discloses a system, a method, and device for monitoring a hard disk, a non-volatile readable storage medium, and a baseboard management controller. The system for monitoring a hard disk, through the connection between a pin of the baseboard management controller and a hard disk status pin of the hard disk, achieves out-of-band monitoring of the hard disk by directly outputting hard disk log data from the hard disk status pin of the hard disk to the baseboard management controller. This approach reduces the difficulty of out-of-band monitoring of the hard disk without affecting the original functionality of the hard disk. As a result, the range of hard disks that can be monitored in a device is increased, facilitating out-of-band monitoring of all hard disks in the device, enabling operation and maintenance personnel to access full hard disk status data, and further ensuring the security of device services.

```
                                                    ┌─ S4
┌─────────────────────────────────────────┐
│ Modulate, according to hard disk log data │
│ and a hard disk status signal that         │
│ corresponds to a hard disk status pin, a   │
│ first signal                               │
└─────────────────────────────────────────┘
                    │
                    ▼                          ┌─ S5
┌─────────────────────────────────────────┐
│ Send the first signal to a baseboard       │
│ management controller via the hard disk    │
│ status pin, such that the baseboard        │
│ management controller demodulates the      │
│ first signal to obtain the hard disk log   │
│ data before monitoring the hard disk       │
│ according to the hard disk log data        │
└─────────────────────────────────────────┘
```

FIG. 11

EP 4 738 125 A1

## Description

### Cross-Reference to Related Application

The present application claims priority to Chinese Patent Application No. 202410382672.7, titled "HARD DISK MONITORING SYSTEM, METHOD, AND DEVICE, STORAGE MEDIUM, AND BASEBOARD MANAGEMENT CONTROLLER", filed with the China National Intellectual Property Administration on March 29, 2024, the entire contents of which are incorporated herein by reference.

### Technical Field

The present application relates to the technical field of hard disk monitoring, and in particular, to a system, a method, and a device for monitoring a hard disk, a non-volatile readable storage medium, and a baseboard management controller.

### Background

A hard disk is one of the primary storage devices of a computer. Accordingly, the healthy operation of the hard disk is one of the key factors in ensuring the reliability of a device server.

To ensure precise control of the operational status of the hard disk, a device needs to perform monitoring during the operation of the hard disk to acquire status information of the hard disk. At present, the main hard-disk monitoring solutions are categorized into in-band monitoring and out-of-band monitoring of a hard disk. In-band monitoring of a hard disk refers to acquiring the status information of the hard disk through data communication between monitoring software running on the central processing unit (CPU) and the hard disk. This monitoring solution often makes it difficult to present the monitoring data to operation and maintenance personnel. Out-of-band monitoring of a hard disk refers to monitoring the hard disk's status by acquiring the status information of the hard disk through a baseboard management controller (BMC). The monitoring results can be presented to operation and maintenance personnel, making this the currently preferred monitoring method. However, since the out-of-band management system does not have permission to access the hard disk's service data, out-of-band monitoring cannot be carried out for many hard disks.

Increasing the range of hard disks that can be monitored via out-of-band monitoring in a device is a technical problem that needs to be solved by a person skilled in the art.

### Summary

An object of the present application is to provide a system, a method, and a device for monitoring a hard disk, a non-volatile readable storage medium, and a baseboard management controller, for expanding the range of hard disks that can be monitored via out-of-band monitoring in a device.

To solve the technical problem above, the present application provides a system for monitoring a hard disk, including a baseboard management controller and a hard disk, wherein

a pin of the baseboard management controller is connected to a hard disk status pin of the hard disk;

the hard disk is configured to modulate hard disk log data and a hard disk status signal that corresponds to the hard disk status pin to obtain a first signal, and is configured to output the first signal via the hard disk status pin; and

the baseboard management controller is configured to demodulate the first signal to obtain the hard disk log data and monitor the hard disk according to the hard disk log data.

Optionally, the first signal simultaneously carries the modulated hard disk log data and the modulated hard disk status signal.

Optionally, each level width of one or more level widths of the first signal correspond to a data bits of one or more data bits of the hard disk log data.

Optionally, high-low level transition in the first signal correspond to the hard disk status signal.

Optionally, the hard disk status signal is a square wave signal, and the first signal is a signal obtained by the hard disk converting the hard disk log data into a signal with a level widthcorresponding to the hard disk log data, and then replacing the square wave signal with the signal with the level width corresponding to the hard disk log data; and

the level width corresponding to the hard disk log data differs from a level width of the square wave signal.

Optionally, the hard disk status signal is a square wave signal, and the first signal is a signal obtained by the hard disk converting the hard disk log data into a signal with a level width a level width corresponding to the hard disk log data, and then adjusting, according to the level width corresponding to the hard disk log data, a level width of each signal cycle corresponding to the hard disk log data in the square wave signal; and

the level width corresponding to the hard disk log data differs from a level width of the square wave signal.

Optionally, a level signal with a large proportion in the first signal corresponds to the hard disk status signal.

Optionally, the hard disk status signal is a constant-level signal, and the first signal is a signa obtained by the hard disk converting the hard disk log data into a signal with a level width corresponding to the hard disk log data, and then replacing the constant-level signal of corresponding durations with the signal with the level width corresponding to the hard disk log data; and
in each signal cycle of the first signal, a proportion of an inverted-level signal of the constant-level signal is less than 50%.

Optionally, the hard disk status signal is a constant-level signal, and the first signal is a signal obtained by the hard disk converting the hard disk log data into a signal with a level width corresponding to the hard disk log data and generating, according to the signal with a level width corresponding to the hard disk log data, an inverted-level signal corresponding to the constant-level signal, and then inserting the inverted-level signal into the constant-level signal; and
in each signal cycle of the first signal, a proportion of an inverted-level signal of the constant-level signal is less than 50%.

Optionally, the hard disk status signal includes a single constant-level signal, or the hard disk status signal includes a constant high-level signal and a constant low-level signal;

the first signal is obtained by the hard disk by modulating a signal with a level width corresponding to the hard disk log data and the hard disk status signal, after the hard disk has converted the hard disk log data into a signal with a level width corresponding to the hard disk log data;

when the hard disk status signal is a constant high-level signal, a duty cycle of each cycle of the signal with a level width corresponding to the hard disk log data is greater than 50%; and

when the hard disk status signal is a constant low-level signal, the duty cycle of each cycle of the signal with a level width corresponding to the hard disk log data is less than 50%.

Optionally, the hard disk status signal includes a square wave signal and a constant-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;

when the hard disk status signal is a square wave signal, a maximum duty cycle within a signal cycle of the hard disk log data is less than a first duty cycle, and/or a minimum duty cycle within a signal cycle of the hard disk log data is greater than a second duty cycle;

when the constant-level signal is a constant high-level signal, the first duty cycle is a minimum duty cycle of the first signal corresponding to the constant-level signal; and

when the constant-level signal is a constant low-level signal, the second duty cycle is a maximum duty cycle of the first signal corresponding to the constant-level signal.

Optionally, the first signal carries, in a time-division manner, the modulated hard disk log data and the modulated hard disk status signal.

Optionally, demodulating, by the baseboard management controller, the first signal to obtain the hard disk log data includes:
measuring, by the baseboard management controller, a level width of the first signal to obtain digital data corresponding to the first signal, and parsing the digital data into the hard disk log data.

Optionally, the baseboard management controller is further configured to demodulate, according to a signal type of the hard disk status data corresponding to the hard disk status signal, the first signal to obtain the hard disk status data.

Optionally, demodulating, by the baseboard management controller, the first signal to obtain the hard disk log data includes:

measuring, by the baseboard management controller, a level width of the first signal to obtain digital data corresponding to the hard disk log data, and parsing the digital data into the hard disk log data; and
demodulating, by the baseboard management controller according to a signal type of the hard disk status data corresponding to the hard disk status signal, the first signal to obtain the hard disk status data includes:
when the signal type of the hard disk status data include a constant-level signal, demodulating, by the baseboard management controller according to a signal having a large proportion in the first signal, the hard disk status data.

Optionally, demodulating, by the baseboard management controller according to a signal type of the hard disk status data corresponding to the hard disk status signal, the first signal to obtain the hard disk status data includes:
when the signal types of the hard disk status data include a square wave signal, demodulating, by the baseboard management controller according to high-low level transition in the first signal, the hard disk status data.

Optionally, the system for monitoring a hard disk further includes a status control circuit corresponding to the hard disk status pin, a controlled terminal of the status control circuit is connected to the baseboard management controller, and an output terminal of the status control circuit is connected to a drive terminal of a controlled element corresponding to the hard disk status pin;

and

the baseboard management controller is further configured to control, according to the hard disk status data, the status control circuit to drive the controlled element.

Optionally, the hard disk status pin is a hard disk status indicator light control pin, and the status control circuit is an amplifier drive circuit; and

controlling, by the baseboard management controller according to the hard disk status data, the status control circuit to drive the controlled element includes:

when the baseboard management controller demodulates the first signal to obtain the hard disk status data corresponding to a turn-on command, controlling the amplifier drive circuit to generate a square wave signal to illuminate a hard disk status indicator light corresponding to the hard disk status pin; and when the baseboard management controller demodulates the first signal to obtain the hard disk status data corresponding to a turn-off command, stopping controlling the amplifier drive circuit to generate the square wave signal, thereby extinguishing the hard disk status indicator light.

Optionally, the baseboard management controller includes a baseboard management controller chip and a complex programmable logic device;

the baseboard management controller chip is connected to the complex programmable logic device via an inter-integrated circuit bus and an interrupt signal line, and a data input/output pin of the complex programmable logic device is connected to the hard disk status pin;

the complex programmable logic device is configured to demodulate the first signal to obtain the hard disk log data and to send an interrupt signal to the baseboard management controller chip via the interrupt signal line; and

the baseboard management controller chip is configured to read, upon receiving the interrupt signal, the hard disk log data from the complex programmable logic device via the inter-integrated circuit bus and monitor the hard disk according to the hard disk log data.

Optionally, the baseboard management controller includes a baseboard management controller chip and a complex programmable logic device;

the baseboard management controller chip is connected to the complex programmable logic device via an inter-integrated circuit bus, and a data input/output pin of the complex programmable logic device is connected to the hard disk status pin;

the complex programmable logic device is configured to demodulate the first signal to obtain the hard disk log data; and

the baseboard management controller chip is configured to poll the inter-integrated circuit bus, and upon polling the complex programmable logic device, read the hard disk log data, and monitor the hard disk according to the hard disk log data.

Optionally, the baseboard management controller is further configured to send, when hard disk status data obtained by demodulating the first signal is non-control data or data obtained by demodulating the first signal does not include the hard disk status data, and when the current time falls within a negotiation time period agreed upon with the hard disk, a reverse transmission request to the hard disk status pin, and, upon receiving an allow signal sent by the hard disk, send a control command for the hard disk to the hard disk status pin; and

the hard disk is further configured to execute the control command.

Optionally, demodulating, by the baseboard management controller, the first signal to obtain the hard disk log data includes:

measuring, by the baseboard management controller, a pulse amplitude of the first signal to obtain digital data corresponding to the hard disk log data, and parsing the digital data into the hard disk log data.

Optionally, the hard disk is further configured to:

during sending of the hard disk status signal via the hard disk status pin, when the hard disk status signal is modulated within a current level of the hard disk status signal, detect timeliness of obtaining the first signal by inverting the level within the current level, wherein the timeliness is configured to indicate whether inverting the level within the current level is allowed to obtain the first signal; and

process the current level according to the timeliness.

Optionally, the hard disk is further configured to:

detect a difference between a level width of the first signal and a level width already output of the current level;

when the difference is greater than a difference threshold, determine that the timeliness is configured to indicate that inverting the level within the current level is allowed to obtain the first signal, the difference threshold being determined according to a minimum duration required for level inversion; and

when the difference is less than or equal to the difference threshold, determine that the timeliness is configured to indicate that inverting the level within the current level is not allowed to obtain the first signal.

Optionally, the hard disk is further configured to:

when the timeliness is configured to indicate that inverting the level within the current level is allowed to obtain the first signal, send the first signal within the current level; and

when the timeliness is configured to indicate that inverting the level within the current level is not allowed to obtain the first signal, send the first signal after the current level with a target level width, wherein the target level width is a level width that prevents the baseboard management controller from demodulating the hard disk log data in the first signal.

Optionally, the target level width is greater than a maximum value of a target width range, the target width range being a range of level widths with digital data corresponding to the target level width.

Optionally, the hard disk is further configured to: when the hard disk status signal switches during the output of the first signal, control modulation of a target level and a reference level according to the level type of the currently sent target level and a switching of the hard disk status signal, wherein the reference level is a level following the target level.

Optionally, the hard disk is further configured to: when the hard disk status signal switches from a square wave signal to a constant-level signal, and the level type of the target level is the same as a level type of the constant-level signal, insert an inverted-level signal of the constant-level signal following the target level, and modulate, according to the hard disk status signal being the constant-level signal, the reference level.

Optionally, the hard disk is further configured to:

when the hard disk status signal switches from a square wave signal to a constant-level signal, and the level type of the target level is opposite to a level type of the constant-level signal, modulate, according to the hard disk status signal being the square wave signal, the next level of the target level following the target level; and

insert an inverted-level signal of the constant-level signal following the next level of the target level, and modulate, according to the hard disk status signal being the constant-level signal, the reference level.

Optionally, the hard disk is further configured to: when the hard disk status signal switches from a constant-level signal to a square wave signal, and a pulse type of the target pulse is the same as a pulse type of the constant-level signal, invert the level following the target level, and modulate, according to the hard disk status signal being the square wave signal, the reference level.

Optionally, the hard disk is further configured to: when the hard disk status signal switches from a constant-level signal to a square wave signal, and a level type of the target level is opposite to a level type of the constant-level signal, modulate, according to the hard disk status signal being the square wave signal, a reference pulse following the target level.

Optionally, demodulating, by the baseboard management controller, the first signal to obtain the hard disk log data includes:
measuring, by the baseboard management controller, a level width of the first signal that fall within a target width range to obtain digital data corresponding to the hard disk log data, and parsing the digital data into the hard disk log data, wherein the target width range is a range of level widths with digital data corresponding to the target level width.

Optionally, measuring, by the baseboard management controller, a level width of the first signal that fall within a target width range to obtain digital data corresponding to the hard disk log data, and parsing the digital data into the hard disk log data includes:

measuring, by the baseboard management controller, a level width of the current level in the first signal;

detecting, by the baseboard management controller, whether the level width of the current level falls within the target width range;

when the level width of the current level falls within the target width range, determining, by the baseboard management controller, the level width of the current level as the digital data corresponding to the current level; and

looking up, by the baseboard management controller from a correspondence between digital data and data encoding, data encoding corresponding to the digital data of the current level to obtain the hard disk log data.

Optionally, after detecting whether the level width of the current level falls within the target width range, when the level width of the current level does not fall within the target width range, the baseboard management controller discards a level width of a target level.

Optionally, demodulating, by the baseboard management controller, the first signal to obtain the hard disk log data includes:
measuring, by the baseboard management controller, a level width of level of a target type in the first signal to obtain digital data corresponding to the hard disk log data, and parsing the digital data into the hard disk log data, wherein the target type is a level type in the first signal that is permitted to carry the hard disk log data.

Optionally, before measuring the level width of the level of the target type in the first signal to obtain digital data corresponding to the hard disk log data, and parsing the digital data into the hard disk log data, the baseboard management controller determines hard disk status according to a level in the first signal; and

the baseboard management controller determines the target type according to the hard disk status.

Optionally, determining, by the baseboard management controller according to the levels in the first signal, hard disk status includes:

detecting, by the baseboard management controller, a level width of an inverted-level signal in the first signal, wherein the hard disk status signal is a constant-level signal being configured to indicate that the hard disk is in an idle state, and the inverted-level signal is a level opposite in polarity to the constant-level signal; and

determining, by the baseboard management controller according to the level width of the inverted-level signal, the hard disk status.

Optionally, determining, by the baseboard management controller according to the hard disk status, the target type includes:

when the hard disk status is in an idle state, determining, by the baseboard management controller, the target type as a level type having the same polarity as the constant-level signal.

Optionally, determining, by the baseboard management controller according to the hard disk status, the target type includes:

when the hard disk status is in an active state, determining, by the baseboard management controller, the target type as a high-level type and a low-level type.

To solve the technical problem above, the present application further provides a baseboard management controller configured to monitor a hard disk, wherein

the baseboard management controller is configured to demodulate a first signal output from a hard disk status pin of the hard disk to obtain hard disk log data, and to monitor the hard disk according to the hard disk log data; and

the first signal is modulated by the hard disk according to the hard disk log data and a hard disk status signal that corresponds to the hard disk status pin.

Optionally, the first signal simultaneously carries the modulated hard disk log data and the modulated hard disk status signal.

Optionally, each level width of one or more level widths of the first signal correspond to a data bit of one or more data bits of the hard disk log data.

Optionally, high-low level transition in the first signal correspond to the hard disk status signal.

Optionally, a level signal having a large proportion in the first signal corresponds to the hard disk status signal.

Optionally, the hard disk status signal includes a single constant-level signal, or the hard disk status signal includes a constant high-level signal and a constant low-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;

when the hard disk status signal is a constant high-level signal, a duty cycle of each cycle of the signal with a level width corresponding to the hard disk log data is greater than 50%; and

when the hard disk status signal is a constant low-level signal, the duty cycle of each cycle of the signal with a level width corresponding to the hard disk log data is less than 50%.

Optionally, the hard disk status signal includes a square wave signal and a constant-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;

when the hard disk status signal is a square wave signal, a maximum duty cycle of each signal cycle of the signal with a level width corresponding to the hard disk log data is less than a first duty cycle, and/or a minimum duty cycle of each signal cycle of the signal with a level width corresponding to the hard disk log data is greater than a second duty cycle;

when the constant-level signal is a constant high-level signal, the first duty cycle is a minimum duty cycle of the first signal corresponding to the constant-level signal; and

when the constant-level signal is a constant low-level signal, the second duty cycle is a maximum duty cycle of the first signal corresponding to the constant-level signal.

Optionally, the first signal carries, in a time-division manner, the modulated hard disk log data and the modulated hard disk status signal.

Optionally, demodulating, by the baseboard management controller, the first signal to obtain the hard disk log data includes:

measuring, by the baseboard management controller, a level width of the first signal to obtain digital data corresponding to the hard disk log data, and parsing the digital data into the hard disk log data.

Optionally, the baseboard management controller is further configured to demodulate, according to a signal type of the hard disk status signal, the hard disk status data from a signal cycle configured to demodulate the hard disk log data.

Optionally, the signal type of the hard disk status signal includes a square wave signal; and demodulating, by the baseboard management controller according to the signal type of the hard disk status signal, the hard disk status data from a signal cycle configured to demodulate the hard disk log data includes: demodulating, by the baseboard management controller according to high-low level transition in the first signal, the hard disk status data.

Optionally, demodulating, by the baseboard management controller according to high-low level transition in the first signal, the hard disk status data includes:

after demodulating the hard disk log data, replacing, by the baseboard management controller, the first signal with a square wave signal to obtain the hard disk status signal; and

demodulating, according to the hard disk status signal, the hard disk status data.

Optionally, demodulating, by the baseboard management controller according to high-low level transition in the first signal, the hard disk status data includes:

after demodulating the hard disk log data, adjusting, by the baseboard management controller according to a pulse width of the corresponding square wave signal, a pulse width of each cycle of the first signal to obtain the hard disk status signal; and

demodulating, according to the hard disk status signal, the hard disk status data.

Optionally, the signal type of the hard disk status signal includes a constant-level signal; and demodulating, by the baseboard management controller according to the signal type of the hard disk status signal, the hard disk status data from a signal cycle configured to demodulate the hard disk log status data includes: demodulating, by the baseboard management controller according to a level signal having a large proportion in a signal cycle of the first signal, the hard disk status data.

Optionally, demodulating, by the baseboard management controller according to a level signal having a large proportion in a signal cycle of the first signal, the hard disk status data includes:

after demodulating the hard disk log data, replacing, by the baseboard management controller, the first signal with the level signal having a large proportion in the signal cycle of the first signal to obtain the hard disk status signal; and

demodulating, according to the hard disk status signal, the hard disk status data.

Optionally, demodulating, by the baseboard management controller according to a level signal having a large proportion in a signal cycle of the first signal, the hard disk status data includes:

after demodulating the hard disk log data, replacing, by the baseboard management controller, an inverted-level signal corresponding to the level signal having a large proportion in the signal cycle of the first signal with the level signal having a large proportion in the signal cycle of the first signal to obtain the hard disk status signal; and

demodulating, according to the hard disk status signal, the hard disk status data.

Optionally, the signal type of the hard disk status signal includes a single constant-level signal, or the signal type of the hard disk status signal includes a constant high-level signal and a constant low-level signal; and demodulating, by the baseboard management controller according to the signal type of the hard disk status signal, the hard disk status data from a signal cycle configured to demodulate the hard disk log data includes:

after demodulating the hard disk log data, restoring, by the baseboard management controller, a signal cycle of the first signal with a duty cycle greater than 50% to a constant high-level signal, and restoring a signal cycle of the first signal with a duty cycle less than 50% to a constant low-level signal, to obtain the hard disk status signal; and

demodulating, according to the hard disk status signal, the hard disk status data.

Optionally, the signal type of the hard disk status signal includes a square wave signal and a constant-level signal; and demodulating, by the baseboard management controller according to the signal type of the hard disk status signal, the hard disk status data from a signal cycle configured to demodulate the hard disk log data includes:

when the constant-level signal is a constant high-level signal, after demodulating the hard disk log data, restoring, by the baseboard management controller, a signal cycle of the first signal with a duty cycle less than a first duty cycle to a square wave signal, and restoring a signal cycle of the first signal with a duty cycle greater than the first duty cycle to a constant high-level signal, to obtain the hard disk status signal;

when the constant-level signal is a constant low-level signal, after demodulating the hard disk log data, restoring, by the baseboard management controller, a signal cycle of the first signal with a duty cycle greater than a second duty cycle to a square wave signal, and restoring a signal cycle of the first signal with a duty cycle less than the second duty cycle to a constant low-level signal, to obtain the hard disk status signal;

when the constant-level signal includes a constant high-level signal and a constant low-level signal, after demodulating the hard disk log data, restoring, by the baseboard management controller, a signal cycle of the first signal with a duty cycle less than the first duty cycle and greater than the second duty cycle to a square wave signal, restoring a signal cycle of the first signal with a duty cycle greater than the first duty cycle to a constant high-level signal, and restoring a signal cycle of the first signal with a duty cycle less than the second duty cycle to a constant low-level signal, to obtain the hard disk status signal; and

demodulating, according to the hard disk status signal, the hard disk status data.

Optionally, demodulating, by the baseboard management controller, the first signal to obtain the hard disk log data includes:

after demodulating the hard disk status data from the first signal according to the signal type of the hard disk status signal, demodulating, by the baseboard management controller, the hard disk log data from a signal of any signal period of the first signal that does not conform to the signal type of the hard disk status signal; or

measuring, by the baseboard management controller, level widths of the first signal to obtain digital data corresponding to the hard disk log data, parsing the digital data into the hard disk log data, and demodulating the hard disk status data from a signal of any signal period of the first signal whose level width does not correspond to the digital data.

Optionally, the baseboard management controller further includes a status control circuit corresponding to the hard disk status pin, a controlled terminal of the status control circuit is connected to the baseboard management controller, and an output terminal of the status control circuit is connected to a drive terminal of a controlled element corresponding to the hard disk status pin; and

the baseboard management controller is further configured to control, according to the hard disk status data, the status control circuit to drive the controlled element.

Optionally, the hard disk status pin is a hard disk status indicator light control pin, and the status control circuit is an amplifier drive circuit; and
controlling, by the baseboard management controller according to the hard disk status data, the status control circuit to drive the controlled element includes:

when the baseboard management controller demodulates the first signal to obtain the hard disk status data corresponding to a turn-on command, controlling the amplifier drive circuit to generate a square wave signal to illuminate a hard disk status indicator light corresponding to the hard disk status pin; and

when the baseboard management controller demodulates the first signal to obtain the hard disk status data corresponding to a turn-off command, stopping controlling the amplifier drive circuit to generate the square wave signal, thereby extinguishing the hard disk status indicator light.

Optionally, the baseboard management controller includes a baseboard management controller chip and a complex programmable logic device;

the baseboard management controller chip is connected to the complex programmable logic device via an inter-integrated circuit bus and an interrupt signal line, and a data input/output pin of the complex programmable logic device is connected to the hard disk status pin;

the complex programmable logic device is configured to demodulate the first signal to obtain the hard disk log data and to send an interrupt signal to the baseboard management controller chip via the interrupt signal line; and

the baseboard management controller chip is configured to read, upon receiving the interrupt signal, the hard disk log data from the complex programmable logic device via the inter-integrated circuit bus and monitor the hard disk according to the hard disk log data.

Optionally, the baseboard management controller includes a baseboard management controller chip and a complex programmable logic device;

the baseboard management controller chip is connected to the complex programmable logic device via an inter-integrated circuit bus, and a data input/output pin of the complex programmable logic device is connected to the hard disk status pin;

the complex programmable logic device is configured to demodulate the first signal to obtain the hard disk log data; and

the baseboard management controller chip is configured to poll the inter-integrated circuit bus, and upon polling the complex programmable logic device, read the hard disk log data, and monitor the hard disk according to the hard disk log data.

Optionally, the baseboard management controller is further configured to send, when hard disk status data obtained by demodulating the first signal is non-control data or when the demodulated first signal does not include the hard disk status data, and when the current time falls within a negotiation time period agreed upon with the hard disk, a reverse transmission request to the hard disk status pin, and, upon receiving an allow signal sent by the hard disk, send a control command for the hard disk to the hard disk status pin.

Optionally, demodulating, by the baseboard management controller, the first signal to obtain the hard disk log data includes:
measuring, by the baseboard management controller, a pulse amplitude of the first signal to obtain digital data corresponding to the hard disk log data, and parsing the digital data into the hard disk log data.

Optionally, the hard disk is further configured to:

during sending of the hard disk status signal via the hard disk status pin, when the hard disk status signal is modulated within a current level of the hard disk status signal, detect timeliness of obtaining the first signal by inverting the level within the current level, wherein the timeliness is configured to indicate whether inverting the level within the current level is allowed to obtain the first signal; and

process the current level according to the timeliness.

Optionally, the hard disk is further configured to:

detect a difference between a level width of the first signal and a level width already output for the current level;

when the difference is greater than a difference threshold, determine that the timeliness is configured to indicate that inverting the level within the current level is allowed to obtain the first signal, the difference threshold being determined according to a minimum duration required for level inversion; and

when the difference is less than or equal to the difference threshold, determine that the timeliness is configured to indicate that inverting the level within the current level is not allowed to obtain the first signal.

Optionally, the hard disk is further configured to:

when the timeliness is configured to indicate that inverting the level within the current level is allowed to obtain the first signal, send the first signal within the current level; and

when the timeliness is configured to indicate that inverting the level within the current level is not allowed to obtain the first signal, send the first signal after the current level with a target level width, wherein the target level width is a level width that prevents the baseboard management controller from demodulating the hard disk log data.

Optionally, the target level width is greater than a maximum value of a target width range, the target width range being a width range obtained from level widths corresponding to the digital data.

Optionally, the hard disk is further configured to: when the hard disk status signal switches during the output of the first signal, control modulation of a target level and a reference level according to a level type of the target level currently being sent by the hard disk and a switching of the hard disk status signal, wherein the reference level is a level following the target level.

Optionally, the hard disk is further configured to: when the hard disk status signal switches from a square wave signal to a constant-level signal, and the level type of the target level is the same as a level type of the constant-level signal, insert an inverted-level signal of the constant-level signal following the target level, and modulate, according to the hard disk status signal being the constant-level signal, the reference level.

Optionally, the hard disk is further configured to: when the hard disk status signal switches from a square wave signal to a constant-level signal, and the level type of the target level is opposite to a level type of the constant-level signal, modulate, according to the hard disk status signal being the square wave signal, the next level of the target level following the target level; and insert an inverted-level signal of the constant-level signal following the next level of the target level, and modulate, according to the hard disk status signal being the constant-level signal, the reference level.

Optionally, the hard disk is further configured to: when the hard disk status signal switches from a constant-level signal to a square wave signal, and a pulse type of the target pulse is the same as a pulse type of the constant-level signal, invert the level following the target level, and modulate, according to the hard disk status signal being the square wave signal, the reference level.

Optionally, the hard disk is further configured to: when the hard disk status signal switches from a constant-level signal to a square wave signal, and a level type of the target level is opposite to a level type of the constant-level signal, modulate, according to the hard disk status signal being the square wave signal, a reference pulse following the target level.

Optionally, demodulating, by the baseboard management controller, the first signal to obtain the hard disk log data includes:

measuring, by the baseboard management controller, a level width of the first signal that fall within a target width range to obtain digital data corresponding to the hard disk log data, and parsing the digital data into the hard disk log data, wherein the target width range is a width range obtained from level widths corresponding to the digital data.

Optionally, measuring, by the baseboard management controller, a level width of the first signal that fall within a target width range to obtain digital data corresponding to the hard disk log data, and parsing the digital data into the hard disk log data includes:

measuring, by the baseboard management controller, a level width of the current level in the first signal;

detecting, by the baseboard management controller, whether the level width of the current level falls within the target width range;

when the level width of the current level falls within the target width range, determining, by the baseboard management controller, the level width of the current level as the digital data corresponding to the current level; and

looking up, by the baseboard management controller from a correspondence between digital data and data encoding, data encoding corresponding to the digital data of the current level to obtain the hard disk log data.

Optionally, after detecting whether the level width of the current level falls within the target width range, when the level width of the current level does not fall within the target width range, the baseboard management controller discards a level width of a target level.

Optionally, demodulating, by the baseboard management controller, the first signal to obtain the hard disk log data includes:

measuring, by the baseboard management controller, a level width of level of a target type in the first signal to obtain digital data corresponding to the hard disk log data, and parsing the digital data into the hard disk log data, wherein the target type is a level type in the first signal that is permitted to carry the hard disk log data.

Optionally, before measuring the level width of the level of the target type in the first signal to obtain digital data corresponding to the hard disk log data, and parsing the digital data into the hard disk log data, the baseboard management controller determines hard disk status according to a level in the first signal; and

the baseboard management controller determines the target type according to the hard disk status.

Optionally, determining, by the baseboard management controller according to the level in the first signal, hard disk status includes:

detecting, by the baseboard management controller, a level width of an inverted-level signal in the first signal, wherein the hard disk status signal is a constant-level signal being configured to indicate that the hard disk is in an idle state, and the inverted-level signal is a level opposite in polarity to the constant-level signal; and

determining, by the baseboard management controller according to the level width of the inverted-level signal, the hard disk status.

Optionally, determining, by the baseboard management controller according to the hard disk status, the target type includes:

when the hard disk status is in an idle state, determining, by the baseboard management controller, the target type as a level type having the same polarity as the constant-level signal.

Optionally, determining, by the baseboard management controller according to the hard disk status, the target type includes:

when the hard disk status is in an active state, determining, by the baseboard management controller, the target type as a high-level type and a low-level type.

To solve the technical problem above, the present application further provides a method for monitoring a hard disk applied to a baseboard management controller, the method including:

receiving a first signal output by a hard disk through a hard disk status pin, the first signal being modulated according to hard disk log data and a hard disk status signal that corresponds to the hard disk status pin;

demodulating the first signal to obtain the hard disk log data; and

monitoring the hard disk according to the hard disk log data.

Optionally, the first signal simultaneously carries the modulated hard disk log data and the modulated hard disk status signal.

Optionally, each level width of one or more level widths of the first signal correspond to a data bit of one or more data bits of the hard disk log data.

Optionally, high-low level transition in the first signal correspond to the hard disk status signal.

Optionally, a level signal having a large proportion in the first signal corresponds to the hard disk status signal.

Optionally, the hard disk status signal includes a single constant-level signal, or the hard disk status signal includes a constant high-level signal and a constant low-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;

when the hard disk status signal is a constant high-level signal, a duty cycle of each cycle of the signal with a level width corresponding to the hard disk log data is greater than 50%; and

when the hard disk status signal is a constant low-level signal, the duty cycle of each cycle of the signal with a level width corresponding to the hard disk log data is less than 50%.

Optionally, the hard disk status signal includes a square wave signal and a constant-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;

when the hard disk status signal is a square wave signal, a maximum duty cycle within a signal cycle of the hard disk log data is less than a first duty cycle, and/or a minimum duty cycle within a signal cycle of the hard disk log data is greater than a second duty cycle;

when the constant-level signal is a constant high-level signal, the first duty cycle is a minimum duty cycle of the first signal corresponding to the constant-level signal; and

when the constant-level signal is a constant low-level signal, the second duty cycle is a maximum duty cycle of the first signal corresponding to the constant-level signal.

Optionally, the first signal carries, in a time-division manner, the modulated hard disk log data and the modulated hard disk status signalr.

Optionally, demodulating the first signal to obtain the hard disk log data includes:
measuring a level width of the first signal to obtain digital data corresponding to the hard disk log data, and parsing the digital data into the hard disk log data.

Optionally, the hard disk monitoring method further includes:
demodulating, according to a signal type of the hard disk status signal, the hard disk status data from a signal cycle configured to demodulate the hard disk log data.

Optionally, the signal type of the hard disk status signal includes a square wave signal; and
demodulating, according to a signal type of the hard disk status signal, the hard disk status data from a signal cycle configured to demodulate the hard disk log data includes:
demodulating, according to high-low level transition in the first signal, hard disk status data.

Optionally, demodulating, according to high-low level transition in the first signal, the hard disk status data includes:

after demodulating the hard disk log data, replacing the first signal with a square wave signal to obtain the hard disk status signal; and
demodulating, according to the hard disk status signal, the hard disk status data.

Optionally, demodulating, according to high-low level transition in the first signal, the hard disk status data includes:

after demodulating the hard disk log data, adjusting, according to a pulse width of the corresponding square wave signal, a pulse width of each cycle of the first signal to obtain the hard disk status signal; and

demodulating, according to the hard disk status signal, the hard disk status data.

Optionally, the signal type of the hard disk status signal includes a constant-level signal; and
demodulating, according to the signal type of the hard disk status signal, the hard disk status data from a signal cycle configured to demodulate the hard disk log data includes:
demodulating, according to a level signal having a large proportion in the first signal, the hard disk status data.

Optionally, demodulating, according to a level signal having a large proportion in a signal cycle of the first signal, the hard disk status data includes:

after demodulating the hard disk log data, replacing the first signal with the level signal having a large proportion in the signal cycle of the first signal to obtain the hard disk status signal; and

demodulating, according to the hard disk status signal, the hard disk status data.

Optionally, demodulating, according to a level signal having a large proportion in a signal cycle of the first signal, the hard disk status data includes:

after demodulating the hard disk log data, replacing an inverted-level signal corresponding to the level signal having a large proportion in the signal cycle of the first signal with the level signal having a large proportion in the signal cycle of the first signal to obtain the hard disk status signal; and

demodulating, according to the hard disk status signal, the hard disk status data.

Optionally, the signal type of the hard disk status signal includes a single constant-level signal, or the signal type of the hard disk status signal includes a constant high-level signal and a constant low-level signal; and
demodulating, according to the signal type of the hard disk status signal, the hard disk status data from a signal cycle configured to demodulate the hard disk log data includes:

after demodulating the hard disk log data, restoring a signal cycle of the first signal with a duty cycle greater than 50% to a constant high-level signal, and restoring a signal cycle of the first signal with a duty cycle less than 50% to a constant low-level signal, to obtain the hard disk status signal; and

demodulating, according to the hard disk status signal, the hard disk status data.

Optionally, the signal type of the hard disk status signal includes a square wave signal and a constant-level signal; and
demodulating, according to the signal type of the hard disk status signal, the hard disk status data from a signal cycle configured to demodulate the hard disk log data includes:

when the constant-level signal is a constant high-level signal, after demodulating the hard disk log data, restoring a signal cycle of the first signal with a duty cycle less than a first duty cycle to a square wave signal, and restoring a signal cycle of the first signal with a duty cycle greater than the first duty cycle to a constant high-level signal, to obtain the hard disk status signal;

when the constant-level signal is a constant low-level signal, after demodulating the hard disk log data, restoring a signal cycle of the first signal with a duty cycle greater than a second duty cycle to a square wave signal, and restoring a signal cycle of the first signal with a duty cycle less than the second duty cycle to a constant low-level signal, to obtain the hard disk status signal;

when the constant-level signal includes a constant high-level signal and a constant low-level signal, after demodulating the hard disk log data, restoring a signal cycle of the first signal with a duty cycle less than the first duty cycle and greater than the second duty cycle to a square wave signal, restoring a signal cycle of the first signal with a duty cycle greater than the first duty cycle to a constant high-level signal, and restoring a signal cycle of the first signal with a duty cycle less than the second duty cycle to a constant low-level signal, to obtain the hard disk status signal; and

demodulating, according to the hard disk status signal, the hard disk status data.

Optionally, demodulating the first signal to obtain the hard disk log data includes:

after demodulating the hard disk status data from the first signal according to the signal type of the hard disk status signal, demodulating the hard disk log data from a signal of any signal period of the first signal that does not conform to the signal type of the hard disk status signal; or

measuring a level-width pulse width of the first signal to obtain digital data corresponding to the hard disk log data, parsing the digital data into the hard disk log data, and demodulating the hard disk status data from signal periods with level widths not corresponding to the digital data.

Optionally, the hard disk monitoring method further includes:
controlling, according to the hard disk status data, a status control circuit to drive a controlled element corresponding to the hard disk status pin.
Optionally, the hard disk status pin is a hard disk status indicator light control pin, and the status control circuit is an amplifier drive circuit; and
controlling, according to the hard disk status data, a status control circuit to drive a controlled element corresponding to the hard disk status pin includes:

when the first signal is demodulated to obtain the hard disk status data corresponding to a turn-on command, controlling the amplifier drive circuit to generate a square wave signal to illuminate a hard disk status indicator light corresponding to the hard disk status pin; and

when the first signal is demodulated to obtain the hard disk status data corresponding to a turn-off command, stopping controlling the amplifier drive circuit to generate the square wave signal, thereby extinguishing the hard disk status indicator light.

Optionally, the hard disk monitoring method is applied to a complex programmable logic device of the baseboard management controller, the complex programmable logic device being connected to a baseboard management controller chip of the baseboard management controller via an inter-integrated circuit bus; and monitoring the hard disk according to the hard disk log data includes:

sending, via an interrupt signal line, an interrupt signal to the baseboard management controller chip, such that, upon receiving the interrupt signal, the baseboard management controller chip reads the hard disk log data from the complex programmable logic device via the inter-integrated circuit bus and monitors the hard disk according to the hard disk log data.

Optionally, the hard disk monitoring method is applied to a complex programmable logic device of the baseboard management controller, the complex programmable logic device being connected to a baseboard management controller chip of the baseboard management controller via an inter-integrated circuit bus; and monitoring the hard disk according to the hard disk log data includes:

receiving polling from the baseboard management controller chip, such that, upon polling the complex programmable logic device, the baseboard management controller chip reads the hard disk log data and monitors the hard disk according to the hard disk log data.

Optionally, the hard disk monitoring method further includes:

when hard disk status data obtained by demodulating the first signal is non-control data or when the demodulated first signal does not include the hard disk status data, and when the current time falls within a negotiation time period agreed upon with the hard disk, sending a reverse transmission request to the hard disk status pin, and, upon receiving an allow signal sent by the hard disk, sending a control command for the hard disk to the hard disk status pin.

Optionally, demodulating the first signal to obtain the hard disk log data includes:

measuring a pulse amplitude of the first signal to obtain digital data corresponding to the hard disk log data, and parsing the digital data into the hard disk log data.

Optionally, demodulating the first signal to obtain the hard disk log data includes:

measuring level widths of the first signal that fall within a target width range to obtain digital data corresponding to the hard disk log data, and parsing the digital data into the hard disk log data, wherein the target width range is a width range obtained from level widths corresponding to the digital data.

Optionally, measuring a level width of the first signal that fall within a target width range to obtain digital data corresponding to the hard disk log data, and parsing the digital data into the hard disk log data includes:

measuring a level width of the current level in the first signal;

detecting whether the level width of the current level falls within the target width range;

when the level width of the current level falls within the target width range, determining the level width of the current level as the digital data corresponding to the current level; and

looking up, from a correspondence between digital data and data encoding, data encoding corresponding to the digital data of the current level to obtain the hard disk log data.

Optionally, after detecting whether the level width of the current level falls within the target width range, further including:

when the level width of the current level does not fall within the target width range, discarding a level width of a target level.

Optionally, demodulating the first signal to obtain the hard disk log data includes:

Measuring a level width of level of a target type in the first signal to obtain digital data corresponding to the hard disk log data, and parsing the digital data into the hard disk log data, wherein the target type is a level type in the first signal that is permitted to carry the hard disk log data.

Optionally, before measuring level width of the level of the target type in the first signal to obtain digital data corresponding to the hard disk log data and parsing the digital data into the hard disk log data, further including:

determining, according to the levels in the first signal, the hard disk status; and

determining, according to the hard disk status, the target type.

Optionally, determining, according to the levels in the first signal, the hard disk status includes:

detecting a level width of an inverted-level signal in the first signal, wherein the hard disk status signal is a constant-level signal being configured to indicate that the hard disk is in an idle state, and the inverted-level signal is a level opposite in polarity to the constant-level signal; and

determining, according to the level width of the inverted-level signal, the hard disk status.

Optionally, determining, according to the hard disk status, the target type includes:

when the hard disk status is in an idle state, determining the target type as a level type having the same polarity as the constant-level signal.

Optionally, determining, according to the hard disk status, the target type includes:
when the hard disk status is in an active state, determining the target type as a high-level type or a low-level type.

To solve the technical problem above, the present application further provides a hard disk monitoring method applied to a hard disk, the method including:

modulating, according to hard disk log data and a hard disk status signal that corresponds to a hard disk status pin, to obtain a first signal; and

sending the first signal to a baseboard management controller via the hard disk status pin, the baseboard management controller demodulates the first signal to obtain the hard disk log data before monitoring the hard disk according to the hard disk log data.

To solve the technical problem above, the present application further provides a device for monitoring a hard disk, including:

a memory configured to store a computer program; and

a processor configured to execute the computer program that, when executed by the processor, performing steps of the method for monitoring a hard disk according to any one of the aspects above.

To solve the technical problem above, the present application further provides a non-volatile computer readable storage medium having a computer program stored thereon, the computer program, when executed by a processor, performing steps of the method for monitoring a hard disk according to any one of the aspects above.

The system for monitoring a hard disk according to the present application has the advantageous effect that, by connecting the baseboard management controller to the hard disk status pin of the hard disk, out-of-band monitoring of the hard disk is achieved by directly outputting hard disk log data from the hard disk status pin of the hard disk to the baseboard management controller. This solves the problem of the out-of-band management system in conventional out-of-band monitoring solutions lacking permission to access hard disk data, making out-of-band monitoring of the hard disk difficult, thereby enabling the out-of-band monitoring of a greater number of hard disks. Furthermore, by modulating, via the hard disk, the hard disk log data onto the hard disk status signal corresponding to the original functions of the hard disk log pin to obtain a first signal, and outputting the first signal via the hard disk log pin, the baseboard management controller can demodulate the first signal to obtain the hard disk log data. This allows the hard disk to use its original control pins to simultaneously output hard disk log data to the baseboard management controller without affecting the original functionality of the hard disk, while reducing the difficulty of out-of-band monitoring of the hard disk. As a result, the range of hard disks that can be monitored in a device is increased, facilitating out-of-band monitoring of all hard disks in the device, enabling operation and maintenance personnel to access full hard disk status data, and further ensuring the security of device services.

The present application further provides a baseboard management controller, an apparatus, a device, and a non-volatile readable storage medium, which achieve the advantageous effects above and are not to be repeated here.

**Brief Description of the Drawings**

To more clearly illustrate the technical solutions of embodiments of the present application or of the prior art, the drawings required for describing the embodiments or the prior art are briefly introduced below. It is apparent that the drawings described below merely illustrate some embodiments of the present application, and that other drawings may also be obtained according to these drawings by a person of ordinary skill in the art without creative efforts.

FIG. 1 is a schematic structural diagram of a system for in-band monitoring a disk;

FIG. 2 is a schematic structural diagram of a system for out-of-band monitoring a disk;

FIG. 3 is a schematic structural diagram of a first type of system for monitoring a hard disk according to an embodiment of the present application;

FIG. 4 is a schematic structural diagram of a second type of system for monitoring a hard disk according to an embodiment of the present application;

FIG. 5 is a schematic structural diagram of a third type of system for monitoring a hard disk according to an embodiment of the present application;

FIG. 6 is a circuit diagram of a demodulation module according to an embodiment of the present application;

FIG. 7 is a circuit diagram of an amplifier drive circuit of a hard disk status indicator light according to an embodiment of the present application;

FIG. 8 is a schematic diagram of a modulation method for a square wave signal according to an embodiment of the present application;

FIG. 9 is a schematic diagram of a modulation method for a constant high-level signal according to an embodiment of the present application;

FIG. 10 is a flowchart of a first method for monitoring a hard disk according to an embodiment of the present application;

FIG. 11 is a flowchart of a second method for monitoring a hard disk according to an embodiment of the present application;

FIG. 12 is a flowchart of a third method for monitoring a hard disk according to an embodiment of the present application;

FIG. 13 is a schematic structural diagram of a device for monitoring a hard disk according to an embodiment of the present application;

FIG. 14 is a schematic diagram of a process for modulation a hard disk according to an embodiment of the present application;

FIG. 15 is a schematic diagram I of a process for switching a hard disk status according to an embodiment of the present application;

FIG. 16 is a schematic diagram II of a process for switching a hard disk status according to an embodiment of the present application;

FIG. 17 is a schematic diagram III of a process for switching a hard disk status according to an embodiment of the present application; and

FIG. 18 is a schematic diagram IV of a process for switching a hard disk status according to an embodiment of the present application.

Reference numerals are as follows: 101. Baseboard management controller chip; 102. Complex programmable logic device.

**Detailed Description of the Embodiments**

The core of the present application is to provide a system, a method, and a device for monitoring a hard disk, a non-volatile readable storage medium, and a baseboard management controller, for expanding the range of hard disks that can be monitored via out-of-band monitoring in a device.

The technical solutions in embodiments of the present application are clearly and thoroughly described below with reference to the drawings in the embodiments of the present application. It is apparent that the described embodiments are merely part of the embodiments of the present application and not all of the embodiments. All other embodiments obtained by a person of ordinary skill in the art on the basis of the embodiments in the present application without creative work shall fall within the scope of protection of the present application.

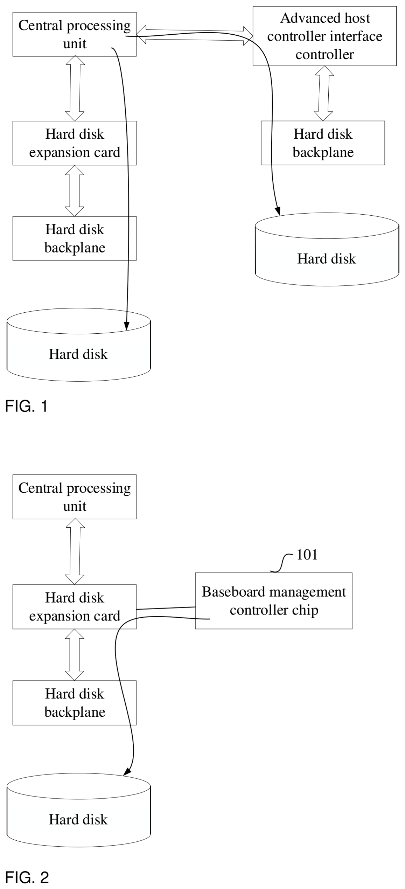

FIG. 1 is a schematic structural diagram of a system for in-band monitoring a disk. FIG. 2 is a schematic structural diagram of a system for out-of-band monitoring a disk.

For ease of understanding, the terms used in the embodiments of the present application and the related hardware framework are first introduced.

From the perspective of network management, current device operation monitoring solutions are primarily classified into in-band management and out-of-band management.

In-band management enables network management data and service data in the network to be transmitted over the same link. By logging into the device's operating system and accessing the user data of the device, the in-band management data of a monitored device can be acquired. As shown in FIG. 1, the method of acquiring monitoring data of a monitored component on the basis of an operating system running on a central processing unit (CPU) is a method of in-band management. For example, in a solution for in-band monitoring a hard disk, the central processing unit communicates with the hard disk to not only access the user data stored in the hard disk but also acquire the hard disk log data recorded during operation, allowing the user to view the hard disk log data by logging into the operating system.

Out-of-band management refers to managing the network via a dedicated network management channel, which separates network management data from service data and establishes an independent channel for the network management data. In this channel, only management data is transmitted. The separation of network management data from service data can enhance the efficiency and reliability of network management and is conducive to enhancing the security of the network management data.

Since in-band monitoring cannot meet operational requirements, after deployment, the server may provide out-of-band management and monitoring functions via a baseboard management controller (BMC). The baseboard management controller is a dedicated service processor that uses sensors to monitor the status of a computer, network server, or other hardware-driven device and communicates with the device's system administrator through an independent connection. In practical use, the baseboard management controller is usually mounted on the motherboard or the main circuit board of the monitored device. The baseboard management controller is configured, via sensors, to measure internal physical variables such as temperature, humidity, power supply voltage, fan speed, communication parameters, operating system (OS) functions, and the like. In a case where any of these variables exceed the specified limits, the baseboard management controller notifies the system administrator. The baseboard management controller can provide web services, featuring network communication functions and web pages for displaying the monitoring interface. Operation and maintenance personnel can acquire monitoring data from the baseboard management controller either by connecting to the baseboard management controller of the monitored device on-site via a network cable or by accessing baseboard management controllers of a plurality of monitored devices in a data center through the network.

Due to the limited performance and number of pins of the baseboard management controller chip 101 of the baseboard management controller, as the number of components to be monitored and monitoring items increases, a complex programmable logic device (CPLD) 102 is often provided in the baseboard management controller to share the performance load of the baseboard management controller chip 101 and to provide additional pins for connecting sensors or monitored components. The complex programmable logic device 102 mainly includes three parts: logic blocks, programmable interconnection channels, and input/output (I/O) blocks. A logic block of the complex programmable logic device 102 typically includes 4 to 20 macro-cells, each generally including a product term array, a product term distributor, and a programmable register. Each macro-cell has a plurality of configuration modes, and macro-cells can be cascaded, thereby enabling the implementation of more complex combinational and sequential logic functions. For highly integrated complex programmable logic devices 102, embedded array blocks with on-chip random access memory (RAM) and read-only memory (ROM) are typically provided. The programmable interconnection channels primarily provide an interconnection network of logic blocks, macro-cells, and input/output pins. The input/output (I/O) blocks provide an interface between the internal logic and the device's I/O pins.

As an essential component of a server, the hard disk is a key target for out-of-band monitoring and management. According to the type of communication interface, hard disks are mainly classified into serial attached SCSI (SAS) or serial advanced technology attachment (SATA) interface hard disks, and non-volatile memory host controller interface specification (NVMHCIS) or NVM Express (NVMe) interface hard disks. SAS interfaces are compatible with SATA interfaces. According to the type of non-volatile readable storage medium, hard disks are mainly classified into hard disk drives (HDD) and solid state disks (SSD, also referred to as solid state drives). Hard disk drives (HDD) primarily use SAS interfaces or SATA interfaces. Solid state disks include drives with SAS interfaces, SATA interfaces, and NVMe interfaces.

As shown in FIGS. 1 and 2, the server side accesses the hard disk by connecting the hard disk to the hard disk slots on the hard disk backplane. The interface of a hard disk typically has a gold-finger structure, whose pins, when inserted into the corresponding positions on the hard disk slots, can be connected via the circuitry on the hard disk backplane to components on the server side (e.g., data pins connected to the central processing unit).

In practical connections, some hard disks are directly inserted into the hard disk slots on the hard disk backplane, while others are connected to the hard disk backplane via hard disk expansion cards. The types of hard disk expansion cards (expanders) include redundant array of independent disks (RAID) cards, serial attached SCSI (SAS) expansion cards, serial advanced technology attachment (SATA) expansion cards, and the like. The hard disk directly plugged into the hard disk slot is, for example, a hard disk connected to the central processing unit through an advanced host controller interface (AHCI) controller.

As shown in FIG. 1, the central processing unit accesses the hard disk through a peripheral component interconnect express (PCI-Express, PCIe). Since hard disks with SAS or SATA interfaces cannot be directly connected to the peripheral component interconnect express, a hard disk expansion card is required to perform protocol conversion of the signals. The central processing unit may also acquire or control the status information of the hard disk by connecting to the hard disk backplane via serial general purpose input/output (sGPIO) lines. That is, the central processing unit can acquire hard disk log data through a hard disk expansion card connected via the peripheral component interconnect express, or acquire hard disk log data via the advanced host controller interface, thereby enabling in-band monitoring of the hard disks.

As shown in FIG. 2, when the baseboard management controller chip 101 intends to obtain hard disk log data, it can access the hard disk expansion card via an inter-integrated circuit (IIC or I2C) bus for a hard disk connected to the hard disk expansion card. The baseboard management controller chip 101 runs monitoring software to send pass-through commands to the hard disk expansion card, which can forward the pass-through commands to the hard disk. In response, the hard disk send the hard disk log data corresponding to the hard disk back to the hard disk expansion card, which then forwards the hard disk log data to the baseboard management controller. In addition, NVMe interface hard disk can be directly connected to the central processing unit via the peripheral component interconnect express. Through this peripheral component interconnect express between the hard disk and the central processing unit, a single inter-integrated circuit bus can be provided to the baseboard management controller, enabling the forwarding of commands and hard disk log data to the baseboard management controller, as is done via a hard disk expansion card. Only under this configuration can out-of-band monitoring of the hard disks be realized.

It can be seen that in the current server monitoring architecture, the service data of the device cannot be exposed externally for confidentiality reasons. That is, operation and maintenance personnel do not have permission to access in-band data to acquire the hard disk log data readable by the central processing unit. Likewise, the baseboard management controller configured for out-of-band monitoring cannot directly access the hard disk data, which limits the out-of-band monitoring capability. As a result, the out-of-band monitoring entity cannot obtain the operational status of the hard disks in a timely and accurate manner, threatening the reliability of hard disk storage.

Since there is no data path between the baseboard management controller and the hard disk without passing through an inter-integrated circuit bus interface, out-of-band monitoring of the hard disk can only be performed via a hard disk expansion card that supports receiving pass-through commands through the inter-integrated circuit bus interface, or via a peripheral component interconnect express that provides an inter-integrated circuit bus interface. For a hard disk that does not meet these conditions, such as those under an advanced host controller interface controller, out-of-band monitoring cannot be achieved.

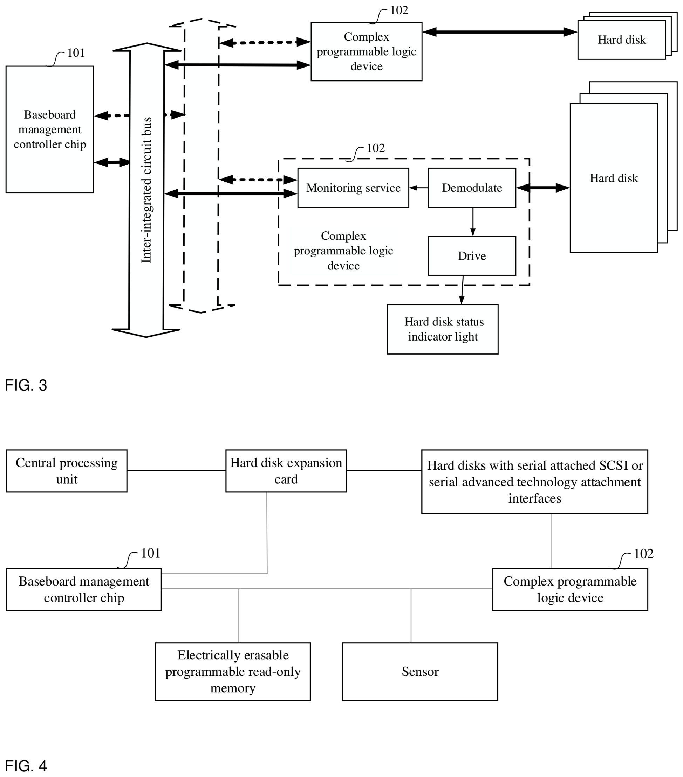

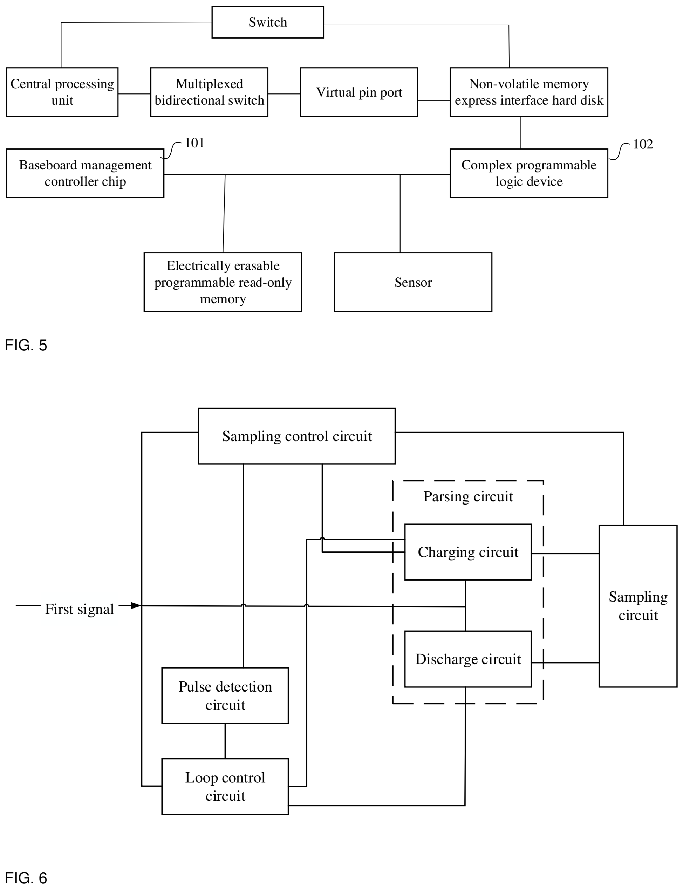

FIG. 3 is a schematic structural diagram of a first type of system for monitoring a hard disk according to an embodiment of the present application. FIG. 4 is a schematic structural diagram of a second type of system for monitoring a hard disk according to an embodiment of the present application. FIG. 5 is a schematic structural diagram of a third type of system for monitoring a hard disk according to an embodiment of the present application.

To this end, it is necessary to develop an out-of-band hard disk monitoring solution capable of supporting a wider range of hard disk connection methods. As shown in FIG. 3, the embodiments of the present application provide a system for monitoring a hard disk, which includes a baseboard management controller and a hard disk.

A pin of the baseboard management controller is connected to a hard disk status pin of the hard disk.

The hard disk is configured to modulate hard disk log data and a hard disk status signal that corresponds to the hard disk status pin to obtain a first signal, and is configured to output the first signal via the hard disk status pin.

The baseboard management controller is configured to demodulate the first signal to obtain the hard disk log data and monitor the hard disk according to the hard disk log data.

It is to be noted that, in the embodiments of the present application, the baseboard management controller may include the baseboard management controller chip 101, or may be a system including the baseboard management controller chip 101 and a complex programmable logic device 102. The complex programmable logic device 102 may be provided on the hard disk backplane or on the server motherboard.

In some optional embodiments of the present application, the complex programmable logic device 102 in the baseboard management controller is connected to the hard disk status pin of the hard disk. In this case, the input/output (I/O) pin of the complex programmable logic device 102 may be connected to the hard disk status pin of the hard disk, and the complex programmable logic device 102 is also connected to the baseboard management controller chip 101 via an inter-integrated circuit bus.

In some optional embodiments of the present application, the baseboard management controller chip 101 in the baseboard management controller is connected to the hard disk status pin of the hard disk. In this case, the general-purpose input/output (GPIO) pins of the baseboard management controller chip 101 may be connected to the hard disk status pin of the hard disk, and the baseboard management controller chip 101 may also be connected to other components via an inter-integrated circuit bus.

The pin of the hard disk are mainly divided into three types: a data pin, power pin, and a hard disk status pin. The data pin of the hard disk are connected to the in-band system, and the power pin of the hard disk are configured to connect to the power signal and ground signal. Therefore, the baseboard management controller can directly access only the hard disk status pin of the hard disk.

The hard disk status pin of the hard disk mainly include hard disk status indication pin, hard disk manufacturing and debugging pin, and hard disk idle pin.

The hard disk status indication pin include a hard disk presence status indication pin, a hard disk read/write status indication pin, and the like. The hard disk status indication pin is a pin configured for the hard disk to output hard disk status indication signal. For example, the hard disk presence status indication pin is configured to output hard disk presence status signal for the hard disk, and the hard disk read/write status indication pin is configured to output hard disk read/write status signal for the hard disk. When the hard disk is connected to the hard disk backplane, the hard disk status indication pin mainly have two connection methods. One method is to connect to the baseboard management controller to inform the baseboard management controller of the corresponding hard disk status data. The other method is to connect to the control circuit on the hard disk backplane to control the status of the corresponding controlled elements, thereby allowing the user to be aware of the corresponding hard disk status. For example, a hard disk status indicator light is provided on the hard disk backplane to indicate the operational status of the hard disk. For example, when the hard disk is in a read/write state, the hard disk read/write status indication pin can be controlled to output a square wave signal to the amplifier drive circuit of the hard disk read/write status indicator light, causing the hard disk read/write status indicator light to turn on. When the hard disk is not in a read/write state (idle state), the hard disk read/write status indication pin is controlled to output a constant-level signal (e.g., a constant high-level signal) to turn off the hard disk read/write status indicator light, indicating that the hard disk is in an idle state. This allows the user to determine whether the hard disk is in a read/write state by observing the on/off status of the hard disk read/write status indicator light. The hard disk operates similarly on the basis of the status of the hard disk presence status indication pin. Alternatively, the hard disk may output two different constant-level signals (one high and one low) through these hard disk status indication pins to indicate different states. These signals can be input to the baseboard management controller to trigger corresponding recording, processing, or control operations.

The hard disk manufacturing and debugging pin is mainly pin (debug pins) located adjacent to the SAS or SATA interface of SAS or SATA hard disk. The pin is typically used during the manufacturing and debugging stage of the hard disk. In practical use of the hard disk, the manufacturing and debugging pins may be configured to output boot information during the hard disk initialization phase.

In a NVMe interface hard disk, in addition to the hard disk status indication pin above, a hard disk idle pin is further included. Currently, the NVMe interface hard disk mainly use three types of connectors: a M.2 connector, a U.2 connector, and a CEM connector. For the NVMe interface of the M.2 connector, different key types are configured to connect different types of devices. Key B and Key M can be configured to connect a solid state disk. When the NVMe interface of the M.2 specification is connected to a solid state disk of a SATA interface, the definition of the P10 pin is the same as the definition of the P11 pin of the SAS interface or the SATA interface, both being hard disk read/write status indication pins. When the NVMe interface of the M.2 specification is connected to an NVMe interface hard disk, the P10 pin is defined as an indicator light control pin. The NVMe interface of the U.2 connectors is fully compatible with the SAS interface and the SATA interface, and the P11 pin is also a hard disk read/write status indication pin. The P32 pin on side A of the NVMe interface of the CEM connectors is an idle pin (reserved pin), which is also a hard disk status pin other than the hard disk data pins. In addition, a plurality of idle pins are present for x8 (eight-lane) interfaces and above.

The hard disk status pin above is not a pin configured for the hard disk to output data, and there is no risk of leaking user data stored in the hard disk. Currently, after the hard disk is inserted into the hard disk backplane, the hard disk status pin is either directly connected to the baseboard management controller or have permission to be connected to the baseboard management controller.

In the system for monitoring a hard disk according to the embodiments of the present application, the hard disk status pin of the hard disk used may include at least one of a hard disk status indication pin, a hard disk manufacturing and debugging pin, or a hard disk idle pin.

In the embodiments of the present application, in a case where a hard disk status indication pin such as a hard disk presence status indication pin and a hard

read/write status indication pin are used, since these hard disk status pins are typically already connected to the general-purpose input/output (GPIO) pins of the baseboard management controller chip 101 in the baseboard management controller or the input/output (I/O) pins of the complex programmable logic device 102, this hardware architecture can be directly adopted without modifying the server's hardware architecture, thereby achieving simplicity and convenience.

Currently, a hard disk manufacturing and debugging pin on the devices are typically floating and generally include four pins. When the embodiments of the present application use the hard disk manufacturing and debugging pin as the hard disk status pin for outputting hard disk log data, the hard disk manufacturing and debugging pin can be connected to the GPIO pin of the baseboard management controller chip 101 or the I/O pins of the complex programmable logic device 102 via a connector with a corresponding number of pins.

Since a hard disk idle pin is usually present only in the interfaces of NVMe interface hard disk and high-speed signal cannot be left floating, the hard disk idle pin in NVMe interface is currently grounded through resistor-capacitor circuit on the hard disk backplane after the hard disk is connected to the hard disk backplane. In a case where the embodiments of the present application use the hard disk idle pin as the hard disk status pin for outputting hard disk log data, the connection of the hard disk idle pin to the hard disk backplane is modified to connect to the GPIO pin of the baseboard management controller chip 101 or the I/O pins of the complex programmable logic device 102.

In some optional embodiments of the present application, for a hard disk with a serial attached SCSI (SAS) interface or a serial advanced technology attachment (SATA) interface, as shown in FIG. 4, the SAS interface hard disk or the SATA interface hard disk may be connected to a hard disk expansion card or directly to the hard disk backplane. In the in-band system, the central processing unit interacts with the hard disk by accessing a hard disk expansion card via a peripheral component interconnect express or directly accessing the data pins of hard disks with the SAS interface or the SATA interface. In the out-of-band system, In a case where the hard disk expansion card has an inter-integrated circuit bus connected to the baseboard management controller chip 101, the baseboard management controller chip 101 can access the hard disk expansion card through the inter-integrated circuit bus and forward commands or hard disk log data to the hard disks via the hard disk expansion card. In addition, in the baseboard management controller, the baseboard management controller chip 101 can also be connected to the complex programmable logic device 102 via the inter-integrated circuit bus, and then connected to the hard disk status pin of the hard disk via the complex programmable logic device 102. Alternatively, the baseboard management controller chip 101 can also be directly connected to the hard disk status pin of the hard disk.

In addition, the baseboard management controller chip 101 can also be connected to electrically erasable programmable read-only memory (EEPROM) and sensors via the inter-integrated circuit bus. The electrically erasable programmable read-only memory is configured to store the firmware or register values of server components. The sensors are provided on the server backplane or server motherboard and are configured to collect physical state data of the server components, such as temperature, airflow, and the like.

When the baseboard management controller chip 101 is connected to a plurality of components via a single inter-integrated circuit bus, the baseboard management controller chip 101 can access the corresponding components via the component addresses. For the same component, access can also be achieved by addressing different registers of the component. For example, the baseboard management controller chip 101 can control the complex programmable logic device 102 to update the firmware by accessing the firmware update address of the complex programmable logic device 102.

In some optional embodiments of the present application, for a non-volatile memory express (NVMe) interface hard disk, as shown in FIG. 5, the NVMe interface hard disk may also be connected to a hard disk expansion card or directly to the hard disk backplane. In the in-band system, the central processing unit interacts with and transmits data (such as transmitting commands, acquiring hard disk data, etc.) to NVMe interface hard disks through a switch using the peripheral component interconnect express protocol. The central processing unit can be connected to a plurality of hard disk backplanes via a multiplexed bidirectional switch (which may use PCA9546) using the virtual pin port (VPP) of NVMe. The hard disk backplanes use general-purpose input/output (GPIO) to access or control the hard disk status information of the NVMe interface hard disks, such as controlling the hard disk locator and a fault indicator light. The connection method between the baseboard management controller and the NVMe interface hard disk is similar to that of the SAS interface hard disk or the SATA interface hard disk. Unlike the SAS interface hard disk or the SATA interface hard disk, the baseboard management controller chip 101 can be connected to the inter-integrated circuit bus interface of the NVMe interface hard disk. When a single inter-integrated circuit bus of the baseboard management controller chip 101 connects to a plurality of NVMe interface hard disks, a multiplexed bidirectional switch can be configured to select the NVMe interface hard disks in communication with the baseboard management controller chip 101, enabling the baseboard management controller chip 101 to interact with the NVMe interface hard disks via the inter-integrated circuit bus.

On the basis of any one of the embodiments shown in FIGS. 3, 4, and 5, in some optional embodiments of the present application, seven types of signals are designed between the baseboard management controller and the hard disks, including: hard disk reset signal, hard disk presence signal, hard disk type signal, hard disk read/write status signal, hard disk fault indicator light control signal, hard disk read/write status indicator light control signal, and hard disk presence status indicator light control signal.

The hard disk reset signal (RST_N) is a signal sent from the baseboard management controller to the hard disk to reset the hard disk register. When a hard disk fault is detected, the baseboard management controller can send the hard disk reset signal to the hard disk to cause the hard disk to reset.

The hard disk presence signal (PRSNT_N) indicates whether a hard disk is connected to a hard disk slot. It can be designed as an active-low signal, wherein a low level indicates that the hard disk slot is not connected to the hard disk, and a high level indicates that the hard disk slot is connected to the hard disk.

The hard disk type signal (IFDET_N) indicates the type of hard disk connected to the hard disk slot. It can be designed as an active-low signal, wherein a low level indicates that an NVMe interface hard disk is connected, and a high level indicates that a SAS or SATA interface hard disk is connected.

The hard disk read/write status signal (REY_N) is a signal sent from the hard disk to the baseboard management controller, and is configured to indicate whether the hard disk is in a read/write status (active state) or a non-read/write status (idle state).

The hard disk fault indicator light control signal (LED_ERR) is a signal configured to illuminate the hard disk fault indicator light when a hard disk fault occurs. After detecting a hard disk fault, the baseboard management controller can activate the hard disk fault indicator light via this signal.

The hard disk read/write status indicator light control signal (LED_ACT) is a signal configured to control the hard disk read/write status indicator light. A square wave signal output from the hard disk status pin of the hard disk may serve as the hard disk read/write status indicator light control signal to turn on the hard disk read/write status indicator light, while a constant-level signal output from the hard disk status pin of the hard disk may turn off the hard disk read/write status indicator light. Alternatively, different hard disk status signals may be output from the hard disk status pin of the hard disk to inform the baseboard management controller of the hard disk read/write status signal, after which the baseboard management controller outputs the hard disk read/write status indicator light control signal to control the on/off state of the hard disk read/write status indicator light.

The hard disk presence status indicator light control signal (LED_LOC) is a signal configured to control the hard disk presence status indicator light. A square wave signal output from the hard disk status pin of the hard disk may serve as the hard disk read/write status indicator light control signal to turn on the hard disk presence status indicator light, while a constant-level signal output from the hard disk status pin of the hard disk may turn off the hard disk presence status indicator light. Alternatively, different hard disk status signals may be output from the hard disk status pin of the hard disk to inform the baseboard management controller of the hard disk presence status signal, after which the baseboard management controller outputs the hard disk presence status indicator light control signal to control the on/off state of the hard disk presence status indicator light.

In some optional embodiments of the present application, by deploying on the hard disk a packetization method for hard disk log data (writing the hard disk log data into a data packet) and a modulation method (converting digital signal into analog signal), and deploying on the baseboard management controller a demodulation method (converting analog signal into digital signal) and a parsing method (parsing the data packet to obtain the hard disk log data), the hard disk can directly output the hard disk log data to the baseboard management controller.

By utilizing the system for monitoring a hard disk according to the embodiments of the present application, the hard disk log data may include complete hard disk logs, i.e., a log generated by the hard disk controller periodically recording its own operating status data (such as temperature, number of bad sectors, accumulated error count, etc.). The hard disk log data may also be partial hard disk monitoring data, that is, the hard disk controller may output, via the hard disk status pin, part of predefined monitoring data or types of hard disk monitoring data designated by the baseboard management controller.

It can be understood that, according to the type of hard disk status pin selected, the manner in which the hard disk status pin outputs the hard disk status signal, and the modulation method used when the hard disk status pin also outputs hard disk log data, the rate at which the hard disk outputs log data via the hard disk status pin may vary. To ensure the real-time nature of the hard disk log data, the type, amount, and frequency of the output hard disk log data can be determined according to the rate at which the affected hard disk outputs log data via the hard disk status pin, according to the implementation. For example, the hard disk may be configured to output complete hard disk log data at fixed intervals, and in a case where the hard disk monitoring data is abnormal, the abnormal data may be sent additionally outside the fixed sending interval.

In out-of-band monitoring, the baseboard management controller provides network services that allow operation and maintenance equipment to access the baseboard management controller of the monitored device to acquire hard disk log data, and provides a web page for displaying the monitoring interface. In the hard disk monitoring system according to the embodiments of the present application, after the baseboard management controller acquires the hard disk log data from the hard disk, it can read monitoring data items from the hard disk log data according to a pre-deployed monitoring list. Each monitoring data item is monitored according to its value and the corresponding allowable range in the monitoring list. Monitoring data items may include temperature, number of bad sectors, accumulated error count, and the like. In a case where a monitoring data item exceeds its allowable range, the baseboard management controller executes the operation and maintenance commands recorded in the monitoring list, such as generating a fault log, sending an alarm to the system administrator, controlling the fan to cool the hard disk, or the like.

The baseboard management controller may also work with sensors provided on the hard disk backplane to externally collect the status information of the hard disk, thereby enabling a comprehensive analysis of the hard disk's operational status in combination with the hard disk log data output by the hard disk. For example, when the baseboard management controller detects an abnormal hard disk temperature via an external temperature sensor, it can verify whether the hard disk's temperature self-check function is normal by referring to the corresponding temperature monitoring item in the hard disk log data. It can also diagnose the cause of the abnormal temperature by examining other monitoring data items in the log data at the same time.

After analyzing the hard disk log data, the baseboard management controller can be configured to display the hard disk monitoring results as charts on the web page of the baseboard management controller, allowing operation and maintenance personnel to intuitively view the hard disk monitoring results by logging into the web page of the baseboard management controller.

As an optional embodiment, the embodiments of the present application illustrate a transmission method for hard disk log data.

In some optional embodiments of the present application, modulating, by the hard disk, hard disk log data and a hard disk status signal that corresponds to a hard disk status pin to obtain a first signal may include:

    generating, by the hard disk, a hard disk data packet from the hard disk log data, the hard disk data packet including a data bit and a check bit; and

    converting, by the hard disk, the hard disk data packet from digital signal to analog signal to obtain modulated hard disk log data, and then modulating the modulated hard disk log data and the hard disk status signal to obtain the first signal.

Accordingly, demodulating, by the baseboard management controller, the first signal to obtain the hard disk log data includes:

    identifying, by the baseboard management controller, the modulated hard disk log data from the first signal and converting the modulated hard disk log data from analog signal to digital signal to obtain the hard disk data packet; and

verifying, by the baseboard management controller, the hard disk data packet using the check bit in the hard disk data packet, and upon the hard disk data packet pass verification, reading the data bit of the hard disk data packet and parsing the data bit into hard disk log data by invoking the hard disk log parsing configuration information corresponding to the hard disk.

Verifying, by the baseboard management controller, the hard disk data packets using the check bits in the hard disk data packets may include:

reading, by the baseboard management controller, the data bit of the hard disk data packet to calculate first check information;

reading, by the baseboard management controller, the check bit of the hard disk data packet to obtain second check information;

when the first check information and the second check information are consistent, determining, by the baseboard management controller, that the hard disk data packet pass verification; and

when the first check information and the second check information are inconsistent, determining, by the baseboard management controller, that the hard disk data packet fail verification.

When the baseboard management controller determines that the hard disk data packet fail verification, the data packet may be discarded, and the discard event may be recorded in a local log.

To avoid information loss, the hard disk log data is often split into a plurality of parts, that is, a single set of hard disk log data is divided into a plurality of hard disk data packets for transmission. To distinguish between different data packets sent by the same hard disk, each data packet may carry a sequence number within the hard disk log data or indicate the type of hard disk monitoring data the data packet transmits.

In some optional embodiments of the present application, each hard disk data packet may include nine bits, wherein the first bit is a start flag, the second bit is a data packet identifier, bits three to six are data bits, and bits seven to nine are check bits. The data packet identifier may indicate the type of hard disk monitoring data carried by the hard disk data packet, or the sequence number of the hard disk data packet within a single set of hard disk log data. The data bits and check bits may each be hexadecimal digits.

The steps for generating the check bits may include:

padding each data bit to zero according to the unit of the data bit, and then calculating values A and B using the following formulas:

$$A = A + DC;$$

$$B = B + A;$$

$$A = A + N3;$$

$$B = B + A;$$

$$A = A + N2;$$

$$B = B + A;$$

$$A = A + N1;$$

$$B = B + A;$$

$$A = A + N0;$$

$$B = B + A;$$

and

calculating the check information by using Check Information = (B << 4) + A, wherein "<<4" denotes a left shift by four bits. As a result, a 12-bit check information value (checksum) is obtained.

The first check information and the second check information can be obtained by the method above.

The way in which the baseboard management controller parses the hard disk data packet to obtain the hard disk log data corresponds to the way in which the hard disk generates the hard disk data packet from the hard disk log data.

For example, when the data carried by a hard disk data packet is a portion of the hard disk log data obtained by evenly splitting it, the baseboard management controller invokes the hard disk log parsing configuration information corresponding to the hard disk to parse the data bits and obtain the hard disk log data. This may include: invoking, by the baseboard management controller, a data-bit-to-text conversion protocol to parse the data bit into hard disk log text, thereby obtaining the hard disk log data.

When the data carried by a hard disk data packet corresponds to a designated type of hard disk monitoring data, the baseboard management controller invokes the hard disk log parsing configuration information corresponding to the hard disk to parse the data bits and obtain the hard disk log data. This may include: after identifying the hard disk monitoring data type, invoking, by the baseboard management controller, the data conversion table corresponding to the hard disk monitoring data type to obtain the value of the hard disk monitoring data of the hard disk monitoring data type.

As an optional embodiment, the embodiments of the present application illustrate a modulation method for hard disk log data.

As described in the embodiments above, when the hard disk sends hard disk log data to the baseboard management controller via the hard disk status pin, the hard disk log data needs to be modulated and demodulated.

Depending on the numeral system used by the hard disk data packets, different digits may correspond to different level widths, or different digits may correspond to different pulse amplitudes.

In a case where the numeral system used is hexadecimal, sixteen different level widths may be set, corresponding to the sixteen digits in hexadecimal: 0, 1, 2, 3, 4, 5, 6, 7, 8, 9, A, B, C, D, E, and F. For example, In a case where a hard disk status pin controls a hard disk status indicator light by outputting a 50 milliseconds pulse-width square wave signal to turn on the hard disk status indicator light, level widths of 42 milliseconds to 49 milliseconds and 51 milliseconds to 58 milliseconds may be assigned, with each 1 millisecond increment corresponding to a hexadecimal digit. That is, sixteen level widths correspond to the sixteen hexadecimal digits. To distinguish from the original hard disk status signal, a 50-milliseconds level width may be designated as null for hard disk log data. Level widths less than or equal to 41 milliseconds or greater than or equal to 59 milliseconds are considered erroneous signals, in which case the corresponding hard disk data packets are discarded. The pulse width recognition error may be set to 0.25 milliseconds, for example, In a case where a pulse width of 42.25 milliseconds is measured, it is regarded as 42 milliseconds.

Similarly, pulse amplitude modulation may be applied to the hard disk log data.

In some optional embodiments of the present application, the first signal may be a signal obtained by the hard disk performing modulation, after the data has been output at a corresponding level width, according to the signal with the level width corresponding to the hard disk log data and the hard disk status signal. The signals with the level width corresponding to the hard disk log data can be a signal corresponding to either the high-level width or the low-level width, and the level width corresponding to the hard disk log data differs from the level width of the hard disk status signal.

Demodulating, by the baseboard management controller, the first signal to obtain the hard disk log data may include: measuring, by the baseboard management controller, the level width of the first signal to obtain digital data corresponding to the first signal, and parsing the digital data corresponding to the first signal into hard disk log data.

In some optional embodiments of the present application, the first signal may carry the modulated hard disk log data and the modulated hard disk status signal simultaneously. That is, the hard disk modulates the hard disk log data and the hard disk status signal corresponding to the hard disk status pin to obtain the first signal. This process may include: converting, by the hard disk, the hard disk log data into a signal with a level width corresponding to the hard disk log data, and then modulating the signal corresponding to the hard disk log data with the hard disk status signal to obtain the first signal. In the embodiments of the present application, for convenience, the method of modulating the hard disk log data to obtain the first signal in this manner is referred to as the simultaneous carrying manner.

By outputting the first signal via the hard disk status pin using the simultaneous carrying manner for the hard disk log data and the hard disk status data, not only can the impact on the originally continuously output hard disk status signal be minimized, but the output rate of the hard disk log data can also be enhanced.

In some optional embodiments of the present application, the first signal may also carry the modulated hard disk log data and the modulated hard disk status signal in a time-division manner. That is, the hard disk modulates the hard disk log data and the hard disk status signal that corresponds to the hard disk status pin to obtain the first signal, which may further include: the first signal is a signal obtained by the hard disk converting the hard disk log data into a signal with a level width corresponding to the hard disk log data, and then inserting the signal corresponding to the hard disk log data during the invalid signal time period when the hard disk status pin does not output a hard disk status signal. For convenience, the method of modulating the hard disk log data to obtain the first signal in this manner is referred to as the time-division carrying manner.

Outputting the first signal via the hard disk status pin using the time-division carrying manner to output the hard disk log data and the status data can be applied to a hard disk status pin that do not originally output a continuous hard disk status signal, or to the hard disk status pin where the hard disk status signal is not required to be output continuously. For example, In a case where the hard disk presence status indication pin is used as the hard disk status pin to output hard disk log data, the hard disk can be configured to output a hard disk status signal indicating the presence of the hard disk at periodic intervals via the hard disk status pin. The baseboard management controller can determine whether the hard disk is present or not according to the most recently received hard disk status signal. During the periods when the hard disk does not need to output a hard disk status signal via the hard disk status pin, the hard disk log data can be directly modulated into the first signal without mixing with the hard disk status signal. In this case, demodulating, by the baseboard management controller, the first signal to obtain the hard disk log data includes:

after demodulating, by the baseboard management controller, the hard disk status data from the first signal according to the signal type of the hard disk status signal, demodulating, by the baseboard management controller, the hard disk log data from a signal period of the first signal that do not conform to the signal type of the hard disk status signal; or

measuring, by the baseboard management controller, the level width of the first signal to obtain digital data corresponding to the first signal, parsing the digital data into the hard disk log data, and demodulating the hard disk status data from a signal period with the level width not corresponding to the digital data.

It can be understood that, whether using the simultaneous carrying manner or the time-division carrying manner, the hard disk controlling the hard disk status pin to output hard disk log data shall not affect the original functionality of the hard disk status pin. On the basis of this principle, the modulation and demodulation method for hard disk log data in the embodiments of the present application are described.

In the embodiments of the present application, the baseboard management controller may be further configured to demodulate, according to signal types of the hard disk status data corresponding to the hard disk status signal, the first signal to obtain the hard disk status data. That is, while the baseboard management controller recognizes the hard disk log data, it also recognizes the hard disk status data to assist in expressing the original function of the hard disk status pin.

As described in the embodiments above of the present application, in a case where the selected hard disk status pin is the hard disk status indicator light control pin, some of these hard disk status indicator light control pins turn on the corresponding hard disk status indicator light by outputting a square wave signal. In some optional embodiments of the present application, the level width of the first signal corresponds to the data bit in the hard disk log data, and the high-low-level transition in the first signal correspond to the hard disk status signal.

In some optional embodiments of the present application, to modulate the hard disk log data onto the original square wave signal of the hard disk status signal, in a case where the hard disk status signal is a square wave, the first signal is a signal obtained by the hard disk converting the hard disk log data into a signal with a level width corresponding to the hard disk log data, and then replacing the square wave signal with the signal with the level width corresponding to the hard disk log data, wherein the level width corresponding to the hard disk log data signal differs from a level width of the square wave signal. That is, by replacing the original square wave signal of the hard disk status signal with a signal with a level width corresponding to the hard disk log data derived from the hard disk log data, the first signal becomes one with high-low level transition, wherein the high-level width and/or low-level width correspond to the hard disk log data, thus achieving the integration of the hard disk log data with the hard disk status signal.

In some optional embodiments of the present application, when the hard disk status signal is a square wave, the first signal is a signal obtained by the hard disk converting the hard disk log data into a signal with a level width corresponding to the hard disk log data, and then adjusting, according to the level width corresponding to the hard disk log data, a level width of each signal cycle corresponding to the hard disk log data in the square wave signal. The level width corresponding to the hard disk log data differs from a level width of the square wave signal. The square wave signal is a rectangular wave with a 50% duty cycle. To distinguish the square wave signal, the level width of the square wave signal (e.g., 50 milliseconds) is set, with the level width corresponding to the hard disk log data being different from the level width of the square wave signal, thereby achieving the integration of the hard disk log data with the hard disk status signal.

In the case where the signal type of the hard disk status signal includes a square wave signal, demodulating, by the baseboard management controller according to a signal type of the hard disk status signal, the hard disk status data from a signal cycle configured to demodulate the hard disk log data may include: demodulating, by the baseboard management controller according to high-low level transition in the first signal, the hard disk status data.

To demodulate the original square wave signal corresponding to the hard disk control data from the first signal, demodulating, by the baseboard management controller according to high-low level transition in the first signal, the hard disk status data may include: after demodulating the hard disk log data, replacing, by the baseboard management controller, the first signal with a square wave signal to obtain the hard disk status signal; and then demodulating the hard disk status data according to the hard disk status signal. That is, the first signal can be replaced directly with a square wave signal, and the hard disk status data can be obtained by performing demodulation when the hard disk status signal is a square wave. For example, the hard disk read/write status indicator light pin outputs a square wave signal, indicating that the hard disk read/write status indicator light is lit, which corresponds to the hard disk control data. After identifying the corresponding hard disk control data, the first signal can be replaced with the square wave signal again to light up the hard disk read/write status indicator light.

In some optional embodiments of the present application, demodulating, by the baseboard management controller according to high-low-level transition in the first signal, the hard disk status data may further include: after demodulating the hard disk log data, adjusting, by the baseboard management controller according to a pulse width of the square wave signal, a pulse width of each cycle of the first signal to obtain the hard disk status signal; and demodulating, according to the hard disk status signal, the hard disk status data. That is, pulse width adjustment can be employed, wherein the pulse width corresponding to 50% of the period length of the square wave signal output from the pre-stored hard disk status pin is determined. After recognizing the hard disk log data, the pulse width of each cycle of the first signal can be adjusted back to the pulse width corresponding to the original square wave signal, thereby restoring the hard disk status signal and demodulating the corresponding hard disk status data when the hard disk status signal is a square wave. For example, the hard disk read/write status indicator light pin outputs a square wave signal, indicating that the hard disk status indicator light is lit, which corresponds to the hard disk control data.

For a hard disk status signal with a constant-level signal, such as when some hard disk status indicator light control pins output a constant-level signal to turn off the hard disk status indicator light. In some optional embodiments of the present application, the level width of the first signal corresponds to the data bit in the hard disk log data, and the constant-level signal having a large proportion in the first signal corresponds to the hard disk status signal.

In some optional embodiments of the present application, to modulate the hard disk log data signal onto the originally constant-level signal of the hard disk status signal, the hard disk status signal is a constant-level signal, and the first signal is a signal obtained by the hard disk converting the hard disk log data into a signal with a level width corresponding to the hard disk log data, and then replacing the constant-level signal of corresponding durations with the signal with the level width corresponding to the hard disk log data. In each signal cycle of the first signal, a proportion of an inverted-level signal of the constant-level signal is less than 50%. Since modulating the hard disk status signal, originally a constant-level signal, into the first signal significantly affects the expression of the original constant-level signal, modulation constraints need to be set for cases where the hard disk status signal is a constant-level signal. Under the assumption of not considering the use of constant-level signals to control the hard disk status indicator light and not accounting for other types of hard disk status signals, it is required that, after replacing the corresponding signal of the hard disk log data with the constant-level signal, a proportion of an inverted-level signal of the hard disk status signal in each signal cycle of the first signal is less than 50%.

In some optional embodiments of the present application, the hard disk status signal is a constant-level signal, and the first signal is a signal obtained by the hard disk converting the hard disk log data into a signal with a level width corresponding to the hard disk log data and generating, according to the signal with a level width corresponding to the hard disk log data, an inverted-level signal corresponding to the constant-level signal, and then inserting the inverted-level signal into the constant-level signal. In each signal cycle of the first signal, a proportion of an inverted-level signal of the constant-level signal is less than 50%. Similarly, in a case where the solution of modulating the hard disk log data into the constant-level signal of the hard disk status signal is used, it is necessary to ensure that the proportion of the inverted-level signal inserted during the modulation of the hard disk log data into the constant-level signal of the hard disk status signal is less than 50% in each signal cycle of the first signal.

To demodulate the original constant-level signal corresponding to the hard disk control data from the first signal, demodulating, by the baseboard management controller according to the signal type of the hard disk status signal, the hard disk status data from a signal cycle configured to demodulate the hard disk log data may include: demodulating, by the baseboard management controller according to the constant-level signal having a large proportion in the signal cycle of the first signal, the hard disk status data. That is, by setting modulation constraints when modulating the hard disk log data into the constant-level signal form of the hard disk status signal, the baseboard management controller can identify the constant-level signal according to the proportion of high and low levels in the first signal.

In some optional embodiments of the present application, demodulating, by the baseboard management controller according to the constant-level signal having a large proportion in the signal cycle of the first signal, the hard disk status data may include: after demodulating the hard disk log data, replacing, by the baseboard management controller, the first signal with the constant-level signal having a large proportion in the signal cycle of the first signal to obtain the hard disk status signal; and demodulating, according to the hard disk status signal, the hard disk status data. That is, a method of replacing the entire signal cycle can be used, wherein each signal cycle of the first signal is replaced with the constant-level signal corresponding to the level with a large proportion, and the corresponding hard disk status data is obtained by performing demodulation when the hard disk status signal is the constant-level signal. For example, when the hard disk presence status indicator light pin outputs a constant high-level signal, it indicates that the hard disk is present. When the constant high-level signal is not received from the hard disk presence status indicator light pin, a constant low-level signal is received, indicating that the hard disk is not present.

Alternatively, demodulating, by the baseboard management controller according to the constant-level signal having a large proportion in the signal cycle of the first signal, the hard disk status data may include: after demodulating the hard disk log data, replacing, by the baseboard management controller, an inverted-level signal corresponding to the constant-level signal having a large proportion in the signal cycle of the first signal with the constant-level signal having a large proportion in the signal cycle of the first signal to obtain the hard disk status signal; and demodulating, according to the hard disk status signal, the hard disk status data. That is, another method can be used where only the inverted-level signal is replaced, and the inverted-level signal modulated into each signal cycle of the first signal is replaced with the original constant-level signal form of the hard disk status signal. The corresponding hard disk status data is obtained by performing demodulation when the hard disk status signal is the constant-level signal.

In some optional embodiments of the present application, when the hard disk status signal includes only constant-level signal, different modulation constraints need to be set to distinguish between the constant high-level signal and the constant low-level signal. When the hard disk status signal includes only a single constant-level signal, or when the hard disk status signal includes a constant high-level signal and a constant low-level signal, the first signal is obtained by the hard disk, by modulating a signal with a level width corresponding to the hard disk log data and the hard disk status signal, after the hard disk has converted the hard disk log data into a signal with a level width corresponding to the hard disk log data. When the hard disk status signal is a constant high-level signal, a duty cycle of the signal with a level width corresponding to the hard disk log data in each cycle is greater than 50%. When the hard disk status signal is a constant low-level signal, the duty cycle of the signal with a level width corresponding to the hard disk log data in each cycle is less than 50%. That is, in a case where the duty cycle is used as the modulation constraint, the modulation of the hard disk log data into the hard disk status signal differentiates whether the hard disk status signal is a constant high-level signal or a constant low-level signal.

When the baseboard management controller is further configured to identify the hard disk status data from the first signal, then when the signal type of the hard disk status signal includes a single constant-level signal, or when the signal type of the hard disk status data includes a constant high-level signal and a constant low-level signal, demodulating, by the baseboard management controller according to a signal type of the hard disk status signal, the hard disk status data from a signal cycle configured to demodulate the hard disk log data may include: the first signal is obtained by the hard disk, by modulating a signal with a level width corresponding to the hard disk log data and the hard disk status signal, after the hard disk has converted the hard disk log data into a signal with a level width corresponding to the hard disk log data. When the hard disk status signal is a square wave signal, the maximum duty cycle in the signal cycle of the hard disk log data is less than the first duty cycle, and/or the minimum duty cycle in the signal cycle of the hard disk log data is greater than the second duty cycle.

When the constant-level signal is a constant high-level signal, the first duty cycle is the minimum duty cycle in the first signal corresponding to the constant-level signal; when the constant-level signal is a constant low-level signal, the second duty cycle is the maximum duty cycle in the first signal corresponding to the constant-level signal.

In some optional embodiments of the present application, when the hard disk status signal includes a square wave signal and a constant-level signal, the first signal is obtained by the hard disk, by modulating a signal with a level width corresponding to the hard disk log data and the hard disk status signal, after the hard disk has converted the hard disk log data into a signal with a level width corresponding to the hard disk log data. To distinguish between the square wave signal and the constant-level signal, when the hard disk status signal is a square wave signal, a maximum duty cycle of the first signal is less than the first duty cycle, and/or the minimum duty cycle of the first signal is greater than the second duty cycle. When the constant-level signal is a constant high-level signal, the first duty cycle is the minimum duty cycle in the first signal corresponding to the constant-level signal; when the constant-level signal is a constant low-level signal, the second duty cycle is the maximum duty cycle in the first signal corresponding to the constant-level signal. That is, to distinguish between square wave signal and constant-level signal in order to identify different types of hard disk status signals and perform demodulation to obtain different hard disk status data, the duty cycle range is set such that after modulating the hard disk log data into the square wave signal form of the hard disk status signal, the duty cycle falls within a completely different range from that of the constant-level signal form of the hard disk status signal. This enables the baseboard management controller to simultaneously recognize the hard disk log data and the hard disk status signals in the square wave signal form and the constant-level signal form.

When the baseboard management controller is further configured to identify the hard disk status data from the first signal, and when the signal type of the hard disk status signal includes a square wave signal and a constant-level signal, demodulating, by the baseboard management controller according to a signal type of the hard disk status signal, the hard disk status data from a signal cycle configured to demodulate the hard disk log data includes:

when the constant-level signal is a constant high-level signal, after demodulating the hard disk log data, restoring, by the baseboard management controller, a signal cycle of the first signal with a duty cycle less than a first duty cycle to a square wave signal, and restoring a signal cycle of the first signal with a duty cycle greater than the first duty cycle to a constant high-level signal, to obtain the hard disk status signal;

when the constant-level signal is a constant low-level signal, after demodulating the hard disk log data, restoring, by the baseboard management controller, a signal cycle of the first signal with a duty cycle greater than a second duty cycle to a square wave signal, and restoring a signal cycle of the first signal with a duty cycle less than the second duty cycle to a constant low-level signal, to obtain the hard disk status signal;

when the constant-level signal includes a constant high-level signal and a constant low-level signal, after demodulating the hard disk log data, restoring, by the baseboard management controller, a signal cycle of the first signal with a duty cycle less than the first duty cycle and greater than the second duty cycle to a square wave signal, restoring a signal cycle of the first signal with a duty cycle greater than the first duty cycle to a constant high-level signal, and restoring a signal cycle of the first signal with a duty cycle less than the second duty cycle to a constant low-level signal, to obtain the hard disk status signal; and

demodulating, according to the hard disk status signal, the hard disk status data.

That is, in a case where the baseboard management controller is pre-configured such that the hard disk status pin of the hard disk outputs two different types of hard disk status signals: a square wave signal and a constant-level signal, the baseboard management controller can identify whether the hard disk status signal is a square wave signal or a constant-level signal according to the duty cycle range in the first signal.

FIG. 6 is a circuit diagram of a demodulation module according to an embodiment of the present application.

As shown in FIG. 6, the embodiments of the present application provide a demodulation circuit, which includes a parsing circuit, a sampling circuit, and a sampling control circuit. The sampling circuit is connected to the parsing circuit and the sampling control circuit.

The parsing circuit is configured to receive the first signal output by the hard disk status pin and separately parse the high-level signal and the low-level signal in the first signal, obtaining the first level width corresponding to the high-level signal and the second level width corresponding to the low-level signal. The first signal includes the hard disk log data.

The sampling control circuit is configured to trigger the sampling circuit to sample the first level width and the second level width according to the first signal, so as to parse the hard disk log data in the first signal according to the sampled first level width and second level width, thereby enabling the monitoring of the hard disk.

In the optional embodiments, the parsing circuit is configured to receive the first signal output by the hard disk status pin and parse the first signal. In particular, the high-level signal and the low-level signal are parsed separately, obtaining the first level width corresponding to the high-level signal and the second level width corresponding to the low-level signal. The first signal includes hard disk log data, which is configured to facilitate monitoring. In an optional embodiment of the present application, the first signal may be a signal modulated by the hard disk according to the hard disk log data and the hard disk status data that corresponds to the hard disk status pin, meaning that the hard disk status pin can simultaneously transmit the hard disk status data and the hard disk log data.

The sampling control circuit controls when the sampling circuit samples the first level width and the second level width. In particular, the sampling control circuit triggers the sampling circuit according to the first signal to ensure sampling occurs at the appropriate time, thereby facilitating the parsing of hard disk log data according to the sampled first level width and second level width.

The sampling circuit receives the first level width and second level width output by the parsing circuit and samples the first level width and the second level width according to the timing triggered by the sampling control circuit. When the first level width and the second level width are analog signals, the specific implementation of the sampling circuit may be an analog-to-digital converter chip.

The demodulation circuit in the embodiments of the present application can be configured as a separate circuit module, the separate circuit module directly connected to the hard disk status pin of the hard disk, enabling direct acquisition and parsing of the hard disk log data.

In summary, the demodulation circuit in the embodiments of the present application achieves accurate parsing of the hard disk log data through the collaboration of the parsing circuit, sampling circuit, and sampling control circuit. Moreover, this demodulation circuit uses the first signal output from the hard disk status pin to acquire and parse the hard disk log data, thereby enabling hard disk monitoring. Additionally, the hardware circuit operates at a high processing speed, enhancing the efficiency of parsing the hard disk log data.

In some optional embodiments of the present application, the parsing circuit includes a charging circuit and a discharge circuit. The demodulation circuit further includes a loop control circuit. The charging circuit is connected to the sampling control circuit, the loop control circuit, and the discharge circuit.

The charging circuit is configured to perform charging according to a preset level signal in the first signal when conducting, resulting in an i-th pulse width.

The discharge circuit is configured to perform discharging according to the non-preset level signal in the first signal when conducting.

The sampling control circuit is configured to trigger the sampling circuit to sample the i-th pulse width after delaying for a first period of time, once the charging circuit has completed its charging.

The loop control circuit is configured to control the charging circuit to conduct according to the first signal. After the sampling control circuit triggers the sampling circuit to sample the i-th pulse width, the loop control circuit delays for a second period of time before controlling the discharge circuit to conduct.

When the preset level signal is a high-level signal, i is 1, and when the preset level signal is a low-level signal, i is 2.

As an optional embodiment, the parsing circuit may include a charging circuit and a discharge circuit. The charging circuit performs charging according to the preset level signal in the first signal, resulting in the i-th pulse width. The discharge circuit is configured to perform discharging according to the non-preset level signal in the first signal. The loop control circuit is configured to control the timing of the conduction of the charging circuit and the discharge circuit according to the first signal.

Optionally, when the preset level signal is a high-level signal, the charging circuit performs charging according to the high-level signal. After charging is completed, in a case where the signal switches to a low-level signal, the sampling circuit samples the first level width corresponding to the high-level signal obtained from the charging circuit after delaying for a first period of time, under the control of the sampling control circuit. Under the control of the loop control circuit, the discharge circuit is then activated after delaying for a second period of time, following the sampling of the first level width corresponding to the high-level signal obtained from the charging circuit, to achieve discharge. Optionally, when the preset level signal is a high-level signal, the loop control circuit may detect the rising edge of the first signal, indicating the detection of the high-level signal. In this case, it controls the charging circuit to conduct, performing charging according to the high-level signal to obtain the first level width corresponding to the high-level signal. When the falling edge of the first signal is detected, indicating the end of the high-level signal and the completion of the charging by the charging circuit, the sampling circuit is triggered to sample the first level width. After triggering the sampling circuit, the loop control circuit delays for a first period of time before controlling the discharge circuit to conduct, thereby achieving discharge.

Similarly, when the preset level signal is a low-level signal, the charging circuit performs charging according to the low-level signal. After charging is completed, in a case where the signal switches to a high-level signal, the sampling circuit samples the second level width corresponding to the low-level signal obtained from the charging circuit after delaying for a first period of time, under the control of the sampling control circuit. Under the control of the loop control circuit, the discharge circuit is activated after the sampling circuit samples the second level width, with a first period of time delay, to achieve discharge. Optionally, when the preset level signal is a low-level signal, the loop control circuit receives the first signal via the first inverter. When the rising edge of the first inverter output is detected, it indicates that a high-level signal has been detected from the first inverter output, which also means that the first signal is a low-level signal. In this case, the charging circuit is activated and performs charging using the high-level signal output by the first inverter, resulting in the second level width corresponding to the low-level signal of the first signal. When the falling edge of the first inverter output is detected, it indicates that a low-level signal has been detected from the first inverter output, which also means that the first signal is a high-level signal. The charging circuit has completed its charging, and in this case, the sampling circuit is triggered to sample the second level width. After triggering the sampling circuit, the loop control circuit delays for a second period of time before controlling the discharge circuit to conduct. The discharge circuit performs discharging using the low-level signal output by the first inverter.

After charging is completed, the purpose of the control circuit delaying the triggering of the sampling circuit for the first period of time is to ensure that the charging circuit's state is stable after charging of the charging circuit is finished, thereby guaranteeing the accuracy and stability of the data sampling. In particular, delaying the triggering of the sampling circuit allows sampling to take place when the signal has stabilized after the charging circuit completes its charging. This avoids sampling during signal fluctuations or instability, which could lead to data distortion, thereby ensuring the accurate capture of the first level width and the second level width and the correct parsing of the hard disk log data.

After triggering the sampling circuit to perform sampling, the purpose of delaying the conduction of the discharge circuit for a second period of time is to provide the sampling circuit with sufficient time to sample, ensuring that the parameters (such as voltage values) corresponding to the charging circuit remain stable during the sampling process. This ensures the stability of the charging circuit's output and prevents interruptions to the sampling process. After the second delay, the discharge circuit is then activated, ensuring that the sampling circuit can effectively sample the first level width or the second level width, thereby accurately parsing the hard disk log data in the first signal and enabling precise hard disk monitoring. This, in turn, enhances the performance and stability of the demodulation circuit.

In some optional embodiments of the present application, the first signal is modulated by the hard disk according to the hard disk log data and the hard disk status data that corresponds to the hard disk status pin. The hard disk status pin is the status indicator light pin, which continuously outputs a first control signal at the first level when the hard disk is in a preset state, and outputs a second control signal to make the status indicator light blink when the hard disk is in a non-prescribed state. The preset state can either be the active state or the idle state. When the hard disk is in the preset state, it inserts several pulse signals at the second level into the first control signal, segmenting the first control signal using the pulse signals to obtain the first signal. In the non-prescribed state, the hard disk encodes each data bit from the hard disk log data as a level signal with a preset width corresponding to each data bit, thereby obtaining the first signal.

The demodulation circuit further includes a detection circuit, which is connected to the loop control circuit.

The detection circuit is configured to detect whether a pulse signal exist in the first signal and, according to the detection result, adjust the first period of time and/or the second period of time.

In particular, when the hard disk status pin is the status indicator light pin, the status indicator light pin continuously outputs a first control signal at the first level when the hard disk is in a preset state, and outputs a second control signal to make the status indicator light blink when the hard disk is in a non-prescribed state. An optional method for modulating, by the hard disk, the hard disk status data and the hard disk log signal to obtain the first signal is as follows: When the hard disk is in a preset state, several pulse signals at the second level are inserted into the first control signal. These pulse signals segment the first control signal, resulting in a plurality of pulse width signals at the first level, thereby obtaining the first signal. The hard disk log data includes a plurality of data bits, each data bit in the plurality of data bits, corresponding to a pulse width signal at the first level. The parsing circuit identifies the pulse width of each first-level pulse width signal to determine the corresponding data bit, thus enabling the parsing of the hard disk log data.

On the basis of this modulated signal, the demodulation circuit is further provided with a detection circuit, which is connected to the sampling control circuit and the loop control circuit. The detection circuit is configured to detect whether a pulse signal exist in the first signal and, according to the detection result, adjust the delay times for the sampling control circuit and the loop control circuit. That is, the detection circuit is primarily configured to control the loop control circuit to activate the discharge circuit at different timings, according to the encoding method of the first signal output by the current hard disk status pin.

In particular, in the preset state, the width of the pulse signal is narrower, prompting the sampling control circuit to select a shorter delay time to trigger the sampling circuit for sampling. The loop control circuit also introduces a shorter delay before activating the discharge circuit. This enables a faster response to changes in the pulse signal and quicker processing of the pulse signal. As a result, the system's sensitivity and real-time performance for the pulse signal are enhanced, facilitating the accurate analysis and parsing of the information carried by the pulse signal. In the non-prescribed state, when no pulse signals are detected, the sampling control circuit selects a smaller time delay to trigger the sampling circuit for sampling, and the loop control circuit also delays for a smaller amount of time to activate the discharge circuit. This helps stabilize the system's operation and ensures the normal data processing flow. When no pulse signal is detected, the first signal is a level signal with a relatively larger width compared to the pulse signal. In this case, a longer delay is necessary to handle the normal data flow and prevent premature interruption or interference with the data processing. Therefore, by selecting a longer time delay, the system can maintain stable operation even in the absence of pulse signals, avoiding unnecessary interference or erroneous operations, ensuring smooth data processing, and enhancing the system's stability and reliability.

In addition, the preset state can also refer to the hard disk being in the in-place or not-in-place state. When a signal at the first level is continuously output in the preset state, the same method can be applied, with the implementation remaining unchanged. This is not elaborated further in the present application.

In summary, in the embodiments of the present application, the sampling control circuit and the loop control circuit manage the conduction of the charging circuit and the discharge circuit according to the signal from the detection circuit. Once the charging circuit has completed charging, the sampling control circuit selects a shorter delay to trigger the sampling circuit for sampling, while the loop control circuit selects an appropriate delay time to control the conduction of the discharge circuit. This method allows the demodulation circuit's operation to be controlled according to the information in the first signal, ensuring reliable monitoring of the hard disk status and accurate parsing of the hard disk log data.

An optional method for modulating, by the hard disk, the hard disk status data and the hard disk log signal to obtain the first signal is as follows: When the hard disk is in a non-prescribed state, each data bit in the hard disk log data is encoded into a level signal with a preset width corresponding to that data bit. That is, different level signals are used to represent distinct pieces of information in the hard disk log data, resulting in the first signal. In particular, there are two methods for encoding each data bit into a level signal with a preset width: The first method is to encode each data bit as a pulse width signal corresponding to a specific duty cycle. In this case, each data bit shares the same period, but the duty cycle of each data bit differs. The parsing circuit can identify the current data bit by determining the duty cycle of each period, thereby enabling the parsing of the hard disk log data. The second method is to encode each data bit as a level signal with a preset width, wherein the level signals of adjacent data bits are either opposite or identical. To create spacing between two adjacent data bits, an opposite-level signal is inserted between the adjacent data bits. For example, the first data bit may be encoded as a high-level signal with the first width, and the second data bit as a low-level signal with the second width, and so on. Alternatively, the first data bit could be encoded with the first width, the second data bit with the second width, and the high and low levels may alternate. An opposite-level signal is inserted between the two data bits to create spacing. The parsing circuit then identifies the corresponding data bits by recognizing the pulse width of each level, thus enabling the parsing of the hard disk log data and allowing for hard disk monitoring.

In some optional embodiments of the present application, the detection circuit is configured to control the sampling control circuit to operate in a first mode when a pulse signal is detected in the first signal, and is configured to operate in a second mode when no pulse signal is detected in the first signal.

The sampling control circuit is configured to, after the charging circuit completes charging, trigger the sampling circuit to sample the i-th pulse width after a delay of the first preset time when operating in the first mode, and is configured to trigger the sampling circuit to sample the i-th pulse width after a delay of the second preset time when operating in the second mode, with the first preset time being shorter than the second preset time.

The embodiments of the present application adjust the working mode of the sampling control circuit according to the detection result from the detection circuit, thereby enabling the adjustment of the first time. In particular, when a pulse signal is present, the sampling control circuit is set to operate in the first mode, and the sampling control circuit selects a shorter first preset time delay to trigger the sampling circuit. This is because the pulse signal has a smaller pulse width and therefore, needs to be sampled and processed quickly to ensure the timely acquisition of key information. The shorter delay (first preset time) ensures that sampling is triggered promptly after the pulse signal appears, minimizing any loss or delay of information. In the embodiments of the present application, when no pulse signal is present, the sampling control circuit is set to operate in the second mode, and the circuit selects a larger second preset time delay to trigger the sampling circuit. This is because the widths of the various levels in the first signal are larger than the pulse signal width. Therefore, a longer delay is chosen to reduce the system's resource demands, conserve energy, and minimize unnecessary data sampling. In addition, the larger delay allows sampling to occur when the signal is stable, avoiding resource waste and system burden caused by frequent sampling.

In summary, the embodiments of the present application select different delay strategies to trigger the sampling circuit according to the presence or absence of pulse signals and the requirements for the timeliness and accuracy of data sampling. This approach helps achieve a better balance between system resource utilization, real-time performance, and the effectiveness of data sampling.

In some optional embodiments of the present application, the detection circuit is configured to control the loop control circuit to operate in a third mode when a pulse signal is detected in the first signal, and is configured to operate in a fourth mode when no pulse signal is detected in the first signal.

The loop control circuit is configured to, after the sampling control circuit triggers the sampling circuit to sample the i-th pulse width, control the discharge circuit to conduct after a delay of the third preset time when operating in the third mode, and is configured to control the discharge circuit to conduct after a delay of the fourth preset time when operating in the fourth mode, wherein the third preset time is shorter than the fourth preset time.

The embodiments of the present application adjust the working mode of the loop control circuit according to the detection result from the detection circuit, thereby enabling the adjustment of the second time. In particular, when a pulse signal is present, the loop control circuit is controlled to operate in the third mode, selecting a shorter third preset time delay to activate the discharge circuit. This is because the pulse signal has a smaller pulse width and needs to be processed quickly to ensure efficient parsing of the hard disk log data. The shorter delay (third preset time) can ensure the discharge circuit turns on promptly after the pulse signal appears, thereby enhancing data processing efficiency. In the embodiments of the present application, when no pulse signal is present, the loop control circuit is controlled to operate in the fourth mode, selecting a longer fourth preset time delay to activate the discharge circuit. This is because the widths of the individual levels in the first signal are larger compared to the pulse signal's width. Therefore, a longer delay can be chosen to reduce the system's resource demand, conserve energy, and minimize unnecessary data sampling. In addition, using a longer delay can ensure that the sampling circuit samples the signal when it is stable, thus avoiding inaccurate sampling.

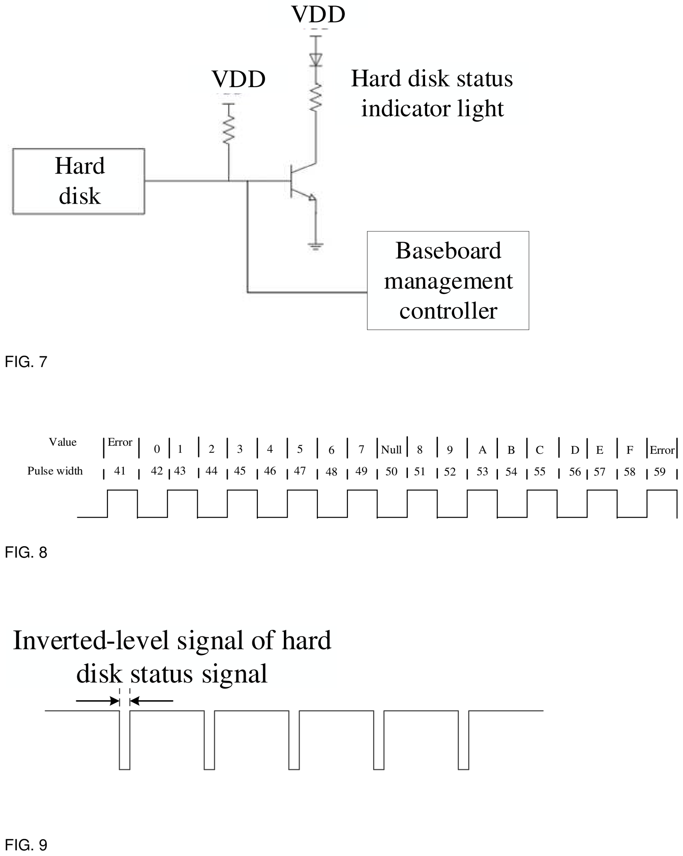

FIG. 7 is a circuit diagram of an amplifier drive circuit of a hard disk status indicator light according to an embodiment of the present application.

In the embodiments above, two control solutions are provided for cases where the hard disk status pin needs to control the state of the controlled element. One of the control solutions, as shown in FIG. 7, involves directly connecting the hard disk status pin to control the state of the controlled element, such as the hard disk status indicator light. To achieve the control function of the hard disk status pin over the controlled element, when the hard disk status pin is directly connected to the controlled element, the hard disk modulates the hard disk log data and the hard disk status signal to obtain the first signal. This process includes: The hard disk determines the deviation range of the first signal relative to the hard disk status signal, according to the control signal range corresponding to the working status signal

**EP 4 738 125 A1**

of the controlled element corresponding to the hard disk status pin, and modulates the hard disk log data and the hard disk status signal according to this deviation range to obtain the first signal. For example, in a case where the hard disk status indicator light control pin is used as the hard disk status pin to output the hard disk log data, and the hard disk status indicator light control pin is connected to an amplifier drive circuit, as shown in FIG. 7 to directly control the hard disk status indicator light, then the deviation range of the first signal relative to the hard disk status signal is set according to the duty cycle range at which the hard disk status indicator light is lit and blinking in a way that is not perceptible to the human eye.

In the optional embodiments of the present application, to address the problem of the limitation imposed by the original function of the hard disk status pin when modulating the first signal, as shown in FIG. 5, the hard disk status pin may not be directly connected to a controlled element corresponding to the hard disk status pin. Instead, the hard disk status pin is directly connected to the baseboard management controller. Furthermore, the hard disk monitoring system according to the embodiments of the present application can further include a status control circuit corresponding to the hard disk status pin. The controlled end of the status control circuit is connected to the baseboard management controller, while the output end of the status control circuit is connected to the driving end of the controlled element corresponding to the hard disk status pin.

The baseboard management controller is further configured to control, according to the hard disk status data, the status control circuit to drive the controlled element.

As shown in FIG. 7, the hard disk status pin is a hard disk status indicator light control pin, and the status control circuit is an amplifier drive circuit.

Controlling, by the baseboard management controller according to the hard disk status data, the status control circuit to drive the controlled element includes:
when the baseboard management controller demodulates the first signal to obtain the hard disk status data corresponding to a turn-on command, controlling the amplifier drive circuit to generate a square wave signal to illuminate a hard disk status indicator light corresponding to the hard disk status pin; and when the baseboard management controller demodulates the first signal to obtain the hard disk status data corresponding to a turn-off command, stopping controlling the amplifier drive circuit to generate the square wave signal, thereby extinguishing the hard disk status indicator light.

That is, after the baseboard management controller demodulates the first signal to obtain the hard disk status data, it regenerates the control signal for the hard disk status indicator light corresponding to the hard disk status pin. This method reduces the limitations of modulating the first signal, allowing the modulation process to focus solely on enabling the baseboard management controller to recognize the hard disk status data, without needing to consider the potential degradation of control effectiveness when the first signal directly controls the controlled element.

FIG. 8 is a schematic diagram of a modulation method for a square wave signal according to an embodiment of the present application. FIG. 9 is a schematic diagram of a modulation method for a constant high-level signal according to an embodiment of the present application.

As shown in FIG. 8, hexadecimal digital data from 0 to 7 can be modulated into a level width between 42 and 49, while hexadecimal digits from 8 to F are modulated into a level width between 51 and 58. A level width of 41 or 59 indicates an error, and a level width of 50 represents a null value. It can be seen that the allowed level widths corresponding to the digital data can fall within a specific target width range, which may include, but is not limited to, the ranges of 42 to 49 and 51 to 58. For the baseboard management controller, it may use, but is not limited to, the following methods to demodulate the first signal and obtain the hard disk log data:
measuring, by the baseboard management controller, level widths of the first signal that fall within a target width range to obtain digital data corresponding to the hard disk log data, and parsing the digital data into the hard disk log data, wherein the target width range is a range of level widths with digital data corresponding to the target level width.

Optionally, the baseboard management controller can, but is not limited to, use the following method to measure the level width of the first signal that fall within the target width range, obtain the digital data corresponding to the hard disk log data, and then parse the digital data into the hard disk log data: The baseboard management controller measures the level width of the current level in the first signal. The baseboard management controller detects whether the level width of the current level falls within the target width range. When the level width of the current level falls within the target width range, the baseboard management controller determines the level width of the current level as the digital data corresponding to the current level. The baseboard management controller looks up the data encoding corresponding to the digital data that matches the current level from the associated digital data and data encoding and obtains the hard disk log data.

Optionally, after detecting whether the level width of the current level falls within the target width range, when the level width of the current level does not fall within the target width range, the baseboard management controller may discard a level width of a target level.

As shown in FIG. 8, for a square wave signal, the high level and the low level can each carry digital data via their respective level widths. As shown in FIG. 9, for a constant-level signal, the level corresponding to the constant-level signal can carry digital data via its level width.

It can be seen that the baseboard management controller can also demodulate the first signal to obtain the hard disk log data by the following: measuring a level width of a level of a target type in the first signal to obtain digital data corresponding to the hard disk log data, and parsing the digital data into the hard disk log data, wherein the target type is a level type in the first signal that is permitted to carry the hard disk log data.

Optionally, different hard disk statuses can modulate digital data using different levels. For the demodulation process, the baseboard management controller can first determine the hard disk status, and then identify the type of a level that is allowed to carry digital data. This allows the controller to demodulate signals corresponding to the identified level type. For example, before measuring the level width of the level of the target type in the first signal to obtain digital data corresponding to the hard disk log data, and parsing the digital data into the hard disk log data, the baseboard management controller may determines hard disk status according to the a level in the first signal, and determine, according to the hard disk status, the target type.

Optionally, the baseboard management controller may, but is not limited to, determine the hard disk status according to the levels in the first signal as follows: detecting, by the baseboard management controller, a level width of an inverted-level signal in the first signal, wherein the hard disk status signal is a constant-level signal being configured to indicate that the hard disk is in an idle state, and the inverted-level signal is a level opposite in polarity to the constant-level signal; and determining, by the baseboard management controller according to the level width of the inverted-level signal, the hard disk status.

Optionally, the baseboard management controller may, but is not limited to, determine the target type according to the hard disk status as follows: when the hard disk status is in an idle state, determining, by the baseboard management controller, the target type as a level type having the same polarity as the constant-level signal.

Optionally, the baseboard management controller may, but is not limited to, determine the target type according to the hard disk status as follows: when the hard disk status is in an active state, determining, by the baseboard management controller, the target type as a high-level type and a low-level type.

On the basis of the modulation method above, the embodiments of the present application illustrate the modulation method for outputting hard disk log data via the hard disk status indicator light control pin.

The hard disk status indicator light control pin typically outputs a square wave signal to turn on the hard disk status indicator light and a constant-level signal to turn off the hard disk status indicator light.

When the hard disk status indicator light control pin outputs a square wave signal, the method described in the embodiments above of the present application, setting sixteen different level widths corresponding to the 16 hexadecimal digits, can be used to modulate the hard disk log data. This may be referred to the level width modulation method for hexadecimal digits described in the embodiments above of the present application. When the hard disk status indicator light control pin outputs a constant-level signal, pulse width modulation can be achieved by inserting an inverted level into the constant-level signal. For example, when the hard disk status indicator light control pin outputs a constant high-level signal, a short low-level pulse can be inserted to split the constant high-level signal into a signal with high- and low-level transitions. The high-level width corresponds to the hard disk log data. For example, using the method of modulating the level width with hexadecimal digits described above, the minimum level width corresponding to the hard disk log data is 42 milliseconds. In this case, when the hard disk status signal is a constant-level signal, the inserted inverted level can be 3 milliseconds, thus splitting the constant-level signal into a signal with level widths corresponding to the hard disk log data.

As described in the embodiments above of the present application, in a case where the direct control of the hard disk status indicator light by the hard disk status signal is not considered, the duty cycle ranges of the first signal corresponding to the square wave signal and the first signal corresponding to the constant-level signal can be set so that they do not overlap. This enables the baseboard management controller to distinguish whether the hard disk status signal is a square wave signal or a constant-level signal after measuring the pulse width of the first signal and identifying the hard disk log data. In a case where the hard disk status signal is required to directly control the controlled element, then, in addition to ensuring that the duty cycle ranges do not overlap, the duty cycle ranges for modulating the two types of hard disk status signals need to be adjusted and narrowed according to the operating conditions of the controlled element.

In the embodiments above, it is explained that the baseboard management controller shown in the embodiments of the present application can refer to either a baseboard management controller chip 101 or a system that includes the baseboard management controller chip 101 and a complex programmable logic device 102.

As shown in FIG. 5, the baseboard management controller includes a baseboard management controller chip 101 and a complex programmable logic device 102.

The baseboard management controller chip 101 is connected to the complex programmable logic device 102 via an inter-integrated circuit bus, and a data input/output pin of the complex programmable logic device 102 is connected to the hard disk status pin.

The complex programmable logic device 102 is configured to demodulate the first signal to obtain the hard disk log data.

The baseboard management controller chip 101 is configured to poll the inter-integrated circuit bus, and upon polling the complex programmable logic device 102, read the hard disk log data, and monitor the hard disk according to the hard disk log data.

The baseboard management controller chip 101 is typically connected to devices such as a sensor and a complex programmable logic device 102 via an inter-integrated circuit bus. As the master device on the inter-integrated circuit bus, the baseboard management controller chip 101 reads data from a plurality of slave devices by polling the inter-integrated circuit bus connected to its pins. In the hard disk monitoring system according to the embodiments of the present application, the data path between the baseboard management controller chip 101 and the complex programmable logic device 102, connected via the inter-integrated circuit bus, allows the complex programmable logic device 102 to receive and demodulate the first signal output from the hard disk status pin. The complex programmable logic device 102 demodulates the first signal to obtain the hard disk log data, which is then stored locally. The baseboard management controller chip 101 polls the complex programmable logic device 102 and retrieves the hard disk log data, thereby enabling hard disk monitoring according to the hard disk log data.

In the optional embodiments of the present application, the baseboard management controller includes a baseboard management controller chip 101 and a complex programmable logic device 102.

The baseboard management controller chip 101 is connected to the complex programmable logic device 102 via an inter-integrated circuit bus and an interrupt signal line, and a data input/output pin of the complex programmable logic device 102 is connected to the hard disk status pin.

The complex programmable logic device 102 is configured to demodulate the first signal to obtain the hard disk log data, and is configured to send an interrupt signal to the baseboard management controller chip 101 via the interrupt signal line.

The baseboard management controller chip 101 is configured to read, upon receiving the interrupt signal, the hard disk log data from the complex programmable logic device 102 via the inter-integrated circuit bus and monitor the hard disk according to the hard disk log data.

That is, in addition to the data path between the baseboard management controller chip 101 and the complex programmable logic device 102 via the inter-integrated circuit bus, an interrupt signal line and interrupt resources can be further provided. This allows the complex programmable logic device 102 to use the baseboard management controller chip 101 to retrieve the hard disk log data for performing hard disk monitoring.

In some optional embodiments of the present application, in a case where the baseboard management controller chip 101 of the baseboard management controller is connected to the hard disk status pin of the hard disk, the system for monitoring a hard disk according to the embodiments of the present application may further include a multi-position switch provided between the baseboard management controller chip 101 and the hard disk status pin of the hard disk. The multi-position switch has a plurality of selection terminals, each selection terminal of the plurality of selection terminals connected to a different hard disk, and a single connection terminal connected to the general-purpose input/output pin of the baseboard management controller chip 101. At any given time, the multi-position switch selects only one hard disk to be connected to the general-purpose input/output pin of the baseboard management controller chip 101.

Alternatively, in a case where the baseboard management controller chip 101 of the baseboard management controller is connected to the hard disk status pin of the hard disk, different hard disks can output the first signal to the baseboard management controller chip 101 at different time intervals via the same general-purpose input/output pin connected to the baseboard management controller chip 101.

As an optional embodiment, the embodiments of the present application illustrate a method for the baseboard management controller to store the hard disk log data.

In a case where the baseboard management controller only includes the baseboard management controller chip 101, that is, the pin of the baseboard management controller chip 101 are directly connected to the hard disk status pin of the hard disk to receive the hard disk log data, it is necessary to deploy a demodulation module within the baseboard management controller chip 101 and allocate a hard disk log storage area. For the hard disk log storage area, the producer is the demodulation module, and the consumer is the processor configured to read the hard disk log data in order to perform hard disk monitoring. As the hard disk status pin outputs hard disk log data, the hard disk log data is continuously written into the hard disk log storage area of the baseboard management controller chip 101, while the processor of the baseboard management controller chip 101 reads the hard disk log data from the hard disk log storage area.

In a case where the baseboard management controller is a system that includes the baseboard management controller chip 101 and the complex programmable logic device 102, the hard disk log storage area can be deployed in the complex programmable logic device 102, with partitioning similar to that in the baseboard management controller chip 101. Deploying the hard disk log storage area in the complex programmable logic device 102 requires pre-loading the partition configuration information for the hard disk log storage area into the firmware of the complex programmable logic device 102. After powering on the complex programmable logic device 102, the partition configuration information is read from the firmware by the complex programmable logic device 102, and the deployment of the local registers (which may further include on-chip random access memory) for the hard disk log storage area is carried out by the complex programmable logic device 102.

Since the baseboard management controller chip 101 or the complex programmable logic device 102 typically needs to connect to a plurality of hard disks, a corresponding storage area can be pre-allocated for each hard disk of the plurality of hard disks, with a corresponding flag bit storage area set for each storage area. When hard disk log data is written into the storage area, the baseboard management controller chip 101 or the complex programmable logic device 102 writes valid flag data into the flag bit storage area corresponding to the storage area. When the processor of the baseboard management controller chip 101 reads the hard disk log data from the hard disk log storage area on the baseboard management controller chip 101, or when the processor of the baseboard management controller chip 101 reads the hard disk log data from the hard disk log storage area on the complex programmable logic device 102, it first reads the data from the flag bit storage area and determines the storage areas containing pending hard disk log data according to the valid flag data.

As an optional embodiment, since hard disk log data may be lost or transmitted incorrectly during transmission, it is necessary to promptly notify the hard disk to retransmit the hard disk log data in order to enhance the real-time out-of-band monitoring of the hard disk. In a case where a plurality of hard disk status pins are selected to be connected to the baseboard management controller, a part of the hard disk status pins can be configured to output the first signal carrying hard disk log data, while the other part of the hard disk status pins can be configured to receive control commands sent by the baseboard management controller. The control command can include at least one of the following: a command to resend the hard disk log, a command to send the hard disk log in advance, or a command to send specified hard disk log data.

However, in practical applications, there may not be a plurality of hard disk status pins available for connection to the baseboard management controller. For example, there may be only one hard disk status pin connected to the baseboard management controller. In this case, a negotiation method needs to be adopted to allow the baseboard management controller to reverse-transmit the control command during the gap when the hard disk status pin outputs the first signal.

In the system for monitoring a hard disk according to the embodiments of the present application, the baseboard management controller may be further configured to send, when hard disk status data obtained by demodulating the first signal is non-control data or data obtained by demodulating the first signal does not include the hard disk status data, and when the current time falls within a negotiation time period agreed upon with the hard disk, a reverse transmission request to the hard disk status pin, and, upon receiving an allow signal sent by the hard disk, send a control command for the hard disk to the hard disk status pin. The hard disk may be configured to execute the control command.

Non-control data refers to the hard disk status data corresponding to a hard disk status signal that does not perform a controlling function on the controlled element. For example, when the hard disk status pin is the hard disk status indicator light control pin, when the output hard disk status signal is a square wave signal, it is configured to turn on the hard disk status indicator light, and when the output hard disk status signal is a constant-level signal, it causes the hard disk status indicator to turn off. In this case, the baseboard management controller is allowed to send a reverse transmission request to the hard disk status pin only when the hard disk status signal is a constant-level signal and the current time corresponds to the negotiation time period during which the hard disk is not expected to output hard disk log data. For example, a reverse transmission request flag could be sent with a duration of 30 milliseconds. After the hard disk identifies the reverse transmission request and determines that it is within the negotiation time period, it will send an allow signal to the baseboard management controller, permitting the reverse transmission. After the baseboard management controller receives the allow signal, it reverse-transmits the control command to the hard disk via the hard disk status pin, such as the command to resend the hard disk log, the command to send the hard disk log in advance, the command to send specified hard disk log data, or the like, as mentioned above. Upon executing the control command, the hard disk can promptly resend the missing hard disk log data, and the like.

In some optional embodiments of the present application, the baseboard management controller may be further configured to send pin configuration information to the hard disk. The hard disk may be further configured to determine, according to the pin configuration information, the hard disk status pin used for outputting hard disk log data and the modulation configuration information of the first signal.

In practical applications, such as when the hard disk is connected to a hard disk expansion card or connected to the central processing unit via a peripheral component interconnect express, the baseboard management controller can send pin configuration information to the hard disk by accessing the hard disk expansion card or peripheral component interconnect express via the inter-integrated circuit bus. In addition, the pin configuration information can be pre-written to the hard disk controller using an offline method. The pin configuration information includes the identification of the hard disk status pin and the modulation configuration information of the first signal. The identification of the hard disk status pin is configured to indicate which hard disk status pin is configured to output the hard disk log data, while the modulation configuration information of the first signal is configured to specify how the hard disk log data is converted into level data and modulated with the hard disk status signal to form the first signal. To reduce the amount of reverse transmission data, the modulation configuration information of the first signal may be just an identification, allowing the hard disk to look up the corresponding modulation configuration information in a table according to this identification.

Since the deployment method above cannot achieve online deployment for all types of connected hard disks, in the embodiments of the present application, the baseboard management controller sending pin configuration information to the hard disk may include the following:

When hard disk status data obtained by demodulating the first signal is non-control data or when the demodulated first signal does not include the hard disk status data, and when the current time falls within a negotiation time period agreed upon with the hard disk, the baseboard management controller sends a reverse transmission request to the hard disk status pin. Upon receiving the allow signal sent by the hard disk, the baseboard management controller sends the pin configuration information to the hard disk via the hard disk status pin.

Similarly to how the baseboard management controller sends control commands to the hard disk via the hard disk status pin described above, the baseboard management controller can also use a negotiated method to send pin configuration information to the hard disk, enabling online configuration of the hard disk status pin configured to output hard disk log data. This online configuration can be performed when the hard disk is powered on or during idle periods of the hard disk's operation.

During the process of modulating digital data, when sending the signal, it is necessary to ensure that a sent level width matches a modulated level width, or the error between the sent level width and the modulated level width falls within an acceptable range, so that the baseboard management controller can perform demodulation to obtain correct digital data. However, the sending of the signal and the inversion of the level also require program execution, which may introduce some delays or errors. This could result in a mismatch between the width of the current level after inversion and the actual width required for transmitting the digital data, potentially leading to issues such as garbled data or errors during demodulation.

To solve the problem above, the embodiments of the present application further provide a method for modulating data by a hard disk. In the embodiments of the present application, the hard disk is further configured to: during sending of the hard disk status signal via the hard disk status pin, when the hard disk status signal is modulated within a current level of the hard disk status signal, detect timeliness of obtaining the first signal by inverting the level within the current level, wherein the timeliness is configured to indicate whether inverting the level within the current level is allowed to obtain the first signal; and

process the current level according to the timeliness.

The hard disk sends the hard disk status signal via the hard disk status pin. In each level or in each level that requires modulation, the timeliness of inverting the level to obtain the first signal is detected before the level inversion. This timeliness refers to whether there is enough time to invert the level so that the current level carries the corresponding digital data. In a case where there is enough time to invert the level, the current level will carry the corresponding digital data. In a case where there is not enough time to invert the level, the current level will be processed in such a way that no digital data is demodulated, and the corresponding digital data will be carried in the next level.

Timeliness is configured to indicate whether inverting the level in the current level allows the first signal to be obtained. That is, timeliness is any parameter that can represent whether there is enough time for the current level to carry the corresponding digital data. For example, it could be a time parameter that represents the meaning described above, it could be a performance parameter that conveys the meaning described above, or the like.

Optionally, the hard disk is further configured to: detect a difference between a level width of the first signal and a level width already output of the current level; when the difference is greater than a difference threshold, determine that the timeliness is configured to indicate that inverting the level within the current level is allowed to obtain the first signal, the difference threshold being determined according to a minimum duration required for level inversion; and when the difference is less than or equal to the difference threshold, determine that the timeliness is configured to indicate that inverting the level within the current level is not allowed to obtain the first signal.

The hard disk can, but is not limited to, determining whether there is enough time to invert the level in the current level by detecting the difference between the level width of the first signal and the level width already output for the current level. In a case where the difference is greater than the difference threshold, it can be determined that there is enough time to invert the level in the current level. The difference threshold is determined according to the minimum duration required for level inversion. In a case where the difference is less than or equal to the difference threshold, it can be determined that there is not enough time to invert the level in the current level.

Optionally, the hard disk is further configured to: when the timeliness is configured to indicate that inverting the level within the current level is allowed to obtain the first signal, send the first signal within the current level; and when the timeliness is configured to indicate that inverting the level within the current level is not allowed to obtain the first signal, send the first signal after the current level with a target level width, wherein the target level width is a level width that prevents the baseboard management controller from demodulating the hard disk log data in the first signal.

The target level width is the width of the level that does not allow the baseboard management controller to demodulate hard disk log data. For example, it could be a value such as 50, as shown in FIG. 8, or any value greater than 58.

Optionally, the target level width is greater than a maximum value of a target width range, the target width range being a range of level widths with digital data corresponding to the target level width.

The target width range is a width range obtained from level widths corresponding to the digital data, such as the width range from 42 to 49, and from 51 to 58, as shown in FIG. 8. The target level width can, but is not limited to, be set to any value greater than the maximum value of the target width range, such as 59, 59.5, 58.25, 58.75, and the like.

In an optional embodiment, a method is provided to handle the case where there is not enough time to invert the level through delayed processing. During the transmission process, the handling methods of the signal sender (the hard disk) and the signal receiver (the baseboard management controller) are as follows:

The handling method of the signal sender (the hard disk) includes: In a case where data is planned to be modulated in the current pulse, a detection is performed before inverting the level to determine whether there is enough time to invert the level (i.e., detecting the timeliness of inverting the level in the current level to obtain the first signal). In a case where it is determined that there is enough time to invert the level, and the width of the current level can be guaranteed to be within an acceptable error range, the level is inverted (i.e., the first signal is sent in the current level). In a case where it is determined that there is not enough time to invert the level, a delayed level inversion step is executed (i.e., the first signal is sent after the current level of the target level width has been sent).

The delayed level inversion method can, but is not limited to, the following: The duration length $T_{cur}$ of the current level (i.e., the level width already output for the current level) is checked, and the remaining duration $T_{delay}$ ($T_{delay}=58.25-T_{cur}$) is calculated, which represents the difference between the target level width and the level width already output for the current level. This difference is the additional time that the current level needs to continue sending. The current level is then delayed and inverted after $T_{delay}$ milliseconds.

The handling method of the signal receiver (the baseboard management controller) includes: The duration of each level is calculated and the level width is checked; in a case where the level width does not correspond to a valid meaning, the level width is discarded; in a case where the level width corresponds to a valid meaning, the level width is retained and configured to recognize the modulated digital data.

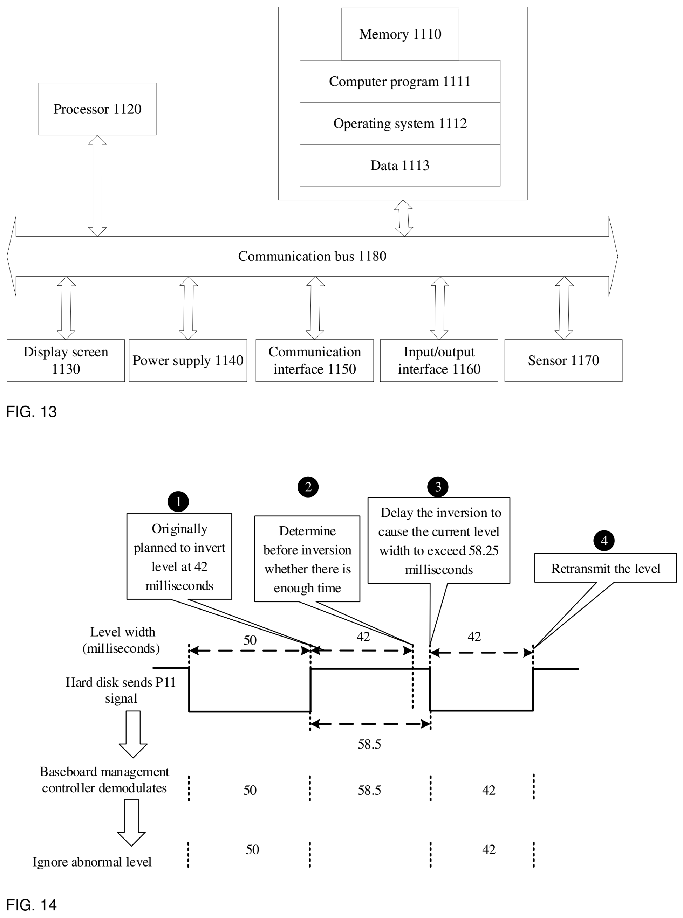

FIG. 14 is a schematic diagram of a hard disk modulation process according to an embodiment of the present application. As shown in FIG. 14, for the current level that was originally planned to invert at 42 milliseconds, it can be detected before inversion whether there is enough time to invert. For example, in a case where the current level has been sent for 42 milliseconds without inversion, it can be determined that there is not enough time to invert. In this case, a delayed inversion operation is performed on the current level, causing the level width of the current level to exceed 58.25 milliseconds before inversion. The digital data corresponding to 42 milliseconds is then retransmitted in the next level. For the demodulation process of the baseboard management controller, the digital data of 58.5 will be demodulated, which exceeds the target width range and will be ignored as an abnormal level. The next level will be demodulated as the digital data of 42.

During operation, the hard disk may experience a state switch, such as switching from an active state to an idle state, or from an idle state to an active state. However, the state switch of the hard disk may cause an immediate change in the hard disk status signal. In a case where hard disk log data is being sent at this time, it could lead to errors in the hard disk log data. For example, when the hard disk is in the active state and hard disk log data is being transmitted, since the active state may end at any time, in a case where the transmission of the hard disk log data is not completed before the state change, data integrity errors may occur. Similarly, when the hard disk is in the idle state and hard disk log data is being transmitted, since the idle state may end at any time, in a case where the transmission of the hard disk log data is not completed before the state change, data integrity errors may also occur. To address the error cases above, corresponding solutions are provided in the embodiments of the present application. These solutions can, but are not limited to, determining according to the type of the target level currently being sent and the switch in the hard disk status signal, thereby ensuring the correct transmission of the hard disk log data.

For example, the hard disk is further configured to: when the hard disk status signal switches during the output of the first signal, control modulation of a target level and a reference level according to the level type of the currently sent target level and a switching of the hard disk status signal, wherein the reference level is a level following the target level.

Optionally, the hard disk is further configured to: when the hard disk status signal switches from a square wave signal to a constant-level signal, and the level type of the target level is the same as a level type of the constant-level signal, insert an inverted-level signal of the constant-level signal following the target level, and modulate, according to the hard disk status signal being the constant-level signal, the reference level.

In a case where the hard disk status switches from the active state to the idle state, i.e., the hard disk status signal switches from a square wave signal to a constant-level signal, and the type of the target level is the same as a level type of that of the constant-level signal, then an inverted-level signal of the constant-level signal can be inserted after the target level. Following that, the reference level is modulated according to the hard disk status signal being a constant-level signal. That is, after completing the sending of the current target level, an inverted-level signal of the constant-level signal is inserted. When the constant-level signal is a high-level signal, a low-level signal is inserted; when the constant-level signal is a low-level signal, a high-level signal is inserted. The subsequent levels are then modulated according to the modulation method for the idle state.

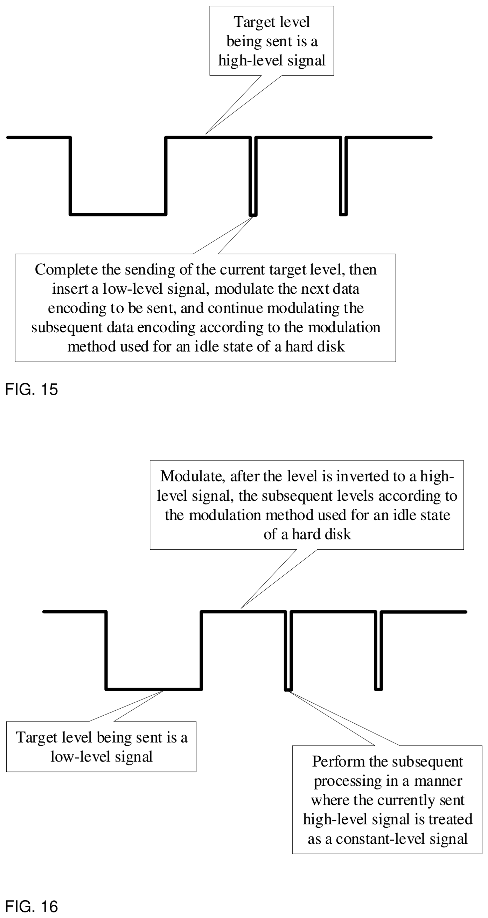

For example, when the hard disk switches from the active state to the idle state, it is necessary to consider two cases for the level currently being sent: whether it is a high-level signal or a low-level signal. In a case where the target level being sent is a high-level signal, and taking the constant-level signal as a high-level signal as an example, FIG. 15 is a schematic diagram I of a process for switching a hard disk status according to an embodiment of the present application. As shown in FIG. 15, the hard disk normally completes the sending of the current target level, then inserts a low-level signal, modulates the next data encoding to be sent, and continues modulating the subsequent data encoding according to the modulation method used for the idle state of the hard disk.

Optionally, the hard disk is further configured to: when the hard disk status signal switches from a square wave signal to a constant-level signal, and the level type of the target level is opposite to a level type of the constant-level signal, modulate, according to the hard disk status signal being the square wave signal, the next level of the target level following the target level; and insert an inverted-level signal of the constant-level signal following the next level of the target level, and modulate, according to the hard disk status signal being the constant-level signal, the reference level.

In a case where the hard disk status switches from the active state to the idle state, i.e., the hard disk status signal switches from a square wave signal to a constant-level signal, and the type of the target level is opposite to that of the constant-level signal, then the next level of the target level can be modulated according to the hard disk status signal being a square wave signal. Following the next level, an inverted-level signal of the constant-level signal is inserted, followed by modulating the reference level according to the hard disk status signal being a constant-level signal. That is, after completing the sending of the current target level, the level is inverted, and the next level of the target level is modulated according to the hard disk status signal being a square wave signal. Following the next level, an inverted-level signal of the constant-level signal is inserted. When the constant-level signal is a high-level signal, a low-level signal is inserted; when the constant-level signal is a low-level signal, a high-level signal is inserted. The subsequent levels are then modulated according to the modulation method for the idle state.

For example, when the hard disk switches from the active state to the idle state, it is necessary to consider two cases for the level currently being sent: whether it is a high-level signal or a low-level signal. In a case where the target level being sent is a low-level signal, and taking the constant-level signal as a high-level signal as an example, FIG. 16 is a schematic diagram II of a process for switching a hard disk status according to an embodiment of the present application. As shown in FIG. 16, the hard disk normally completes the sending of the current target level. After the level is inverted to a high-level signal, the subsequent levels are modulated according to the modulation method used for the idle state of the hard disk. The subsequent processing is then carried out as shown in FIG. 15.

Optionally, the hard disk is further configured to: when the hard disk status signal switches from a constant-level signal to a square wave signal, and the pulse type of the target pulse is the same as a pulse type of the constant-level signal, invert the level following the target level, and modulate, according to the hard disk status signal being the square wave signal, the reference level.

In a case where the hard disk status switches from the idle state to the active state, i.e., the hard disk status signal switches from a constant-level signal to a square wave signal, and the type of the target pulse is the same as that of the constant-level signal, then the level is inverted after the target level, and the reference level is modulated according to the hard disk status signal being a square wave signal. That is, after completing the sending of the current target level, the level is inverted, and the subsequent levels are modulated according to the hard disk status signal being a square wave signal.

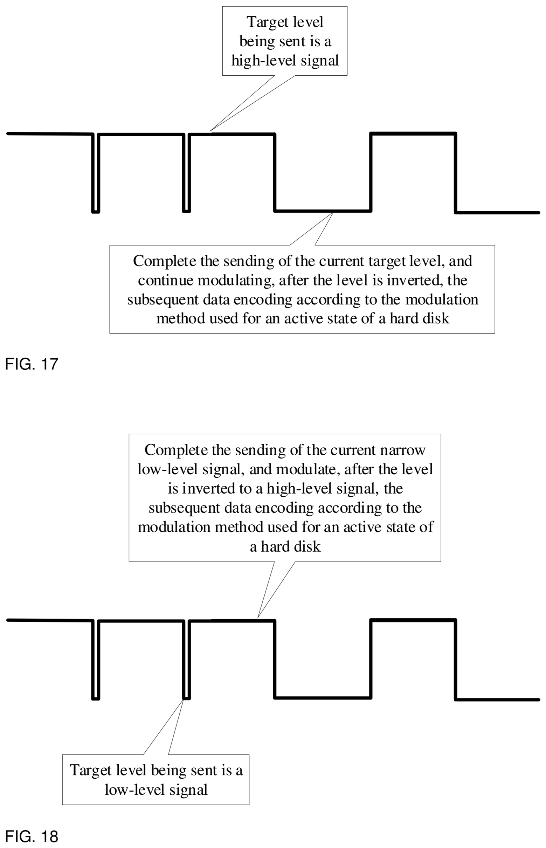

For example, when the hard disk switches from the idle state to the active state, it is necessary to consider two cases for the level currently being sent: whether it is a high-level signal or a low-level signal. In a case where the target level being sent is a high-level signal, and taking the constant-level signal as a high-level signal as an example, FIG. 17 is a schematic diagram III of a process for switching a hard disk status according to an embodiment of the present application. As shown in FIG. 17, the hard disk normally completes the sending of the current target level. After the level is inverted, the modulation of the subsequent data encoding continues according to the modulation method used for the active state of the hard disk.

Optionally, the hard disk is further configured to: when the hard disk status signal switches from a constant-level signal to a square wave signal, and a level type of the target level is opposite to a level type of the constant-level signal, modulate, according to the hard disk status signal being the square wave signal, a reference pulse following the target level.

In a case where the hard disk status switches from the idle state to the active state, i.e., the hard disk status signal switches from a constant-level signal to a square wave signal, and the type of the target level is opposite to that of the constant-level signal, then the target level can still be sent as the inverted level of the constant-level signal. After that, the reference pulse is modulated according to the hard disk status signal being a square wave signal. That is, after completing the sending of the current target level, the reference pulse is modulated according to the hard disk status signal being a square wave signal.

For example, when the hard disk switches from the idle state to the active state, it is necessary to consider two cases for the level currently being sent: whether it is a high-level signal or a low-level signal. In a case where the target level being sent is a low-level signal, and taking the constant-level signal as a high-level signal as an example, FIG. 18 is a schematic diagram IV of a process for switching a hard disk status according to an embodiment of the present application. As shown in FIG. 18, the hard disk normally completes the sending of the current narrow low-level signal. After the level is inverted to a high-level signal, the subsequent data encoding is modulated according to the modulation method used for the active state of the hard disk.

Through the processing methods above, the bandwidth utilization rate can be maintained without reduction when the hard disk status switches. Additionally, when handling data modulation errors, the bandwidth utilization rate can be minimized to avoid any decrease.

As an optional embodiment, the embodiments of the present application further provide a baseboard management controller configured for monitoring a hard disk.

The baseboard management controller is configured to demodulate a first signal output from a hard disk status pin of the hard disk to obtain hard disk log data, and is configured to to monitor the hard disk according to the hard disk log data.

The first signal is modulated by the hard disk according to the hard disk log data and a hard disk status signal that corresponds the hard disk status pin.

As an optional embodiment, the baseboard management controller according to the embodiments of the present application can refer to either a baseboard management controller chip 101 or a system that includes the baseboard management controller chip 101 and a complex programmable logic device 102. Functionally, the baseboard management controller according to the embodiments of the present application can include a demodulation module, a storage module, and an analysis module. The demodulation module includes a demodulation circuit, which is configured to demodulate the first signal to obtain hard disk log data. The storage module is configured to store the hard disk log data in the hard disk log storage area. The analysis module is configured to read the hard disk log data from the hard disk log storage area and monitor the hard disk according to the hard disk log data.

In a case where a system including the baseboard management controller chip 101 and the complex programmable logic device 102 is used, the demodulation module and the storage module can be deployed within the system including the baseboard management controller chip 101 and the complex programmable logic device 102, while the analysis module can be deployed within the baseboard management controller chip 101.

Demodulating, by the baseboard management controller, the first signal to obtain the hard disk log data may include: measuring, by the baseboard management controller, a level width of the first signal to obtain the digital data corresponding to the hard disk log data, and parsing the digital data into hard disk log data.

The first signal may be obtained by the hard disk, by modulating a signal with a level width corresponding to the hard disk log data and the hard disk status signal, after the hard disk has converted the hard disk log data into a signal with a level width corresponding to the hard disk log data.

In the embodiments of the present application, the baseboard management controller may be further configured to demodulate, according to a signal type of the hard disk status signal, the hard disk status data from a signal cycle configured to demodulate the hard disk log data.

In some optional embodiments of the present application, the first signal can carry the modulated hard disk log data and the modulated hard disk status signal simultaneously. That is, the first signal may be obtained by the hard disk converting the hard disk log data into a signal with a level width corresponding to the hard disk log data before modulating a signal with a level width corresponding to the hard disk log data and the hard disk status signal.

In practical applications, when the hard disk control signal is a square wave signal, the level width of the first signal can be configured to correspond to the data bits in the hard disk log data, while the high-low level transition in the first signal correspond to the hard disk status signal.

When the hard disk status signal is a square wave signal, the first signal can be the signal obtained after the hard disk converts the hard disk log data into a signal with a level width corresponding to the hard disk log data, and then replaces the square wave signal of the corresponding cycle with the signal with the level width corresponding to the hard disk log data.

Alternatively, when the hard disk status signal is a square wave signal, the first signal can be the signal obtained after the hard disk converts the hard disk log data into a signal with a level width corresponding to the hard disk log data, and then adjusts the level width of each signal cycle corresponding to the hard disk log data in the square wave signal according to the level width of the signal corresponding to the hard disk log data.

When the signal type of the hard disk status signal includes a square wave signal, demodulating, by the baseboard management controller according to the signal type of the hard disk status signal, the hard disk status data from a signal cycle configured to demodulate the hard disk log data may include: demodulating, by the baseboard management controller according to high-low level transition in the first signal, the hard disk status data.

Demodulating, by the baseboard management controller according to high- low level transition in the first signal, the hard disk status data may include:

> after demodulating the hard disk log data, replacing, by the baseboard management controller, the first signal with a square wave signal to obtain the hard disk status signal; and

> demodulating, according to the hard disk status signal, the hard disk status data.

Alternatively, demodulating, by the baseboard management controller according to high-low level transition in the first signal, the hard disk status data may further include:

> after demodulating the hard disk log data, adjusting, by the baseboard management controller according to a pulse width of the square wave signal, a pulse width of each cycle of the first signal to obtain the hard disk status signal; and

> demodulating, according to the hard disk status signal, the hard disk status data.

In practical applications, when the hard disk control signal is a constant-level signal, the level width of the first signal can be configured to correspond to the data bits in the hard disk log data, and the constant-level signal with a large proportion in the first signal corresponds to the hard disk status signal.

When the hard disk status signal is a constant-level signal, the first signal may be a signal obtained by the hard disk converting the hard disk log data into a signal with a level width corresponding to the hard disk log data, and then replacing the constant-level signal of corresponding durations with the signal with the level width corresponding to the hard disk log data.

In the signal cycles of the first signal, the proportion of the inverted-level signal relative to the constant-level signal is less than 50%.

Alternatively, when the hard disk status signal is a constant-level signal, the first signal may be a signal obtained by the hard disk converting the hard disk log data into a signal with a level width corresponding to the hard disk log data and generating, according to the signal with a level width corresponding to the hard disk log data, an inverted-level signal corresponding to the constant-level signal, and then inserting inserting the inverted-level signal into the constant-level signal.

In each signal cycle of the first signal, a proportion of the inverted-level signal relative to the constant-level signal is less than 50%.

When the signal type of the hard disk status signal includes a constant-level signal, demodulating, by the baseboard management controller according to the signal type of the hard disk status signal, the hard disk status data from a signal cycle configured to demodulate the hard disk log data may include: demodulating, by the baseboard management controller according to the constant-level signal having a large proportion in the signal cycle of the first signal, the hard disk status data.

Demodulating, by the baseboard management controller according to a constant-level signal having a large proportion in a signal cycle of the first signal, the hard disk status data may include:

> after demodulating the hard disk log data, replacing, by the baseboard management controller, the first signal with the constant-level signal having a large proportion in the signal cycle of the first signal to obtain the hard disk status signal; and

> demodulating, according to the hard disk status signal, the hard disk status data.

Alternatively, demodulating, by the baseboard management controller according to a constant-level signal having a large proportion in a signal cycle of the first signal, the hard disk status data may include:

> after demodulating the hard disk log data, replacing, by the baseboard management controller, an inverted-level signal corresponding to the constant-level signal having a large proportion in the signal cycle of the first signal with the constant-level signal having a large proportion in the signal cycle of the first signal to obtain the hard disk status signal; and

> demodulating, according to the hard disk status signal, the hard disk status data.

To enable the baseboard management controller to recognize the original hard disk status signal from the first signal, when the hard disk status signal includes only a constant-level signal, or when the hard disk status signal includes a constant high-level signal and a constant low-level signal,
the first signal is obtained by the hard disk, by modulating a signal with a level width corresponding to the hard disk log data and the hard disk status signal, after the hard disk has converted the hard disk log data into a signal with a level width corresponding to the hard disk log data.

When the hard disk status signal is a constant high-level signal, the duty cycle of each cycle of the first signal is greater than 50%.

When the hard disk status signal is a constant low-level signal, the duty cycle of each cycle of the first signal is less than 50%.

In some optional embodiments of the present application, when the hard disk status signal includes only constant-level signals, different modulation constraints need to be set to distinguish between the constant high-level signal and the constant low-level signal. When the hard disk status signal includes only a single constant-level signal, or when the hard disk status signal includes a constant high-level signal and a constant low-level signal, the first signal may be obtained, by modulating a signal with a level width corresponding to the hard disk log data and the hard disk status signal, after the hard disk has converted the hard disk log data into a signal with a level width corresponding to the hard disk log data.

When the hard disk status signal is a square wave signal, a maximum duty cycle within a signal cycle of the hard disk log data is less than a first duty cycle, and/or the minimum duty cycle of the first signal is greater than the second duty cycle.

The first duty cycle refers to the minimum duty cycle in the first signal corresponding to the constant-level signal when the constant-level signal is a constant high-level signal.

The second duty cycle refers to the maximum duty cycle in the first signal corresponding to the constant-level signal when the constant-level signal is a constant low-level signal.

When the signal type of the hard disk status signal includes a single constant-level signal, or the signal type of the hard disk status data includes a constant high-level signal and a constant low-level signal, demodulating, by the baseboard management controller according to the signal type of the hard disk status signal, the hard disk status data from a signal cycle configured to demodulate the hard disk log data may include:

> after demodulating the hard disk log data, restoring, by the baseboard management controller, a signal cycle of the first signal with a duty cycle greater than 50% to a constant high-level signal, and restoring a signal cycle of the first signal with a duty cycle less than 50% to a constant low-level signal, to obtain the hard disk status signal; and

> demodulating, according to the hard disk status signal, the hard disk status data.

In the optional embodiments of the present application, when the hard disk status signal includes a square wave signal and a constant-level signal, the first signal may be obtained by the hard disk, by modulating a signal with a level width corresponding to the hard disk log data and the hard disk status signal, after the hard disk has converted the hard disk log data into a signal with a level width corresponding to the hard disk log data.

When the hard disk status signal is a square wave signal, a maximum duty cycle of each signal cycle of the signal with a level width corresponding to the hard disk log data is less than a first duty cycle, and/or the minimum duty cycle of the first signal is greater than the second duty cycle.

The first duty cycle refers to the minimum duty cycle in the first signal corresponding to the constant-level signal when the constant-level signal is a constant high-level signal.

The second duty cycle refers to the maximum duty cycle in the first signal corresponding to the constant-level signal when the constant-level signal is a constant low-level signal.

In the optional embodiments of the present application, the first signal may further carry the modulated hard disk log data and the modulated hard disk status signal in a time-division manner. That is, the first signal may also be obtained by inserting the level signal into the invalid signal period, during which the hard disk status pin does not output the hard disk status signal, after converting the hard disk log data into a level signal.

When the signal type of the hard disk status signal includes a square wave signal and a constant-level signal, demodulating, by the baseboard management controller according to the signal type of the hard disk status signal, the hard disk status data from a signal cycle configured to demodulate the hard disk log data may include:

> when the constant-level signal is a constant high-level signal, after demodulating the hard disk log data, restoring, by the baseboard management controller, a signal cycle of the first signal with a duty cycle less than a first duty cycle to a square wave signal, and restoring a signal cycle of the first signal with a duty cycle greater than the first duty cycle to a constant high-level signal, to obtain the hard disk status signal;

> when the constant-level signal is a constant low-level signal, after demodulating the hard disk log data, restoring, by the baseboard management controller, a signal cycle of the first signal with a duty cycle greater than a second duty cycle to a square wave signal, and restoring a signal cycle of the first signal with a duty cycle less than the second duty cycle to a constant low-level signal, to obtain the hard disk status signal;

> when the constant-level signal includes a constant high-level signal and a constant low-level signal, after demodulating the hard disk log data, restoring, by the baseboard management controller, a signal cycle of the first signal with a duty cycle less than the first duty cycle and greater than the second duty cycle to a square wave signal, restoring a signal cycle of the first signal with a duty cycle greater than the first duty cycle to a constant high-level signal, and restoring a signal cycle of the first signal with a duty cycle less than the second duty cycle to a constant low-level signal, to obtain the hard disk status signal; and

demodulating, according to the hard disk status signal, the hard disk status data.

In some optional embodiments of the present application, the first signal may also carry the modulated hard disk log data and the modulated hard disk status signal in a time-division manner. That is, the first signal may also be obtained by inserting the level signal into the invalid signal period, during which the hard disk status pin does not output the hard disk status signal, after converting the hard disk log data into a level signal.

Demodulating, by the baseboard management controller, the first signal to obtain the hard disk log data may include:

after demodulating the hard disk status data from the first signal according to the signal type of the hard disk status signal, demodulating, by the baseboard management controller, the hard disk log data from signal cycles of the first signal that do not conform to the signal type of the hard disk status signal; or

measuring, by the baseboard management controller, the pulse width of each cycle of the first signal to obtain digital data corresponding to the hard disk log data, parsing the digital data into the hard disk log data, and demodulating the hard disk status data from cycles with pulse widths not corresponding to the digital data.

In some optional embodiments of the present application, the baseboard management controller may further include a status control circuit corresponding to the hard disk status pin, a controlled terminal of the status control circuit is connected to the baseboard management controller, and an output terminal of the status control circuit is connected to a drive terminal of a controlled element corresponding to the hard disk status pin.

The baseboard management controller is further configured to control, according to the hard disk status data, the status control circuit to drive the controlled element.

In practical applications, the hard disk status pin may be a hard disk status indicator light control pin, and the status control circuit may be an amplifier drive circuit. Controlling, by the baseboard management controller according to the hard disk status data, the status control circuit to drive the controlled element includes:

when the baseboard management controller demodulates the first signal to obtain the hard disk status data corresponding to a turn-on command, controlling the amplifier drive circuit to generate a square wave signal to illuminate a hard disk status indicator light corresponding to the hard disk status pin; and

when the baseboard management controller demodulates the first signal to obtain the hard disk status data corresponding to a turn-off command, stopping controlling the amplifier drive circuit to generate the square wave signal, thereby extinguishing the hard disk status indicator light.

In some optional embodiments of the present application, the baseboard management controller may include a baseboard management controller chip 101 and a complex programmable logic device 102.

The baseboard management controller chip 101 is connected to the complex programmable logic device 102 via an inter-integrated circuit bus and an interrupt signal line, and a data input/output pin of the complex programmable logic device 102 is connected to the hard disk status pin.

The complex programmable logic device 102 is configured to demodulate the first signal to obtain the hard disk log data and to send an interrupt signal to the baseboard management controller chip 101 via the interrupt signal line.

The baseboard management controller chip 101 is configured to read, upon receiving the interrupt signal, the hard disk log data from the complex programmable logic device 102 via the inter-integrated circuit bus and monitor the hard disk according to the hard disk log data.

In some optional embodiments of the present application, the baseboard management controller may include a baseboard management controller chip 101 and a complex programmable logic device 102.

The baseboard management controller chip 101 is connected to the complex programmable logic device 102 via an inter-integrated circuit bus, and a data input/output pin of the complex programmable logic device 102 is connected to the hard disk status pin.

The complex programmable logic device 102 is configured to demodulate the first signal to obtain the hard disk log data.

The baseboard management controller chip 101 is configured to poll the inter-integrated circuit bus, and upon polling the complex programmable logic device 102, read the hard disk log data, and monitor the hard disk according to the hard disk log data.

In some optional embodiments of the present application, the baseboard management controller may be further configured to send, when hard disk status data obtained by demodulating the first signal is non-control data or when the demodulated first signal does not include the hard disk status data, and when the current time falls within a negotiation time period agreed upon with the hard disk, a reverse transmission request to the hard disk status pin, and, upon receiving an allow signal sent by the hard disk, send a control command for the hard disk to the hard disk status pin. The control command can include at least one of the following: a command to resend the hard disk log, a command to send the hard disk log in advance, or a command to send specified hard disk log data.

Optionally, the hard disk is further configured to:

during sending of the hard disk status signal via the hard disk status pin, when the hard disk status signal is modulated within a current level of the hard disk status signal, detect timeliness of obtaining the first signal by inverting the level within the current level, wherein the timeliness is configured to indicate whether inverting the level within the current level is allowed to obtain the first signal; and process the current level according to the timeliness.

Optionally, the hard disk is further configured to: detect a difference between a level width of the first signal and a level width already output for the current level; when the difference is greater than a difference threshold, determine that the timeliness is configured to indicate that inverting the level within the current level is allowed to obtain the first signal, the difference threshold being determined according to a minimum duration required for level inversion; and when the difference is less than or equal to the difference threshold, determine that the timeliness is configured to indicate that inverting the level within the current level is not allowed to obtain the first signal.

Optionally, the hard disk is further configured to: when the timeliness is configured to indicate that inverting the level within the current level is allowed to obtain the first signal, send the first signal within the current level; and when the timeliness is configured to indicate that inverting the level within the current level is not allowed to obtain the first signal, send the first signal after the current level with a target level width, wherein the target level width is a level width that prevents the baseboard management controller from demodulating the hard disk log data.

Optionally, the target level width is greater than a maximum value of a target width range, the target width range being a range of level widths with digital data corresponding to the target level width.

Optionally, the hard disk is further configured to: when the hard disk status signal switches during the output of the first signal, control modulation of a target level and a reference level according to the level type of the currently sent target level and a switching of the hard disk status signal, wherein the reference level is a level following the target level.

Optionally, the hard disk is further configured to: when the hard disk status signal switches from a square wave signal to a constant-level signal, and the level type of the target level is the same as a level type of the constant-level signal, insert an inverted-level signal of the constant-level signal following the target level, and modulate, according to the hard disk status signal being the constant-level signal, the reference level.

Optionally, the hard disk is further configured to: when the hard disk status signal switches from a square wave signal to a constant-level signal, and the level type of the target level is opposite to a level type of the constant-level signal, modulate, according to the hard disk status signal being the square wave signal, the next level of the target level following the target level; and insert an inverted-level signal of the constant-level signal following the next level of the target level, and modulate, according to the hard disk status signal being the constant-level signal, the reference level.

Optionally, the hard disk is further configured to: when the hard disk status signal switches from a constant-level signal to a square wave signal, and a pulse type of the target pulse is the same as a pulse type of the constant-level signal, invert the level following the target level, and modulate, according to the hard disk status signal being the square wave signal, the reference level.

Optionally, the hard disk is further configured to: when the hard disk status signal switches from a constant-level signal to a square wave signal, and a level type of the target level is opposite to a level type of the constant-level signal, modulate, according to the hard disk status signal being the square wave signal, a reference pulse following the target level.

Optionally, demodulating, by the baseboard management controller, the first signal to obtain the hard disk log data includes: measuring, by the baseboard management controller, a level width of the first signal that fall within a target width range to obtain digital data corresponding to the hard disk log data, and parsing the digital data into the hard disk log data, wherein the target width range is a range of level widths with digital data corresponding to the target level width.

Optionally, measuring, by the baseboard management controller, a level width of the first signal that fall within a target width range to obtain digital data corresponding to the hard disk log data, and parsing the digital data into the hard disk log data includes: measuring, by the baseboard management controller, a level width of the current level in the first signal; detecting, by the baseboard management controller, whether the level width of the current level falls within the target width range; when the level width of the current level falls within the target width range, determining, by the baseboard management controller, the level width of the current level as the digital data corresponding to the current level; and looking up, by the baseboard management controller from a correspondence between digital data and data encoding, data encoding corresponding to the digital data of the current level to obtain the hard disk log data.

Optionally, after detecting whether the level width of the current level falls within the target width range, when the level width of the current level does not fall within the target width range, the baseboard management controller discards a level width of a target level.

Optionally, demodulating, by the baseboard management controller, the first signal to obtain the hard disk log data includes: measuring, by the baseboard management controller, a level width of a level of a target type in the first signal to obtain digital data corresponding to the hard disk log data, and parsing the digital data into the hard disk log data, wherein the target type is a level type in the first signal that is permitted to carry the hard disk log data.

Optionally, before measuring the level width of the level of a target type in the first signal to obtain digital data corresponding to the hard disk log data, and parsing the digital data into the hard disk log data, the baseboard management controller determines hard disk status according to a level in the first signal; and the baseboard management controller determines the target type according to the hard disk status.

Optionally, determining, by the baseboard management controller according to the levels in the first signal, hard disk status includes: detecting, by the baseboard management controller, a level width of an inverted-level signal in the first signal, wherein the hard disk status signal is a constant-level signal being configured to indicate that the hard disk is in an idle state, and the inverted-level signal is a level opposite in polarity to the constant-level signal; and determining, by the baseboard management controller according to the level width of the inverted-level signal, the hard disk status.

Optionally, determining, by the baseboard management controller according to the hard disk status, the target type includes: when the hard disk status is in an idle state, determining, by the baseboard management controller, the target type as a level type having the same polarity as the constant-level signal.

Optionally, determining, by the baseboard management controller according to the hard disk status, the target type includes: when the hard disk status is in an active state, determining, by the baseboard management controller, the target type as a high-level type and a low-level type.

Optionally, the baseboard management controller is further configured to send pin configuration information to the hard disk, enabling the hard disk to determine the hard disk status pin used for outputting hard disk log data and the modulation configuration information of the first signal according to the pin configuration information. The specific details can be referred to the description above, which are not to be repeated here.

As described above, the baseboard management controller is further configured to send pin configuration information to the hard disk. The optional process includes:

When hard disk status data obtained by demodulating the first signal is non-control data or data obtained by demodulating the first signal does not include the hard disk status data, and when the current time falls within a negotiation time period agreed upon with the hard disk, the baseboard management controller sends a reverse transmission request to the hard disk status pin. Upon receiving the allow signal sent by the hard disk, the baseboard management controller sends the pin configuration information to the hard disk via the hard disk status pin. The specific details can be referred to the description above, which are not to be repeated here.

With reference to the hard disk monitoring system above and/or any embodiment of the baseboard management controller, the following description illustrates the hard disk monitoring method according to the embodiments of the present application, with reference to the drawings.

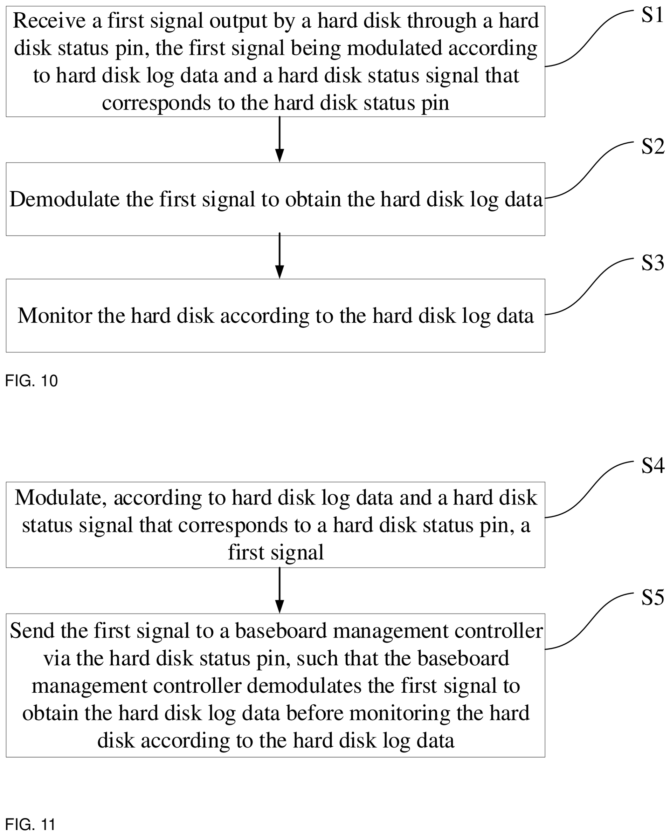

FIG. 10 is a flowchart of a method for monitoring a hard disk according to an embodiment of the present application.

It is to be noted that the method for monitoring a hard disk shown in FIG. 10 is a method applied to the baseboard management controller. In the embodiments of the present application, the baseboard management controller is the same as the one mentioned in the hard disk monitoring system of the previous embodiment. That is, the baseboard management controller may include the baseboard management controller chip, or may be a system including the baseboard management controller and a complex programmable logic device. The complex programmable logic device may be provided on the hard disk backplane or on the motherboard.

As shown in FIG. 10, the method for monitoring a hard disk applied to the baseboard management controller according to the embodiments of the present application includes:

At S1, a first signal output by a hard disk through a hard disk status pin is received, the first signal being modulated according to hard disk log data and a hard disk status signal that corresponds to the hard disk status pin.

In the optional embodiments, a packetization method for the hard disk log data (writing the hard disk log data into data packets) and the modulation method (converting the digital signal into an analog signal) are deployed on the hard disk.

To achieve out-of-band monitoring of each hard disk, the baseboard management controller first needs to identify the hard disks in the server that support out-of-band monitoring. During the initialization phase, the system boot controller detects each hard disk to identify the hard disks with out-of-band monitoring functionality.

It is to be noted that during the initialization phase, in addition to detecting whether each hard disk has out-of-band monitoring functionality, the system boot controller also needs to detect whether the baseboard management controller supports out-of-band monitoring functionality. The target hard disks with out-of-band monitoring functionality are selected accordingly. According to the detection results, it is determined whether to enable the out-of-band monitoring functionality. The present application discloses the execution process of the system boot controller during the initialization phase, which includes:

During server power-on startup, the system boot controller detects the version numbers of the baseboard management controller and the hard disk, and on the basis of the version numbers, determines whether the baseboard management controller and the hard disk support out-of-band monitoring functionality.

In a case where the system boot controller determines that the baseboard management controller and the hard disk support out-of-band monitoring functionality, the hard disk is selected as the target hard disk. The out-of-band monitoring functionality for the baseboard management controller and the target hard disk is then enabled, and the information of the target hard disk is sent to the baseboard management controller, allowing the baseboard management controller to acquire the hard disk log data from the target hard disk.

In a case where the baseboard management controller or the hard disk does not support out-of-band monitoring functionality, the out-of-band monitoring functionality for the baseboard management controller and the hard disk is disabled.

It is to be noted that after the server power-on startup, the system boot controller detects the version numbers of the baseboard management controller and the hard disk, and on the basis of the version numbers, determines whether the baseboard management controller and the hard disk support out-of-band monitoring functionality.

It can be understood that the hard disk and the baseboard management controller need to be pre-configured and debugged, so that the out-of-band hard disk monitoring system, including the hard disk and the baseboard management controller, is capable of supporting the required out-of-band monitoring functionalities, ensuring the proper operation of the entire system. After the debugging and configuration are completed, their respective version numbers are modified, so that when the corresponding version numbers are later detected, it is assumed that the hard disk and the baseboard management controller support out-of-band monitoring functionality. For the hard disk, compared to the original configuration, where the hard disk status pin only outputs the corresponding hard disk status signal, it needs to support modulating the hard disk log data and the hard disk status signal corresponding to the hard disk status pin to output the corresponding target signal. The baseboard management controller needs to support demodulating the target signal according to the corresponding signal demodulation rules in order to retrieve the hard disk log data, and then perform out-of-band monitoring of the target hard disk according to the hard disk log data.

It is to be noted that existing out-of-band monitoring solutions default to the hard disk transmitting hard disk log data via designated data pins, while the hard disk status pin is only required to perform the corresponding status indication function. Therefore, for the hard disk, since the present application adds the functionality of using the hard disk status pin to output hard disk log data, and for the baseboard management controller, since it additionally adds the functionality of demodulating the hard disk output signal to obtain and parse the hard disk log data, it is necessary to use the system boot controller to detect the version numbers of the hard disk and the baseboard management controller.

In the embodiments of the present application, in a case where the system boot controller determines that the baseboard management controller and the hard disk support out-of-band monitoring functionality, the hard disk is selected as the target hard disk. The out-of-band monitoring functionality for the baseboard management controller and the target hard disk is then enabled. That is, the out-of-band monitoring functionality for the baseboard management controller and the target hard disk is only enabled when the baseboard management controller and the hard disk support out-of-band monitoring functionality. The system boot controller then sends the information of the target hard disk to the baseboard management controller, enabling the baseboard management controller to acquire the hard disk log data from the target hard disk.

In the embodiments of the present application, in a case where the baseboard management controller or the hard disk does not support out-of-band monitoring functionality, the out-of-band monitoring functionality for the baseboard management controller and the hard disk is disabled. It is to be noted that the baseboard management controller and the hard disk have the out-of-band monitoring functionality disabled by default. That is, in a case where either the baseboard management controller or the hard disk does not support out-of-band monitoring functionality, the out-of-band monitoring functionality for both will not be enabled.

Optionally, the system boot controller can be built on the basis of the unified extensible firmware interface (UEFI) or basic input output system (BIOS), and the baseboard management controller includes a baseboard management controller (BMC) chip and/or a complex programmable logic device (CPLD). That is, the embodiments of the present application allow the BIOS or UEFI to detect during the initialization phase whether the baseboard management controller and the hard disk support out-of-band monitoring functionality.

In the optional embodiments, when the system boot controller is built on the basis of the unified extensible firmware interface, the process of detecting the version number of the baseboard management controller by the system boot controller includes: During the driver execution environment phase of the system boot controller, the system boot controller sends a target request to the baseboard management controller via the intelligent platform management interface to obtain the version number of the baseboard management controller and/or the complex programmable logic device. After receiving a response from the baseboard management controller to the target request, the system boot controller obtains the returned version number. The process of the baseboard management controller responding to the target request includes: reading, by the baseboard management controller, the first version number corresponding to the baseboard management controller from the first register configured to store the version number, and/or reading the second version number corresponding to the complex programmable logic device, and sending the read first version number and/or second version number to the system boot controller.

It is to be noted that the UEFI system can be divided into seven stages from power-on to shutdown. These seven stages are: security (SEC), pre-extensible firmware interface initialization (PEI), driver execution environment (DXE), boot dev select (BDS), transient system load (TSL), run time (RT), and after life (AL). During the DXE phase of UEFI, UEFI requests the version number of the baseboard management controller and/or the complex programmable logic device from the baseboard management controller using the intelligent platform management interface (IPMI). The baseboard management controller, according to the target request, reads the first version number corresponding to the baseboard management controller from the first register configured to store version numbers, and/or reads the second version number corresponding to the complex programmable logic device, and sends the read first version number and/or second version number to UEFI.

Optionally, the present application can implement a security verification mechanism in the system boot controller built on UEFI to ensure that the version numbers received from the baseboard management controller are trustworthy. Optionally, it is necessary to create a set of key pairs for signing and verification. UEFI embeds a set of predefined public keys for verifying the signatures of external providers. Correspondingly, the baseboard management controller needs to use the corresponding private key to sign the version number information that needs to be sent to the system boot controller, ensuring the security and integrity of the information through these signatures. During the UEFI boot process, the UEFI firmware verifies the signature of the baseboard management controller firmware to determine whether the version number is trustworthy according to the signature. Additionally, the present application uses an encryption protocol to pre-establish a secure channel between the baseboard management controller and the system boot controller built on UEFI, enabling secure communication between the system boot controller and the baseboard management controller on the basis of this secure channel.

Correspondingly, the system boot controller determines whether the baseboard management controller supports data monitoring functionality on the basis of the version number, including: determining the first preset version number corresponding to the baseboard management controller, and in a case where the first version number is greater than or equal to the first preset version number, determining that the baseboard management supports data monitoring functionality, wherein the first preset version number is the minimum version number at which the baseboard management controller supports data monitoring functionality; and/or, determining the second preset version number corresponding to the complex programmable logic device, and in a case where the second version number is greater than or equal to the second preset version number, determining that the complex programmable logic device supports data monitoring functionality, wherein the second preset version number is the minimum version number at which the complex programmable logic device supports data monitoring functionality.

It is to be noted that the out-of-band monitoring functionality primarily refers to data monitoring functionality. That is, when the system boot controller determines whether the baseboard management controller and the complex programmable logic device support out-of-band monitoring functionality, it is mainly to determine whether they support the functionality of monitoring hard disk log data (i.e., data monitoring functionality). It can be understood that out-of-band monitoring of the hard disk primarily refers to monitoring the hard disk log data. In the present application, for the hard disk, an additional functionality is added to use its hard disk status pin to output hard disk log data. For the baseboard management controller, in a case where it includes the baseboard management controller and the complex programmable logic device, the complex programmable logic device needs to support signal demodulation as well as the functionality of storing hard disk log data. The baseboard management controller needs to support reading and parsing the hard disk log data stored in the complex programmable logic device. Therefore, the purpose of detecting the version number in the present application is to determine whether the current version of the baseboard management controller and/or the complex programmable logic device supports the functionality of monitoring hard disk log data as described above.

Additionally, determining whether the baseboard management controller and the complex programmable logic device support data monitoring functionality involves comparing their current version numbers with the minimum version number required to support out-of-band monitoring functionality. In a case where the current version number is greater than or equal to the minimum version number, it indicates that the baseboard management controller and the complex programmable logic device support data monitoring functionality.

Optionally, in a case where the baseboard management controller fails to read the first version number from the first register, or in a case where the system boot controller does not receive the first version number sent by the baseboard management controller, the system boot controller detects whether the web interface of the baseboard management controller contains a hard disk data display assembly. In a case where such a hard disk data display assembly exists, it is determined that the baseboard management controller supports out-of-band monitoring functionality.

It is to be noted that for certain baseboard management controllers that are unable to retrieve the version number from the first register, or in cases where the system boot controller is unable to obtain the version number from the baseboard management controller, the embodiments of the present application further provide an alternative method to determine whether the baseboard management controller supports out-of-band monitoring functionality. The web interface of the baseboard management controller is provided with a hard disk data display assembly, which can display the acquired hard disk log data in real time on the screen. When the system boot controller is unable to obtain the version number of the baseboard management controller, it may check whether the corresponding position on the baseboard management controller's web interface contains a hard disk data display assembly. In a case where such an assembly exists, it is assumed that the baseboard management controller supports the functionality of this system.

Optionally, in a case where the baseboard management controller fails to read the second version number from the first register, or in a case where the system boot controller does not receive the second version number sent by the baseboard management controller, the system boot controller will read the code memory size of the complex programmable logic device from the second register in the complex programmable logic device. In a case where the code memory size is the same as the code development size of the complex programmable logic device, it is determined that the complex programmable logic device supports out-of-band monitoring functionality.

It is to be noted that for certain complex programmable logic devices that are unable to retrieve the version number from the first register, or in cases where the system boot controller is unable to obtain the version number of the complex programmable logic device, the embodiments of the present application further provide an alternative method to determine whether the complex programmable logic device supports out-of-band monitoring functionality. The complex programmable logic device is provided with a second register configured to store the code memory size of the complex programmable logic device. When the system boot controller is unable to obtain the version number of the complex programmable logic device, it will read the code memory size of the complex programmable logic device from the second register. In a case where the code memory size is the same as the code development size of the complex programmable logic device, it is determined that the complex programmable logic device supports out-of-band monitoring functionality.

In the optional embodiments, when the system boot controller is built on the basis of the unified extensible firmware interface, the process of detecting the version number of the hard disk by the system boot controller includes: During the driver execution environment phase of the system boot controller, the system boot controller polls all hard disks to acquire the corresponding third version number, vendor identifier, and organization unique identifier for each hard disk. Correspondingly, determining whether the hard disk supports data monitoring functionality on the basis of the version number includes: determining whether the hard disk supports data monitoring functionality on the basis of the third version number, vendor identifier, and organization unique identifier.

Similar to the process of detecting the baseboard management controller, the system boot controller determines whether the hard disk supports out-of-band monitoring functionality, primarily by determining whether the hard disk supports data monitoring functionality, that is, whether it is capable of using its hard disk status pin to output hard disk log data. During the DXE phase of UEFI, UEFI can poll all hard disks via the PCIe bus and determine whether the hard disk supports data monitoring functionality using the advanced technology attachment (ATA) pass through command. Optionally, UEFI polls all hard disks to acquire the corresponding third version number, vendor identifier, and organizationally unique identifier (OUI) for each hard disk, and then determines whether the hard disk supports data monitoring functionality on the basis of the third version number, vendor identifier, and organizationally unique identifier.

Optionally, the process of determining whether the hard disk supports data monitoring functionality on the basis of the third version number, vendor identifier, and organizationally unique identifier, as described above, includes: determining the third preset version number corresponding to the hard disk on the basis of the vendor identifier and organizationally unique identifier, the third preset version number being the minimum version number at which the hard disk supports data monitoring functionality; and in a case where the third version number is greater than or equal to the third preset version number, and the format of the hard disk's management log is correct, determining that the hard disk supports data monitoring functionality.

It can be understood that the system boot controller determines whether each hard disk supports data monitoring functionality by comparing the hard disk's version number with the minimum required version number for out-of-band monitoring. In a case where the current version number meets or exceeds the minimum version number, and the format of the hard disk's management log is correct, it is determined that the hard disk supports data monitoring functionality.

At S2, the first signal is demodulated to obtain the hard disk log data.

By deploying on the baseboard management controller a demodulation method (converting analog signals into digital signals) and a parsing method (parsing the data packets to obtain the hard disk log data), the hard disk can directly output the hard disk log data to the baseboard management controller.

Optionally, the hard disk log data may include complete hard disk logs, i.e., logs generated by the hard disk controller periodically recording its own operating status data (such as temperature, number of bad sectors, accumulated error count, etc.). The hard disk log data may also be partial hard disk monitoring data, that is, the hard disk controller may output, via the hard disk status pins, part of predefined monitoring data or types of hard disk monitoring data designated by the baseboard management controller.

It can be understood that, according to the type of hard disk status pin selected, the manner in which the hard disk status pin outputs hard disk status signals, and the modulation method used when the hard disk status pin also outputs hard disk log data, the rate at which the hard disk outputs log data via the hard disk status pin may vary. To ensure the real-time nature of the hard disk log data, the type, amount, and frequency of the output hard disk log data can be determined according to the rate at which the affected hard disk outputs log data via the hard disk status pin, according to the implementation. For example, the hard disk may be configured to output complete hard disk log data at fixed intervals, and in a case where the hard disk monitoring data is abnormal, the abnormal data may be sent additionally outside the fixed sending interval.

At S3, the hard disk is monitored according to the hard disk log data.

In out-of-band monitoring, the baseboard management controller provides network services that allow operation and maintenance equipment to access the baseboard management controller of the monitored device to acquire hard disk log data, and provides a web page for displaying the monitoring interface. In the hard disk monitoring system according to the embodiments of the present application, after the baseboard management controller acquires the hard disk log data from the hard disk, it can read monitoring data items from the hard disk log data according to a pre-deployed monitoring list. Each monitoring data item is monitored according to its value and the corresponding allowable range in the monitoring list. Monitoring data items may include temperature, number of bad sectors, accumulated error count, and the like. In a case where a monitoring data item exceeds its allowable range, the baseboard management controller executes the operation and maintenance commands recorded in the monitoring list, such as generating a fault log, sending an alarm to the system administrator, controlling the fan to cool the hard disk, or the like.

The baseboard management controller may also work with sensors provided on the hard disk backplane to externally collect the status information of the hard disk, thereby enabling a comprehensive analysis of the hard disk's operational status in combination with the hard disk log data output by the hard disk. For example, when the baseboard management controller detects an abnormal hard disk temperature via an external temperature sensor, it can verify whether the hard disk's temperature self-check function is normal by referring to the corresponding temperature monitoring item in the hard disk log data. It can also diagnose the cause of the abnormal temperature by examining other monitoring data items in the log data at the same time.

After analyzing the hard disk log data, the baseboard management controller can be configured to display the hard disk monitoring results as charts on the web page of the baseboard management controller, allowing operation and maintenance personnel to intuitively view the hard disk monitoring results by logging into the web page of the baseboard management controller.

The embodiments of the present application primarily describe the interaction process between the baseboard management controller and the hard disk from the perspective of the baseboard management controller. Therefore, the details regarding the baseboard management controller and the hard disk are provided in the descriptions of the hard disk monitoring system or the baseboard management controller side, which are not to be repeated in the embodiments of the present application.

Optionally, the first signal carries the modulated hard disk log data and the modulated hard disk status signal simultaneously, as described above. It can be understood that the first signal here refers to the case where the hard disk log data and the hard disk status signal are simultaneously carried. For details, refer to the description of the simultaneous carrying manner in the previous section, which is not to be repeated here.

Optionally, there are various types of the first signal. For example, the first signal may include high-low level signal. In some optional embodiments of the present application, the level width of the first signal may correspond to the data bits in the hard disk log data, and the high-low level transition in the first signal correspond to the hard disk status signal.

In some optional embodiments of the present application, the level width of the first signal corresponds to the data bits in the hard disk log data, and the constant-level signal having a large proportion in the signal cycle of the first signal corresponds to the hard disk status signal.

Optionally, the hard disk status signal is a constant-level signal, and the first signal is a signal obtained by the hard disk converting the hard disk log data into a signal with a level width corresponding to the hard disk log data and generating, according to the signal with a level width corresponding to the hard disk log data, an inverted-level signal corresponding to the constant-level signal, and then inserting the inverted-level signal into the constant-level signal.

In each cycle of the first signal, a proportion of an inverted-level signal relative to the constant-level signal is less than 50%.

In addition, the hard disk status signal includes a single constant-level signal, or the hard disk status signal includes a constant high-level signal and a constant low-level signal.

The first signal is obtained by the hard disk by modulating a signal with a level width corresponding to the hard disk log data and the hard disk status signal, after the hard disk has converted the hard disk log data into a signal with a level width corresponding to the hard disk log data.

When the hard disk status signal is a constant high-level signal, the duty cycle of each cycle of the first signal is greater than 50%.

When the hard disk status signal is a constant low-level signal, the duty cycle of each cycle of the first signal is less than 50%.

In the previous text, one type of hard disk status signal was described. In the optional embodiments, the hard disk status signal includes different types of signals. Optionally, the hard disk status signal may include square wave signals and constant-level signals.

The first signal is obtained by the hard disk by modulating a signal with a level width corresponding to the hard disk log data and the hard disk status signal, after the hard disk has converted the hard disk log data into a signal with a level width corresponding to the hard disk log data.

When the hard disk status signal is a square wave signal, a maximum duty cycle within a signal cycle of the hard disk log data is less than a first duty cycle, and/or the minimum duty cycle of the first signal is greater than the second duty cycle.

The first duty cycle refers to the minimum duty cycle in the first signal corresponding to the constant-level signal when the constant-level signal is a constant high-level signal.

The second duty cycle refers to the maximum duty cycle in the first signal corresponding to the constant-level signal when the constant-level signal is a constant low-level signal.

In the optional embodiments, in addition to the case mentioned in the embodiment above where the first signal carries the modulated hard disk log data and the modulated hard disk status signal simultaneously, the first signal may also carry the modulated hard disk log data and the modulated hard disk status signal in a time-division manner. For details, refer to the description of the time-division carrying manner in the previous section.

For the case where the first signal carries the modulated hard disk log data and the modulated hard disk status signal simultaneously, in the optional embodiments, the baseboard management controller may demodulate only the hard disk log data, i.e., demodulate the first signal to obtain the hard disk log data. This step includes:

By measuring the pulse width of each cycle of the first signal to obtain digital data corresponding to the hard disk log data, the digital data is then parsed into hard disk log data. For the detailed process, refer to the previous section, which is not to be repeated here.

For the case where the first signal carries the modulated hard disk log data and the modulated hard disk status signal simultaneously, the baseboard management controller is further configured to demodulate, according to a signal type of the hard disk status signal, the hard disk status data from a signal cycle configured to demodulate the hard disk log data.

For the process of the baseboard management controller demodulating the hard disk status data, the present application provides the following demodulation methods:

In the optional embodiments, the signal type of the hard disk status signal includes a square wave signal.

Demodulating, according to the signal type of the hard disk status signal, the hard disk status data from a signal cycle configured to demodulate the hard disk log data includes:

demodulating, according to high-low level transition in the first signal, hard disk status data.

It can be understood that this demodulation method corresponds to the modulation method mentioned earlier, wherein the signal type of the hard disk status signal includes a square wave signal.

In the optional embodiments, demodulating, according to high-low level transition in the first signal, hard disk status data includes:

after demodulating the hard disk log data, replacing the first signal in each cycle with a square wave signal to obtain the hard disk status signal; and

demodulating, according to the hard disk status signal, the hard disk status data.

It can be understood that this demodulation method corresponds to the modulation method mentioned earlier, wherein the signal type of the hard disk status signal is modulated by high-low level transition.

In the optional embodiments, demodulating, according to high-low level transition in the first signal, hard disk status data includes:

after demodulating the hard disk log data, adjusting, according to a pulse width of the square wave signal, a pulse width of each cycle of the first signal to obtain the hard disk status signal; and

demodulating, according to the hard disk status signal, the hard disk status data.

It can be understood that this demodulation method corresponds to the method mentioned earlier, wherein the pulse width is adjusted.

In the optional embodiments, the signal type of the hard disk status signal includes a constant-level signal.

Demodulating, according to the signal type of the hard disk status signal, the hard disk status data from a signal cycle configured to demodulate the hard disk log data includes:

demodulating, according to the constant-level signal having a large proportion in the signal cycle of the first signal, the hard disk status data.

In the optional embodiments, demodulating, according to the constant-level signal having a large proportion in the signal cycle of the first signal, the hard disk status data includes:

after demodulating the hard disk log data, replacing the first signal with the constant-level signal having a large proportion in the signal cycle of the first signal to obtain the hard disk status signal; and

demodulating, according to the hard disk status signal, the hard disk status data.

In the optional embodiments, demodulating, according to the constant-level signal having a large proportion in the signal cycle of the first signal, the hard disk status data includes:

after demodulating the hard disk log data, replacing an inverted-level signal corresponding to the constant-level signal having a large proportion in the signal cycle of the first signal with the constant-level signal having a large proportion in the signal cycle of the first signal to obtain the hard disk status signal; and

demodulating, according to the hard disk status signal, the hard disk status data.

In the optional embodiments, the signal type of the hard disk status signal includes a single constant-level signal, or the signal type of the hard disk status signal includes a constant high-level signal and a constant low-level signal.
Demodulating, according to the signal type of the hard disk status signal, the hard disk status data from a signal cycle configured to demodulate the hard disk log data includes:

after demodulating the hard disk log data, restoring a signal cycle of the first signal with a duty cycle greater than 50% to a constant high-level signal, and restoring a signal cycle of the first signal with a duty cycle less than 50% to a constant low-level signal, to obtain the hard disk status signal; and

demodulating, according to the hard disk status signal, the hard disk status data.

In the optional embodiments, the signal type of the hard disk status signal includes a square wave signal and a constant-level signal.
Demodulating, according to the signal type of the hard disk status signal, the hard disk status data from a signal cycle configured to demodulate the hard disk log data includes:

when the constant-level signal is a constant high-level signal, after demodulating the hard disk log data, restoring a signal cycle of the first signal with a duty cycle less than a first duty cycle to a square wave signal, and restoring a signal cycle of the first signal with a duty cycle greater than the first duty cycle to a constant high-level signal, to obtain the hard disk status signal;

when the constant-level signal is a constant low-level signal, after demodulating the hard disk log data, restoring a signal cycle of the first signal with a duty cycle greater than a second duty cycle to a square wave signal, and restoring a signal cycle of the first signal with a duty cycle less than the second duty cycle to a constant low-level signal, to obtain the hard disk status signal;

when the constant-level signal includes a constant high-level signal and a constant low-level signal, after demodulating the hard disk log data, restoring a signal cycle of the first signal with a duty cycle less than the first duty cycle and greater than the second duty cycle to a square wave signal, restoring a signal cycle of the first signal with a duty cycle greater than the first duty cycle to a constant high-level signal, and restoring a signal cycle of the first signal with a duty cycle less than the second duty cycle to a constant low-level signal, to obtain the hard disk status signal; and

demodulating, according to the hard disk status signal, the hard disk status data.

Finally, on the basis of the time-division carrying manner of the first signal, the baseboard management controller demodulates the signal on the basis of the modulated hard disk signal. Demodulating the first signal to obtain the hard disk log data includes:

after demodulating the hard disk status data from the first signal according to the signal type of the hard disk status signal, demodulating the hard disk log data from signal cycles of the first signal that do not conform to the signal type of the hard disk status signal; or

measuring the pulse width of each cycle of the first signal to obtain digital data corresponding to the hard disk log data, parsing the digital data into the hard disk log data, and demodulating the hard disk status data from cycles with pulse widths not corresponding to the digital data.

The previous text mainly describes the hard disk monitoring method from the perspective of the baseboard management controller, detailing the corresponding demodulation methods for cases where the first signal either simultaneously carries or time-division carries the data, as well as for different types of hard disk status signals. For further details, refer to the description of the hard disk monitoring system section in the present application. On this basis, as an essential component of the entire hard disk monitoring system, the baseboard management controller is further configured to perform other control tasks. Optionally, the method further includes: controlling, according to the hard disk status data, a status control circuit to drive a controlled element corresponding to the hard disk status pin.

In an optional embodiment, the hard disk status pin is the hard disk status indicator light control pin, and the status control circuit is an amplifier drive circuit.

Controlling, according to the hard disk status data, a status control circuit to drive a controlled element corresponding to the hard disk status pin includes:

when the first signal is demodulated to obtain the hard disk status data corresponding to a turn-on command, controlling the amplifier drive circuit to generate a square wave signal to illuminate a hard disk status indicator light corresponding to the hard disk status pin; and

when the first signal is demodulated to obtain the hard disk status data corresponding to a turn-off command, stopping controlling the amplifier drive circuit to generate the square wave signal, thereby extinguishing the hard disk status indicator light.

For the case where the baseboard management controller includes a baseboard management controller chip and a complex programmable logic device, demodulating, by the baseboard management controller, the first signal to obtain the hard disk log data includes: demodulating, by the complex programmable logic device, the first signal to obtain the hard disk log data, and sending an interrupt signal to the baseboard management controller chip via the interrupt signal line.

Monitoring the hard disk according to the hard disk log data includes: reading, by the baseboard management controller chip, upon receiving the interrupt signal, the hard disk log data from the complex programmable logic device via the inter-integrated circuit bus, and monitoring the hard disk according to the hard disk log data.

Optionally, in this embodiment, on the basis of the architecture of the baseboard management controller chip and the complex programmable logic device, the complex programmable logic device notifies the baseboard management controller chip to read the hard disk log collected by the complex programmable logic device using an interrupt method.

Additionally, the baseboard management controller includes a baseboard management controller chip and a complex programmable logic device.

Demodulating the first signal to obtain the hard disk log data includes: demodulating, by the complex programmable logic device, the first signal to obtain the hard disk log data.

Monitoring the hard disk according to the hard disk log data includes: polling, by the baseboard management controller chip, the inter-integrated circuit bus, and upon polling the complex programmable logic device, reading the hard disk log data and monitoring the hard disk according to the hard disk log data.

Optionally, in this embodiment, on the basis of the architecture of the baseboard management controller chip and the complex programmable logic device, the baseboard management controller chip reads the hard disk log collected by the complex programmable logic device using a polling method.

As an optional embodiment, since hard disk log data may be lost or transmitted incorrectly during transmission, it is necessary to promptly notify the hard disk to retransmit the hard disk log data in order to enhance the real-time out-of-band monitoring of the hard disk. In a case where a plurality of hard disk status pins are selected to be connected to the baseboard management controller, a part of the hard disk status pins can be configured to output the first signal carrying hard disk log data, while the other part of the hard disk status pins can be configured to receive control commands sent by the baseboard management controller. The control command can include at least one of the following: a command to resend the hard disk log, a command to send the hard disk log in advance, or a command to send specified hard disk log data.

However, in practical applications, there may not be a plurality of hard disk status pins available for connection to the baseboard management controller. For example, there may be only one hard disk status pin connected to the baseboard management controller. In this case, a negotiation method needs to be adopted to allow the baseboard management controller to reverse-transmit the control command during the gap when the hard disk status pin outputs the first signal. The hard disk monitoring method according to the embodiments of the present application further includes: when hard disk status data obtained by demodulating the first signal is non-control data or when the demodulated first signal does not include the hard disk status data, and when the current time falls within a negotiation time period agreed upon with the hard disk, sending a reverse transmission request to the hard disk status pin, and, upon receiving an allow signal sent by the hard disk, sending a control command for the hard disk to the hard disk status pin.

Optionally, demodulating the first signal to obtain the hard disk log data includes: measuring a pulse amplitude of the first signal to obtain digital data corresponding to the hard disk log data, and parsing the digital data into the hard disk log data.

Optionally, demodulating the first signal to obtain the hard disk log data includes: measuring level widths of the first signal that fall within a target width range to obtain digital data corresponding to the hard disk log data, and parsing the digital data into the hard disk log data, wherein the target width range is a width range obtained from level widths corresponding to the digital data.

Optionally, measuring level widths of the first signal that fall within a target width range to obtain digital data corresponding to the hard disk log data, and parsing the digital data into the hard disk log data includes: measuring a level width of the current level in the first signal; detecting whether the level width of the current level falls within the target width range; when the level width of the current level falls within the target width range, determining the level width of the current level as the digital data corresponding to the current level; and looking up, from a correspondence between digital data and data encoding, data encoding corresponding to the digital data of the current level to obtain the hard disk log data.

Optionally, after detecting whether the level width of the current level falls within the target width range, the method further includes: when the level width of the current level does not fall within the target width range, discarding a level width of a target level.

Optionally, demodulating the first signal to obtain the hard disk log data includes: measuring a level width of levels of a target type in the first signal to obtain digital data corresponding to the hard disk log data, and parsing the digital data into the hard disk log data, wherein the target type is a level type in the first signal that is permitted to carry the hard disk log data.

Optionally, before measuring a level width of levels of a target type in the first signal to obtain digital data corresponding to the hard disk log data, and parsing the digital data into the hard disk log data, the method further includes: determining hard disk status according to the levels in the first signal; and determining the target type according to the hard disk status.

Optionally, determining, according to the levels in the first signal, hard disk status includes: detecting a level width of an inverted-level signal in the first signal, wherein the hard disk status signal is a constant-level signal being configured to indicate that the hard disk is in an idle state, and the inverted-level signal is a level opposite in polarity to the constant-level signal; and determining, according to the level width of the inverted-level signal, the hard disk status.

Optionally, determining, according to the hard disk status, the target type includes: when the hard disk status is in an idle state, determining the target type as a level type having the same polarity as the constant-level signal.

Optionally, determining, according to the hard disk status, the target type includes: when the hard disk status is in an active state, determining the target type as a high-level type or a low-level type.

Since this part of the content is the same as what was mentioned in the hard disk monitoring system section, for details, refer to the previous section, which is not to be repeated here.

It can be understood that the control commands mentioned above include at least one of the following: a command to resend the hard disk log, a command to send the hard disk log in advance, or a command to send specified hard disk log data.

Optionally, the hard disk monitoring method further includes:

sending pin configuration information to the hard disk, enabling the hard disk to determine the hard disk status pin used for outputting hard disk log data and the modulation configuration information of the first signal according to the pin configuration information.

Optionally, sending pin configuration information to the hard disk includes:

when hard disk status data obtained by demodulating the first signal is non-control data or data obtained by demodulating the first signal does not include the hard disk status data, and when the current time falls within a negotiation time period agreed upon with the hard disk, sending a reverse transmission request to the hard disk status pin, and upon receiving the allow signal sent by the hard disk, sending the pin configuration information to the hard disk via the hard disk status pin.

The hard disk monitoring method was described in detail from the perspective of the baseboard management controller in the previous text. On the basis of this, the present application further provides an alternative hard disk monitoring method, described from the perspective of the hard disk. FIG. 11 is a flowchart of a second method for monitoring a hard disk according to an embodiment of the present application. As shown in FIG. 11, a method for monitoring a hard disk includes:

At S4, a first signal is modulated according to hard disk log data and a hard disk status signal that corresponds to a hard disk status pin.

At S5, the first signal is sent to a baseboard management controller via the hard disk status pin, the baseboard management controller demodulates the first signal to obtain the hard disk log data before monitoring the hard disk according to the hard disk log data.

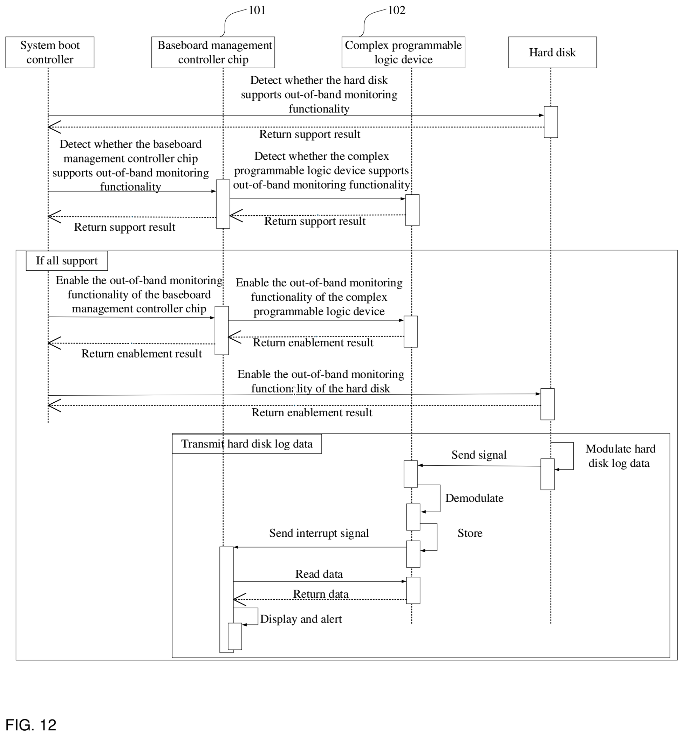

FIG. 12 is a flowchart of a third method for monitoring a hard disk according to an embodiment of the present application.

As shown in FIG. 12, the embodiments of the present application provide a method for monitoring a hard disk that uses a baseboard management controller chip and a complex programmable logic device to monitor the hard disk.

First, the system boot controller detects whether the hard disk, baseboard management controller chip, and complex programmable logic device all support out-of-band monitoring functionality, and receives the support results for out-of-band monitoring functionality from the hard disk, baseboard management controller chip, and complex programmable logic device. In the embodiments of the present application, it is not specified whether the system boot controller first detects the hard disk or the baseboard management controller chip and the complex programmable logic device. Both can be detected simultaneously or in a predetermined order. FIG. 12 is provided merely as a specific example to illustrate the flow of this solution for convenience.

Optionally, in a case where the hard disk, baseboard management controller chip, and complex programmable logic device all support out-of-band monitoring functionality, the out-of-band monitoring functionality of the hard disk, baseboard management controller chip, and complex programmable logic device is enabled, and the functionality enablement result is returned. Similarly, in the embodiments of the present application, it is not specified whether the system boot controller first enables the out-of-band monitoring functionality of the hard disk or the out-of-band monitoring functionality of the baseboard management controller chip and complex programmable logic device. Both can be enabled simultaneously or in a predetermined order. FIG. 12 is provided merely as a specific example to illustrate the flow of this solution for convenience.

After the out-of-band monitoring functionality of the hard disk, baseboard management controller chip, and complex programmable logic device have all been successfully enabled, the hard disk can then perform the step of transmitting hard disk log data externally, allowing the baseboard management controller chip and complex programmable logic device to monitor the hard disk out-of-band.

Optionally, the hard disk modulates the hard disk log data and the hard disk status signal that corresponds to the hard disk status pin to output a target signal to the complex programmable logic device. The complex programmable logic device demodulates the target signal to obtain the hard disk log data, stores it locally, and sends an interrupt signal to the baseboard management controller chip to alert the baseboard management controller chip to read the data. The baseboard management controller chip responds to the interrupt signal, reads the hard disk log data from the complex programmable logic device, displays it on its target interface, and issues a warning in a case where the hard disk log data does not meet preset threshold conditions.

It can be understood that the detailed content for the baseboard management controller and the hard disk has been illustrated in the hard disk monitoring system mentioned above, so it will not be repeated here.

It is to be noted that in the embodiments of the method for monitoring a hard disk of the present application, part steps or features may be omitted or not executed. For the sake of clarity, the division of hardware or software functional modules is not the only implementation form for the method for monitoring a hard disk according to the embodiments of the present application.

As an optional embodiment, the present application further discloses an apparatus for monitoring a hard disk, device, and a non-volatile computer readable storage medium corresponding to the methods described above.

The apparatus for monitoring a hard disk according to the embodiments of the present application, applied to the baseboard management controller, includes:

a first receiving module, configured to receive a first signal output by a hard disk through a hard disk status pin, the first signal being modulated according to hard disk log data and a hard disk status signal that corresponds to the hard disk status pin;

a first demodulation module, configured to demodulate the first signal to obtain hard disk log data; and

a monitoring module, configured to monitor the hard disk according to the hard disk log data.

Optionally, the apparatus further includes:
a second demodulation module, configured to demodulate, according to a signal type of the hard disk status signal, the hard disk status data from a signal cycle configured to demodulate the hard disk log data.

Optionally, the apparatus further includes:
a first control module, configured to control, according to the hard disk status data, a status control circuit to drive a controlled element corresponding to the hard disk status pin.

Optionally, the apparatus further includes:
a second control module, configured to send, when hard disk status data obtained by demodulating the first signal is non-control data or when the demodulated first signal does not include the hard disk status data, and when the current time falls within a negotiation time period agreed upon with the hard disk, a reverse transmission request to the hard disk status pin, and, upon receiving an allow signal sent by the hard disk, send a control command for the hard disk to the hard disk status pin.

Optionally, the first demodulation module is configured to: measure a pulse amplitude of the first signal to obtain digital data corresponding to the hard disk log data, and parse the digital data into the hard disk log data.

Optionally, the first demodulation module is configured to: measure level widths of the first signal that fall within a target width range to obtain digital data corresponding to the hard disk log data, and parse the digital data into the hard disk log data, wherein the target width range is a width range obtained from level widths corresponding to the digital data.

Optionally, the first demodulation module is configured to: measure a level width of the current level in the first signal; detect whether the level width of the current level falls within the target width range; when the level width of the current level falls within the target width range, determine the level width of the current level as the digital data corresponding to the current level; and look up, from a correspondence between digital data and data encoding, data encoding corresponding to the digital data of the current level to obtain the hard disk log data.

Optionally, the first demodulation module is configured to discard, after detecting whether the level width of the current level falls within the target width range, when the level width of the current level does not fall within the target width range, a level width of a target level.

Optionally, the first demodulation module is configured to measure a level width of level of a target type in the first signal to obtain digital data corresponding to the hard disk log data, and parse the digital data into the hard disk log data, wherein the target type is a level type in the first signal that is permitted to carry the hard disk log data.

Optionally, the first demodulation module is configured to: before measuring level widths of levels of a target type in the first signal to obtain digital data corresponding to the hard disk log data and parsing the digital data into the hard disk log data, determine hard disk status according to the levels in the first signal; and determine the target type according to the hard disk status.

Optionally, the first demodulation module is configured to: detect a level width of an inverted-level signal in the first signal, wherein the hard disk status signal is a constant-level signal being configured to indicate that the hard disk is in an idle state, and the inverted-level signal is a level opposite in polarity to the constant-level signal; and determine, according to the level width of the inverted-level signal, the hard disk status.

Optionally, the first demodulation module is configured to determine, when the hard disk status is in an idle state, the target type as a level type having the same polarity as the constant-level signal.

Optionally, the first demodulation module is configured to determine, when the hard disk status is in an active state, the target type as a high-level type and a low-level type.

The apparatus for monitoring a hard disk according to the embodiments of the present application, applied to the hard disk, includes:

a modulation module, configured to modulate, according to hard disk log data and a hard disk status signal that corresponds to a hard disk status pin, to obtain a first signal; and

a transmission module, configured to send the first signal to a baseboard management controller via the hard disk status pin, such that the baseboard management controller demodulates the first signal to obtain the hard disk log data before monitoring the hard disk according to the hard disk log data.

It is to be noted that in the embodiments of the apparatus for monitoring a hard disk according to the present application, the division of units is merely a logical functional division, and other division methods may be used. The connections between different units may be made using electrical, mechanical, or other connection methods. Separated units may be located in the same physical location or distributed across a plurality of network nodes. Each unit may be implemented in hardware or as a software functional unit. That is, depending on the actual needs, part or all of the units according to the embodiments of the present application can be selected and implemented using the corresponding connection methods or integration approaches to achieve the objectives of the embodiments of the present application.

Since the embodiments of the apparatus section correspond to the embodiments of the method section, refer to the descriptions of the method section for the embodiments of the apparatus section, which are not to be repeated here.

FIG. 13 is a schematic structural diagram of a device for monitoring a hard disk according to an embodiment of the present application.

As shown in FIG. 13, the device for monitoring a hard disk according to the embodiments of the present application includes:

a memory 1110 configured to store a computer program 1111; and

a processor 1120 configured to execute the computer program 1111 that, when executed by the processor 1120, performs steps of the method for monitoring a hard disk according to any one of the embodiments above.

The processor 1120 may include one or more processing cores, such as a 3-core processor, an 8-core processor, etc. The processor 1120 may be implemented in hardware in at least one of the following forms: digital signal processing (DSP), field-programmable gate array (FPGA), or programmable logic array (PLA). The processor 1120 may further include a main processor and a coprocessor. The main processor is configured to process data in the awake state and is also referred to as the central processing unit (CPU). The coprocessor is configured to process data in the standby state and is a low-power processor. In some optional embodiments, the processor 1120 may integrate a graphics processing unit (GPU), which is configured to handle the rendering and drawing of content required for the display screen. In some optional embodiments, the processor 1120 may further include an artificial intelligence (AI) processor, which is configured to handle computational operations related to machine learning.

The memory 1110 may include one or more non-volatile computer readable storage media, which can be non-transitory. The memory 1110 may further include high-speed random access memory, as well as non-volatile storage, such as one or more disk storage devices and flash memory devices. In the embodiments of the present application, the memory 1110 is at least configured to store the following computer program 1111 that, when loaded and executed by the processor 1120, is capable of performing the relevant steps of the hard disk monitoring method disclosed in any of the preceding embodiments. Additionally, the resources stored in the memory 1110 may further include the operating system 1112, data 1113, and the like, with the storage method being either temporary or permanent. The operating system 1112 may be Windows, Linux, or other types of operating systems for hard disk monitoring. The data 1113 may include, but is not limited to, the data involved in the methods above.

In some optional embodiments, the device for monitoring a hard disk may further include a display screen 1130, a power supply 1140, a communication interface 1150, an input/output interface 1160, a sensor 1170, and a communication bus 1180.

A person skilled in the art will understand that the structure shown in FIG. 13 does not limit the device for monitoring a hard disk, and it may include more or fewer assemblies than those illustrated.

The device for monitoring a hard disk according to the embodiments of the present application includes a memory and a processor. The processor, when executing the program stored in the memory, can perform steps of the method for monitoring a hard disk according to the embodiments above, with the same effects.

The embodiments of the present application provide a non-volatile computer readable storage medium having a computer program stored thereon, the computer program, when executed by a processor, performing steps of the method for monitoring a hard disk according to any one of the embodiments above.

The non-volatile computer readable storage medium may include various non-volatile readable storage media that can store program code, such as USB drives, external hard drives, read-only memory (ROM), random access memory (RAM), magnetic disks, optical discs, and the like.

For the introduction of the non-volatile computer readable storage medium according to the embodiments of the present application, refer to the method embodiments above. The effects it achieves are the same as those of the method for monitoring a hard disk according to the embodiments of the present application, which are not to be repeated here in the present application.

A detailed description has been provided above regarding the system, method, apparatus, and device for monitoring a hard disk, and the non-volatile computer readable storage medium according to the present application. The descriptions of each embodiment in the specification are presented progressively, with each embodiment highlighting the differences from the others. The similar or identical parts between the embodiments can refer to each other. As for the apparatus, device, and non-volatile computer readable storage medium disclosed in the embodiments, the descriptions are relatively simple because they correspond to the methods disclosed in the embodiments. For related details, refer to the method section for explanation. It is to be noted that, for a person of ordinary skill in the art, various modifications and improvements can be made to the present application without departing from the principles of the present application, and such modifications and improvements also fall within the scope of the protection of the present application.

It is also to be noted that terms such as first and second, etc., are used in this specification merely to distinguish one entity or operation from another entity or operation and do not necessarily require or imply any actual relationship or order between these entities or operations. Furthermore, the terms "comprise", "include", or any other variation thereof are intended to cover non-exclusive inclusion, such that a process, method, article, or device comprising a list of elements not only comprises those elements but may comprise other elements that are not explicitly listed, or elements that are inherent to such a process, method, article, or device. In the absence of further limitations, an element defined by the phrase "comprise a ..." does not exclude the existence of additional identical elements in the process, method, article, or device that comprises the element.

**Claims**

1. A system for monitoring a hard disk, comprising a baseboard management controller and a hard disk, wherein

   a pin of the baseboard management controller is connected to a hard disk status pin of the hard disk;
   the hard disk is configured to modulate hard disk log data and a hard disk status signal that corresponds to the hard disk status pin to obtain a first signal, and is configured to output the first signal via the hard disk status pin; and
   the baseboard management controller is configured to demodulate the first signal to obtain the hard disk log data and monitor the hard disk according to the hard disk log data.

2. The system for monitoring a hard disk according to claim 1, wherein the first signal simultaneously carries the modulated hard disk log data and the modulated hard disk status signal.

3. The system for monitoring a hard disk according to claim 2, wherein each level width of one or more level widths of the first signal correspond to a data bit of one or more data bits of the hard disk log data.

4. The system for monitoring a hard disk according to claim 2 or 3, wherein high-low level transition in the first signal correspond to the hard disk status signal.

5. The system for monitoring a hard disk according to claim 4, wherein the hard disk status signal is a square wave signal, and the first signal is a signal obtained by the hard disk converting the hard disk log data into a signal with a level width corresponding to the hard disk log data, and then replacing replacing the square wave signal with the signal with the level width corresponding to the hard disk log data; and wherein the level width corresponding to the hard disk log data differs from a level width of the square wave signal.

6. The system for monitoring a hard disk according to claim 4, wherein the hard disk status signal is a square wave signal, and the first signal is a signal obtained by the hard disk converting the hard disk log data into a signal with a level width corresponding to the hard disk log data, and then adjusting, according to the level width corresponding to the hard disk log data, a level width of each signal cycle corresponding to the hard disk log data in the square wave signal; and wherein the level width corresponding to the hard disk log data differs from a level width of the square wave signal.

7. The system for monitoring a hard disk according to claim 2 or 3, wherein a level signal having a large proportion in the first signal corresponds to the hard disk status signal.

8. The system for monitoring a hard disk according to claim 7, wherein the hard disk status signal is a constant-level signal, and the first signal is a signal obtained by, the hard disk converting the hard disk log data into a signal with a level width corresponding to the hard disk log data, and then replacing the constant-level signal of corresponding durations with the signal with the level width corresponding to the hard disk log data; and wherein, in each signal cycle of the first signal, a proportion of an inverted-level signal of the constant-level signal is less than 50%.

9. The system for monitoring a hard disk according to claim 7, wherein the hard disk status signal is a constant-level signal, and the first signal is a signal obtained by the hard disk converting the hard disk log data into a signal with a level width corresponding to the hard disk log data and generating, according to the signal with a level width corresponding to the hard disk log data, an inverted-level signal corresponding to the constant-level signal, and then inserting the inverted-level signal into the constant-level signal; and wherein, in each signal cycle of the first signal, a proportion of an inverted-level signal of the constant-level signal is less than 50%.

10. The system for monitoring a hard disk according to claim 2, wherein the hard disk status signal comprises a single constant-level signal, or the hard disk status signal comprises a constant high-level signal and a constant low-level signal;

the first signal is obtained by the hard disk by modulating a signal with a level width corresponding to the hard disk log data and the hard disk status signal, after the hard disk has converted the hard disk log data into a signal with a level width corresponding to the hard disk log data;
when the hard disk status signal is a constant high-level signal, a duty cycle of each cycle of the signal with a level width corresponding to the hard disk log data is greater than 50%; and
when the hard disk status signal is a constant low-level signal, the duty cycle of each cycle of the signal with a level width corresponding to the hard disk log data is less than 50%.

11. The system for monitoring a hard disk according to claim 2, wherein the hard disk status signal comprises a square wave signal and a constant-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;
when the hard disk status signal is a square wave signal, a maximum duty cycle within a signal cycle of the hard disk log data is less than a first duty cycle, and/or a minimum duty cycle within a signal cycle of the hard disk log data is greater than a second duty cycle;
when the constant-level signal is a constant high-level signal, the first duty cycle is a minimum duty cycle of the first signal corresponding to the constant-level signal; and
when the constant-level signal is a constant low-level signal, the second duty cycle is a maximum duty cycle of the first signal corresponding to the constant-level signal.

**12.** The system for monitoring a hard disk according to claim 1, wherein the first signal carries, in a time-division manner, the modulated hard disk log data and the modulated hard disk status signal.

**13.** The system for monitoring a hard disk according to claim 1, wherein demodulating, by the baseboard management controller, the first signal to obtain the hard disk log data comprises:
measuring, by the baseboard management controller, a level width of the first signal to obtain digital data corresponding to the first signal, and parsing the digital data into the hard disk log data.

**14.** The system for monitoring a hard disk according to claim 1, wherein the baseboard management controller is further configured to demodulate, according to a signal type of the hard disk status data corresponding to the hard disk status signal, the first signal to obtain the hard disk status data.

**15.** The system for monitoring a hard disk according to claim 14, wherein demodulating, by the baseboard management controller, the first signal to obtain the hard disk log data comprises:

measuring, by the baseboard management controller, a level width of the first signal to obtain digital data corresponding to the hard disk log data, and parsing the digital data into the hard disk log data; and
demodulating, by the baseboard management controller according to a signal type of the hard disk status data corresponding to the hard disk status signal, the first signal to obtain the hard disk status data comprises:
when the signal type of the hard disk status data comprise a constant-level signal, demodulating, by the baseboard management controller according to a signal having a large proportion in the first signal, the hard disk status data.

**16.** The system for monitoring a hard disk according to claim 14 or 15, wherein demodulating, by the baseboard management controller according to a signal type of the hard disk status data corresponding to the hard disk status signal, the first signal to obtain the hard disk status data comprises:
when the signal types of the hard disk status data comprise a square wave signal, demodulating, by the baseboard management controller according to high-low level transition in the first signal, the hard disk status data.

**17.** The system for monitoring a hard disk according to claim 14, the system for monitoring a hard disk further comprises a status control circuit corresponding to the hard disk status pin, wherein a controlled terminal of the status control circuit is connected to the baseboard management controller, and an output terminal of the status control circuit is connected to a drive terminal of a controlled element corresponding to the hard disk status pin; and
the baseboard management controller is further configured to control, according to the hard disk status data, the status control circuit to drive the controlled element.

**18.** The system for monitoring a hard disk according to claim 17, wherein the hard disk status pin is a hard disk status indicator light control pin, and the status control circuit is an amplifier drive circuit; and
controlling, by the baseboard management controller according to the hard disk status data, the status control circuit to drive the controlled element comprises:
when the baseboard management controller demodulates the first signal to obtain the hard disk status data corresponding to a turn-on command, controlling the amplifier drive circuit to generate a square wave signal to illuminate a hard disk status indicator light corresponding to the hard disk status pin; and
when the baseboard management controller demodulates the first signal to obtain the hard disk status data corresponding to a turn-off command, stopping controlling the amplifier drive circuit to generate the square wave signal, thereby extinguishing the hard disk status indicator light.

**19.** The system for monitoring a hard disk according to claim 1, wherein the baseboard management controller comprises a baseboard management controller chip and a complex programmable logic device;

the baseboard management controller chip is connected to the complex programmable logic device via an inter-integrated circuit bus and an interrupt signal line, and a data input/output pin of the complex programmable logic device is connected to the hard disk status pin;
the complex programmable logic device is configured to demodulate the first signal to obtain the hard disk log data and to send an interrupt signal to the baseboard management controller chip via the interrupt signal line; and
the baseboard management controller chip is configured to read, upon receiving the interrupt signal, the hard disk log data from the complex programmable logic device via the inter-integrated circuit bus and monitor the hard disk according to the hard disk log data.

**20.** The system for monitoring a hard disk according to claim 1, wherein the baseboard management controller comprises a baseboard management controller chip and a complex programmable logic device;

the baseboard management controller chip is connected to the complex programmable logic device via an inter-integrated circuit bus, and a data input/output pin of the complex programmable logic device is connected to the hard disk status pin;

the complex programmable logic device is configured to demodulate the first signal to obtain the hard disk log data; and

the baseboard management controller chip is configured to poll the inter-integrated circuit bus, and upon polling the complex programmable logic device, read the hard disk log data, and monitor the hard disk according to the hard disk log data.

21. The system for monitoring a hard disk according to claim 1, wherein the baseboard management controller is further configured to send, when hard disk status data obtained by demodulating the first signal is non-control data or data obtained by demodulating the first signal does not comprise the hard disk status data, and when the current time falls within a negotiation time period agreed upon with the hard disk, a reverse transmission request to the hard disk status pin, and, upon receiving an allow signal sent by the hard disk, send a control command for the hard disk to the hard disk status pin; and

the hard disk is further configured to execute the control command.

22. The system for monitoring a hard disk according to claim 1, wherein demodulating, by the baseboard management controller, the first signal to obtain the hard disk log data comprises:
measuring, by the baseboard management controller, a pulse amplitude of the first signal to obtain digital data corresponding to the hard disk log data, and parsing the digital data into the hard disk log data.

23. The system for monitoring a hard disk according to claim 1, wherein the hard disk is further configured to:

during sending of the hard disk status signal via the hard disk status pin, when the hard disk status signal is modulated within a current level of the hard disk status signal, detect timeliness of obtaining the first signal by inverting the level within the current level, wherein the timeliness is configured to indicate whether inverting the level within the current level is allowed to obtain the first signal; and

process the current level according to the timeliness.

24. The system for monitoring a hard disk according to claim 23, wherein the hard disk is further configured to:

detect a difference between a level width of the first signal and a level width already output of the current level;

when the difference is greater than a difference threshold, determine that the timeliness is configured to indicate that inverting the level within the current level is allowed to obtain the first signal, the difference threshold being determined according to a minimum duration required for level inversion; and

when the difference is less than or equal to the difference threshold, determine that the timeliness is configured to indicate that inverting the level within the current level is not allowed to obtain the first signal.

25. The system for monitoring a hard disk according to claim 23, wherein the hard disk is further configured to:

when the timeliness is configured to indicate that inverting the level within the current level is allowed to obtain the first signal, send the first signal within the current level; and

when the timeliness is configured to indicate that inverting the level within the current level is not allowed to obtain the first signal, send the first signal after the current level with a target level width, wherein the target level width is a level width that prevents the baseboard management controller from demodulating the hard disk log data in the first signal.

26. The system for monitoring a hard disk according to claim 25, wherein the target level width is greater than a maximum value of a target width range, the target width range being a range of level widths with digital data corresponding to the target level width.

27. The system for monitoring a hard disk according to claim 1, wherein the hard disk is further configured to:
when the hard disk status signal switches during the output of the first signal, control modulation of a target level and a reference level according to the level type of the currently sent target level and a switching of the hard disk status signal, wherein the reference level is a level following the target level.

28. The system for monitoring a hard disk according to claim 27, wherein the hard disk is further configured to:
when the hard disk status signal switches from a square wave signal to a constant-level signal, and the level type of the target level is the same as a level type of the constant-level signal, insert an inverted-level signal of the constant-level signal following the target level, and modulate, according to the hard disk status signal being the constant-level signal, the reference level.

29. The system for monitoring a hard disk according to claim 27, wherein the hard disk is further configured to:

when the hard disk status signal switches from a square wave signal to a constant-level signal, and the level type of the target level is opposite to a level type of the constant-level signal, modulate, according to the hard disk status signal being the square wave signal, the next level of the target level following the target level; and insert an inverted-level signal of the constant-level signal following the next level of the target level, and modulate, according to the hard disk status signal being the constant-level signal, the reference level.

30. The system for monitoring a hard disk according to claim 27, wherein the hard disk is further configured to:
when the hard disk status signal switches from a constant-level signal to a square wave signal, and a pulse type of the target pulse is the same as a pulse type of the constant-level signal, invert the level following the target level, and modulate, according to the hard disk status signal being the square wave signal, the reference level.

31. The system for monitoring a hard disk according to claim 27, wherein the hard disk is further configured to:
when the hard disk status signal switches from a constant-level signal to a square wave signal, and a level type of the target level is opposite to a level type of the constant-level signal, modulate, according to the hard disk status signal being the square wave signal, a reference pulse following the target level.

32. The system for monitoring a hard disk according to claim 1, wherein demodulating, by the baseboard management controller, the first signal to obtain the hard disk log data comprises:
measuring, by the baseboard management controller, a level width of the first signal that fall within a target width range to obtain digital data corresponding to the hard disk log data, and parsing the digital data into the hard disk log data, wherein the target width range is a range of level widths with digital data corresponding to the target level width.

33. The system for monitoring a hard disk according to claim 32, wherein measuring, by the baseboard management controller, a level width of the first signal that fall within a target width range to obtain digital data corresponding to the hard disk log data, and parsing the digital data into the hard disk log data comprises:

measuring, by the baseboard management controller, a level width of the current level in the first signal; detecting, by the baseboard management controller, whether the level width of the current level falls within the target width range; when the level width of the current level falls within the target width range, determining, by the baseboard management controller, the level width of the current level as the digital data corresponding to the current level; and looking up, by the baseboard management controller from a correspondence between digital data and data encoding, data encoding corresponding to the digital data of the current level to obtain the hard disk log data.

34. The system for monitoring a hard disk according to claim 33, wherein
after detecting whether the level width of the current level falls within the target width range, when the level width of the current level does not fall within the target width range, the baseboard management controller discards a level width of a target level.

35. The system for monitoring a hard disk according to claim 32, wherein demodulating, by the baseboard management controller, the first signal to obtain the hard disk log data comprises:
measuring, by the baseboard management controller, a level width of a level of a target type in the first signal to obtain digital data corresponding to the hard disk log data, and parsing the digital data into the hard disk log data, wherein the target type is a level type in the first signal that is permitted to carry the hard disk log data.

36. The system for monitoring a hard disk according to claim 35, wherein

before measuring the level width of the level of the target type in the first signal to obtain digital data corresponding to the hard disk log data, and parsing the digital data into the hard disk log data, the baseboard management controller determines hard disk status according to a level in the first signal; and the baseboard management controller determines the target type according to the hard disk status.

37. The system for monitoring a hard disk according to claim 36, wherein determining, by the baseboard management controller according to the level in the first signal, hard disk status comprises:

detecting, by the baseboard management controller, a level width of an inverted-level signal in the first signal, wherein the hard disk status signal is a constant-level signal being configured to indicate that the hard disk is in an idle state, and the inverted-level signal is a level opposite in polarity to the constant-level signal; and

determining, by the baseboard management controller according to the level width of the inverted-level signal, the hard disk status.

38. The system for monitoring a hard disk according to claim 36, wherein determining, by the baseboard management controller according to the hard disk status, the target type comprises:
when the hard disk status is in an idle state, determining, by the baseboard management controller, the target type as a level type having the same polarity as the constant-level signal.

39. The system for monitoring a hard disk according to claim 36, wherein determining, by the baseboard management controller according to the hard disk status, the target type comprises:
when the hard disk status is in an active state, determining, by the baseboard management controller, the target type as a high-level type and a low-level type.

40. A baseboard management controller, configured to monitor a hard disk, wherein

the baseboard management controller is configured to demodulate a first signal output from a hard disk status pin of the hard disk to obtain hard disk log data, and is configured to to monitor the hard disk according to the hard disk log data; and
the first signal is modulated by the hard disk according to the hard disk log data and a hard disk status signal that corresponds to the hard disk status pin.

41. The baseboard management controller according to claim 40, wherein the first signal simultaneously carries the modulated hard disk log data and the modulated hard disk status signal.

42. The baseboard management controller according to claim 41, wherein each level width of one or more level widths of the first signal correspond to a data bit of one or more data bits of the hard disk log data.

43. The baseboard management controller according to claim 41 or 42, wherein high-low level transition in the first signal correspond to the hard disk status signal.

44. The baseboard management controller according to claim 41 or 42, wherein a level signal having a large proportion in the first signal corresponds to the hard disk status signal.

45. The baseboard management controller according to claim 41, wherein the hard disk status signal comprises a single constant-level signal, or the hard disk status signal comprises a constant high-level signal and a constant low-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;
when the hard disk status signal is a constant high-level signal, a duty cycle of each cycle of the signal with a level width corresponding to the hard disk log data is greater than 50%; and when the hard disk status signal is a constant low-level signal, the duty cycle of each cycle of the signal with a level width corresponding to the hard disk log data is less than 50%.

46. The baseboard management controller according to claim 41, wherein the hard disk status signal comprises a square wave signal and a constant-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;
when the hard disk status signal is a square wave signal, a maximum duty cycle of each signal cycle of the signal with a level width corresponding to the hard disk log data is less than a first duty cycle, and/or a minimum duty cycle of each signal cycle of the signal with a level width corresponding to the hard disk log data is greater than a second duty cycle;
when the constant-level signal is a constant high-level signal, the first duty cycle is a minimum duty cycle of the first signal corresponding to the constant-level signal; and
when the constant-level signal is a constant low-level signal, the second duty cycle is a maximum duty cycle of the first signal corresponding to the constant-level signal.

47. The baseboard management controller according to claim 40, wherein the first signal carries, in a time-division manner, the modulated hard disk log data and the modulated hard disk status signal.

48. The baseboard management controller according to claim 40, wherein demodulating, by the baseboard management controller, the first signal to obtain the hard disk log data comprises:
measuring, by the baseboard management controller, a level width of the first signal to obtain digital data corresponding to the hard disk log data, and parsing the digital data into the hard disk log data.

49. The baseboard management controller according to claim 41, wherein the baseboard management controller is further configured to demodulate, according to a signal type of the hard disk status signal, the hard disk status data from a signal cycle configured to demodulate the hard disk log data.

50. The baseboard management controller according to claim 49, wherein the signal type of the hard disk status signal comprises a square wave signal; and demodulating, by the baseboard management controller according to the signal type of the hard disk status signal, the hard disk status data from a signal cycle configured to demodulate the hard disk log data comprises:
demodulating, by the baseboard management controller according to high-low level transition in the first signal, the hard disk status data.

51. The baseboard management controller according to claim 50, wherein demodulating, by the baseboard management controller according to high-low level transition in the first signal, the hard disk status data comprises:

after demodulating the hard disk log data, replacing, by the baseboard management controller, the first signal with a square wave signal to obtain the hard disk status signal; and demodulating, according to the hard disk status signal, the hard disk status data.

52. The baseboard management controller according to claim 50, wherein demodulating, by the baseboard management controller according to high-low level transition in the first signal, the hard disk status data comprises:

after demodulating the hard disk log data, adjusting, by the baseboard management controller according to a pulse width of the square wave signal, a pulse width of each cycle of the first signal to obtain the hard disk status signal; and demodulating, according to the hard disk status signal, the hard disk status data.

53. The baseboard management controller according to claim 49, wherein the signal type of the hard disk status signal comprises a constant-level signal; and demodulating, by the baseboard management controller according to the signal type of the hard disk status signal, the hard disk status data from a signal cycle configured to demodulate the hard disk log data comprises:
demodulating, by the baseboard management controller according to a level signal having a large proportion in a signal cycle of the first signal, the hard disk status data.

54. The baseboard management controller according to claim 53, wherein demodulating, by the baseboard management controller according to a level signal having a large proportion in a signal cycle of the first signal, the hard disk status data comprises:

after demodulating the hard disk log data, replacing, by the baseboard management controller, the first signal with the level signal having a large proportion in the signal cycle of the first signal to obtain the hard disk status signal; and demodulating, according to the hard disk status signal, the hard disk status data.

55. The baseboard management controller according to claim 53, wherein demodulating, by the baseboard management controller according to a level signal having a large proportion in a signal cycle of the first signal, the hard disk status data comprises:

after demodulating the hard disk log data, replacing, by the baseboard management controller, an inverted-level signal corresponding to the level signal having a large proportion in the signal cycle of the first signal with the level signal having a large proportion in the signal cycle of the first signal to obtain the hard disk status signal; and demodulating, according to the hard disk status signal, the hard disk status data.

56. The baseboard management controller according to claim 49, wherein the signal type of the hard disk status signal comprises a single constant-level signal, or the signal type of the hard disk status signal comprises a constant high-level signal and a constant low-level signal; and demodulating, by the baseboard management controller according to the signal type of the hard disk status signal, the hard disk status data from a signal cycle configured to demodulate the hard disk log data comprises:

after demodulating the hard disk log data, restoring, by the baseboard management controller, a signal cycle of the first signal with a duty cycle greater than 50% to a constant high-level signal, and restoring a signal cycle of the first signal with a duty cycle less than 50% to a constant low-level signal, to obtain the hard disk status signal; and
demodulating, according to the hard disk status signal, the hard disk status data.

57. The baseboard management controller according to claim 49, wherein the signal type of the hard disk status signal comprises a square wave signal and a constant-level signal; and
demodulating, by the baseboard management controller according to the signal type of the hard disk status signal, the hard disk status data from a signal cycle configured to demodulate the hard disk log data comprises:

when the constant-level signal is a constant high-level signal, after demodulating the hard disk log data, restoring, by the baseboard management controller, a signal cycle of the first signal with a duty cycle less than a first duty cycle to a square wave signal, and restoring a signal cycle of the first signal with a duty cycle greater than the first duty cycle to a constant high-level signal, to obtain the hard disk status signal;
when the constant-level signal is a constant low-level signal, after demodulating the hard disk log data, restoring, by the baseboard management controller, a signal cycle of the first signal with a duty cycle greater than a second duty cycle to a square wave signal, and restoring a signal cycle of the first signal with a duty cycle less than the second duty cycle to a constant low-level signal, to obtain the hard disk status signal;
when the constant-level signal comprises a constant high-level signal and a constant low-level signal, after demodulating the hard disk log data, restoring, by the baseboard management controller, a signal cycle of the first signal with a duty cycle less than the first duty cycle and greater than the second duty cycle to a square wave signal, restoring a signal cycle of the first signal with a duty cycle greater than the first duty cycle to a constant high-level signal, and restoring a signal cycle of the first signal with a duty cycle less than the second duty cycle to a constant low-level signal, to obtain the hard disk status signal; and
demodulating, according to the hard disk status signal, the hard disk status data.

58. The baseboard management controller according to claim 47, wherein demodulating, by the baseboard management controller, the first signal to obtain the hard disk log data comprises:

after demodulating the hard disk status data from the first signal according to the signal type of the hard disk status signal, demodulating, by the baseboard management controller, the hard disk log data from a signal of any signal period of the first signal that does not conform to the signal type of the hard disk status signal; or
measuring, by the baseboard management controller, level widths of the first signal to obtain digital data corresponding to the hard disk log data, parsing the digital data into the hard disk log data, and demodulating the hard disk status data from a signal of any signal period of the first signal whose level width does not correspond to the digital data.

59. The baseboard management controller according to claim 49 or 58, further comprising a status control circuit corresponding to the hard disk status pin, wherein a controlled terminal of the status control circuit is connected to the baseboard management controller, and an output terminal of the status control circuit is connected to a drive terminal of a controlled element corresponding to the hard disk status pin; and
the baseboard management controller is further configured to control, according to the hard disk status data, the status control circuit to drive the controlled element.

60. The baseboard management controller according to claim 59, wherein the hard disk status pin is a hard disk status indicator light control pin, and the status control circuit is an amplifier drive circuit; and
controlling, by the baseboard management controller according to the hard disk status data, the status control circuit to drive the controlled element comprises:

when the baseboard management controller demodulates the first signal to obtain the hard disk status data corresponding to a turn-on command, controlling the amplifier drive circuit to generate a square wave signal to illuminate a hard disk status indicator light corresponding to the hard disk status pin; and
when the baseboard management controller demodulates the first signal to obtain the hard disk status data corresponding to a turn-off command, stopping controlling the amplifier drive circuit to generate the square wave signal, thereby extinguishing the hard disk status indicator light.

**61.** The baseboard management controller according to claim 40, wherein the baseboard management controller comprises a baseboard management controller chip and a complex programmable logic device;

the baseboard management controller chip is connected to the complex programmable logic device via an inter-integrated circuit bus and an interrupt signal line, and a data input/output pin of the complex programmable logic device is connected to the hard disk status pin;

the complex programmable logic device is configured to demodulate the first signal to obtain the hard disk log data and to send an interrupt signal to the baseboard management controller chip via the interrupt signal line; and

the baseboard management controller chip is configured to read, upon receiving the interrupt signal, the hard disk log data from the complex programmable logic device via the inter-integrated circuit bus and monitor the hard disk according to the hard disk log data.

**62.** The baseboard management controller according to claim 40, wherein the baseboard management controller comprises a baseboard management controller chip and a complex programmable logic device;

the baseboard management controller chip is connected to the complex programmable logic device via an inter-integrated circuit bus, and a data input/output pin of the complex programmable logic device is connected to the hard disk status pin;

the complex programmable logic device is configured to demodulate the first signal to obtain the hard disk log data; and

the baseboard management controller chip is configured to poll the inter-integrated circuit bus, and upon polling the complex programmable logic device, read the hard disk log data, and monitor the hard disk according to the hard disk log data.

**63.** The baseboard management controller according to claim 40, wherein the baseboard management controller is further configured to send, when hard disk status data obtained by demodulating the first signal is non-control data or when the demodulated first signal does not comprise the hard disk status data, and when the current time falls within a negotiation time period agreed upon with the hard disk, a reverse transmission request to the hard disk status pin, and, upon receiving an allow signal sent by the hard disk, send a control command for the hard disk to the hard disk status pin.

**64.** The baseboard management controller according to claim 40, wherein demodulating, by the baseboard management controller, the first signal to obtain the hard disk log data comprises:

measuring, by the baseboard management controller, a pulse amplitude of the first signal to obtain digital data corresponding to the hard disk log data, and parsing the digital data into the hard disk log data.

**65.** The baseboard management controller according to claim 40, wherein the hard disk is further configured to:

during sending of the hard disk status signal via the hard disk status pin, when the hard disk status signal is modulated within a current level of the hard disk status signal, detect timeliness of obtaining the first signal by inverting the level within the current level, wherein the timeliness is configured to indicate whether inverting the level within the current level is allowed to obtain the first signal; and

process the current level according to the timeliness.

**66.** The baseboard management controller according to claim 65, wherein the hard disk is further configured to:

detect a difference between a level width of the first signal and a level width already output for the current level;

when the difference is greater than a difference threshold, determine that the timeliness is configured to indicate that inverting the level within the current level is allowed to obtain the first signal, the difference threshold being determined according to a minimum duration required for level inversion; and

when the difference is less than or equal to the difference threshold, determine that the timeliness is configured to indicate that inverting the level within the current level is not allowed to obtain the first signal.

**67.** The baseboard management controller according to claim 65, wherein the hard disk is further configured to:

when the timeliness is configured to indicate that inverting the level within the current level is allowed to obtain the first signal, send the first signal within the current level; and

when the timeliness is configured to indicate that inverting the level within the current level is not allowed to obtain the first signal, send the first signal after the current level with a target level width, wherein the target level width is a level width that prevents the baseboard management controller from demodulating the hard disk log data.

68. The baseboard management controller according to claim 67, wherein the target level width is greater than a maximum value of a target width range, the target width range being a width range obtained from level widths corresponding to the digital data.

69. The baseboard management controller according to claim 40, wherein the hard disk is further configured to:
when the hard disk status signal switches during the output of the first signal, control modulation of a target level and a reference level according to a level type of the target level currently being sent by the hard disk and a switching of the hard disk status signal, wherein the reference level is a level following the target level.

70. The baseboard management controller according to claim 69, wherein the hard disk is further configured to:
when the hard disk status signal switches from a square wave signal to a constant-level signal, and the level type of the target level is the same as a level type of the constant-level signal, insert an inverted-level signal of the constant-level signal following the target level, and modulate, according to the hard disk status signal being the constant-level signal, the reference level.

71. The baseboard management controller according to claim 69, wherein the hard disk is further configured to:

when the hard disk status signal switches from a square wave signal to a constant-level signal, and the level type of the target level is opposite to a level type of the constant-level signal, modulate, according to the hard disk status signal being the square wave signal, the next level of the target level following the target level; and insert an inverted-level signal of the constant-level signal following the next level of the target level, and modulate, according to the hard disk status signal being the constant-level signal, the reference level.

72. The baseboard management controller according to claim 69, wherein the hard disk is further configured to:
when the hard disk status signal switches from a constant-level signal to a square wave signal, and a pulse type of the target pulse is the same as a pulse type of the constant-level signal, invert the level following the target level, and modulate, according to the hard disk status signal being the square wave signal, the reference level.

73. The baseboard management controller according to claim 69, wherein the hard disk is further configured to:
when the hard disk status signal switches from a constant-level signal to a square wave signal, and a level type of the target level is opposite to a level type of the constant-level signal, modulate, according to the hard disk status signal being the square wave signal, a reference pulse following the target level.

74. The baseboard management controller according to claim 40, wherein demodulating, by the baseboard management controller, the first signal to obtain the hard disk log data comprises:
measuring, by the baseboard management controller, a level width of the first signal that fall within a target width range to obtain digital data corresponding to the hard disk log data, and parsing the digital data into the hard disk log data, wherein the target width range is a width range obtained from level widths corresponding to the digital data.

75. The baseboard management controller according to claim 74, wherein measuring, by the baseboard management controller, a level width of the first signal that fall within a target width range to obtain digital data corresponding to the hard disk log data, and parsing the digital data into the hard disk log data comprises:

measuring, by the baseboard management controller, a level width of the current level in the first signal;
detecting, by the baseboard management controller, whether the level width of the current level falls within the target width range;
when the level width of the current level falls within the target width range, determining, by the baseboard management controller, the level width of the current level as the digital data corresponding to the current level; and
looking up, by the baseboard management controller from a correspondence between digital data and data encoding, data encoding corresponding to the digital data of the current level to obtain the hard disk log data.

76. The baseboard management controller according to claim 75, wherein
after detecting whether the level width of the current level falls within the target width range, when the level width of the current level does not fall within the target width range, the baseboard management controller discards a level width of a target level.

**77.** The baseboard management controller according to claim 74, wherein demodulating, by the baseboard management controller, the first signal to obtain the hard disk log data comprises:
measuring, by the baseboard management controller, a level width of level of a target type in the first signal to obtain digital data corresponding to the hard disk log data, and parsing the digital data into the hard disk log data, wherein the target type is a level type in the first signal that is permitted to carry the hard disk log data.

**78.** The baseboard management controller according to claim 77, wherein

before measuring the level width of the level of the target type in the first signal to obtain digital data corresponding to the hard disk log data, and parsing the digital data into the hard disk log data, the baseboard management controller determines hard disk status according to a level in the first signal; and
the baseboard management controller determines the target type according to the hard disk status.

**79.** The baseboard management controller according to claim 78, wherein determining, by the baseboard management controller according to the level in the first signal, hard disk status comprises:

detecting, by the baseboard management controller, a level width of an inverted-level signal in the first signal, wherein the hard disk status signal is a constant-level signal being configured to indicate that the hard disk is in an idle state, and the inverted-level signal is a level opposite in polarity to the constant-level signal; and
determining, by the baseboard management controller according to the level width of the inverted-level signal, the hard disk status.

**80.** The baseboard management controller according to claim 78, wherein determining, by the baseboard management controller according to the hard disk status, the target type comprises:
when the hard disk status is in an idle state, determining, by the baseboard management controller, the target type as a level type having the same polarity as the constant-level signal.

**81.** The baseboard management controller according to claim 78, wherein determining, by the baseboard management controller according to the hard disk status, the target type comprises:
when the hard disk status is in an active state, determining, by the baseboard management controller, the target type as a high-level type and a low-level type.

**82.** A method for monitoring a hard disk, applied to a baseboard management controller, comprising:

receiving a first signal output by a hard disk through a hard disk status pin, the first signal being modulated according to hard disk log data and a hard disk status signal that corresponds to the hard disk status pin;
demodulating the first signal to obtain the hard disk log data; and
monitoring the hard disk according to the hard disk log data.

**83.** The method for monitoring a hard disk according to claim 82, wherein the first signal simultaneously carries the modulated hard disk log data and the modulated hard disk status signal.

**84.** The method for monitoring a hard disk according to claim 83, wherein each level width of one or more level widths of the first signal correspond to a data bit of one or more data bits of the hard disk log data.

**85.** The method for monitoring a hard disk according to claim 83 or 84, wherein high-low level transition in the first signal correspond to the hard disk status signal.

**86.** The method for monitoring a hard disk according to claim 83 or 84, wherein a level signal having a large proportion in the first signal corresponds to the hard disk status signal.

**87.** The method for monitoring a hard disk according to claim 83, wherein the hard disk status signal comprises a single constant-level signal, or the hard disk status signal comprises a constant high-level signal and a constant low-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;
when the hard disk status signal is a constant high-level signal, a duty cycle of each cycle of the signal with a level width corresponding to the hard disk log data is greater than 50%; and
when the hard disk status signal is a constant low-level signal, the duty cycle of each cycle of the signal with a level width corresponding to the hard disk log data is less than 50%.

**88.** The method for monitoring a hard disk according to claim 83, wherein the hard disk status signal comprises a square wave signal and a constant-level signal;

the first signal is obtained by the hard disk, by modulating a signal with a level width corresponding to the hard disk log data and the hard disk status signal, after the hard disk has converted the hard disk log data into a signal with a level width corresponding to the hard disk log data;
when the hard disk status signal is a square wave signal, a maximum duty cycle within a signal cycle of the hard disk log data is less than a first duty cycle, and/or a minimum duty cycle within a signal cycle of the hard disk log data is greater than a second duty cycle;
when the constant-level signal is a constant high-level signal, the first duty cycle is a minimum duty cycle of the first signal corresponding to the constant-level signal; and
when the constant-level signal is a constant low-level signal, the second duty cycle is a maximum duty cycle of the first signal corresponding to the constant-level signal.

89. The method for monitoring a hard disk according to claim 82, wherein the first signal carries, in a time-division manner, the modulated hard disk log data and the modulated hard disk status signal.

90. The method for monitoring a hard disk according to claim 82, wherein demodulating the first signal to obtain the hard disk log data comprises:
measuring a level width of the first signal to obtain digital data corresponding to the hard disk log data, and parsing the digital data into the hard disk log data.

91. The method for monitoring a hard disk according to claim 83, further comprising:
demodulating, according to a signal type of the hard disk status signal, the hard disk status data from a signal cycle configured to demodulate the hard disk log data.

92. The method for monitoring a hard disk according to claim 91, wherein the signal type of the hard disk status signal comprises a square wave signal; and demodulating, according to a signal type of the hard disk status signal, the hard disk status data from a signal cycle configured to demodulate the hard disk log data comprises:
demodulating, according to high-low level transition in the first signal, the hard disk status data.

93. The method for monitoring a hard disk according to claim 92, wherein demodulating, according to high-low level transition in the first signal, the hard disk status data comprises:

after demodulating the hard disk log data, replacing the first signal with a square wave signal to obtain the hard disk status signal; and demodulating, according to the hard disk status signal, the hard disk status data.

94. The method for monitoring a hard disk according to claim 92, wherein demodulating, according to high-low level transition in the first signal, the hard disk status data comprises:

after demodulating the hard disk log data, adjusting, according to a pulse width of the square wave signal, a pulse width of each cycle of the first signal to obtain the hard disk status signal; and demodulating, according to the hard disk status signal, the hard disk status data.

95. The method for monitoring a hard disk according to claim 91, wherein the signal type of the hard disk status signal comprises a constant-level signal; and demodulating, according to the signal type of the hard disk status signal, the hard disk status data from a signal cycle configured to demodulate the hard disk log data comprises:
demodulating, according to a level signal having a large proportion in the first signal, the hard disk status data.

96. The method for monitoring a hard disk according to claim 95, wherein demodulating, according to a level signal having a large proportion in a signal cycle of the first signal, the hard disk status data comprises:

after demodulating the hard disk log data, replacing the first signal with the level signal having a large proportion in the signal cycle of the first signal to obtain the hard disk status signal; and demodulating, according to the hard disk status signal, the hard disk status data.

97. The method for monitoring a hard disk according to claim 95, wherein demodulating, according to a level signal having a large proportion in a signal cycle of the first signal, the hard disk status data comprises:

after demodulating the hard disk log data, replacing an inverted-level signal corresponding to the level signal having a large proportion in the signal cycle of the first signal with the level signal having a large proportion in the signal cycle of the first signal to obtain the hard disk status signal; and demodulating, according to the hard disk status signal, the hard disk status data.

98. The method for monitoring a hard disk according to claim 91, wherein the signal type of the hard disk status signal comprises a single constant-level signal, or the signal type of the hard disk status signal comprises a constant high-level signal and a constant low-level signal; and demodulating, according to the signal type of the hard disk status signal, the hard disk status data from a signal cycle configured to demodulate the hard disk log data comprises:

after demodulating the hard disk log data, restoring a signal cycle of the first signal with a duty cycle greater than 50% to a constant high-level signal, and restoring a signal cycle of the first signal with a duty cycle less than 50% to a constant low-level signal, to obtain the hard disk status signal; and demodulating, according to the hard disk status signal, the hard disk status data.

99. The method for monitoring a hard disk according to claim 91, wherein the signal type of the hard disk status signal comprises a square wave signal and a constant-level signal; and demodulating, according to the signal type of the hard disk status signal, the hard disk status data from a signal cycle configured to demodulate the hard disk log data comprises:

when the constant-level signal is a constant high-level signal, after demodulating the hard disk log data, restoring a signal cycle of the first signal with a duty cycle less than a first duty cycle to a square wave signal, and restoring a signal cycle of the first signal with a duty cycle greater than the first duty cycle to a constant high-level signal, to obtain the hard disk status signal; when the constant-level signal is a constant low-level signal, after demodulating the hard disk log data, restoring a signal cycle of the first signal with a duty cycle greater than a second duty cycle to a square wave signal, and restoring a signal cycle of the first signal with a duty cycle less than the second duty cycle to a constant low-level signal, to obtain the hard disk status signal; when the constant-level signal comprises a constant high-level signal and a constant low-level signal, after demodulating the hard disk log data, restoring a signal cycle of the first signal with a duty cycle less than the first duty cycle and greater than the second duty cycle to a square wave signal, restoring a signal cycle of the first signal with a duty cycle greater than the first duty cycle to a constant high-level signal, and restoring a signal cycle of the first signal with a duty cycle less than the second duty cycle to a constant low-level signal, to obtain the hard disk status signal; and demodulating, according to the hard disk status signal, the hard disk status data.

100. The method for monitoring a hard disk according to claim 99, wherein demodulating the first signal to obtain the hard disk log data comprises:

after demodulating the hard disk status data from the first signal according to the signal type of the hard disk status signal, demodulating the hard disk log data from a signal of any signal period of the first signal that does not conform to the signal type of the hard disk status signal; or measuring a level-width pulse width of the first signal to obtain digital data corresponding to the hard disk log data, parsing the digital data into the hard disk log data, and demodulating the hard disk status data from signal periods with level widths not corresponding to the digital data.

101. The method for monitoring a hard disk according to claim 91 or 100, further comprising: controlling, according to the hard disk status data, a status control circuit to drive a controlled element corresponding to the hard disk status pin.

102. The method for monitoring a hard disk according to claim 101, wherein the hard disk status pin is a hard disk status indicator light control pin, and the status control circuit is an amplifier drive circuit; and controlling, according to the hard disk status data, a status control circuit to drive a controlled element corresponding to the hard disk status pin comprises:

when the first signal is demodulated to obtain the hard disk status data corresponding to a turn-on command, controlling the amplifier drive circuit to generate a square wave signal to illuminate a hard disk status indicator light corresponding to the hard disk status pin; and when the first signal is demodulated to obtain the hard disk status data corresponding to a turn-off command, stopping controlling the amplifier drive circuit to generate the square wave signal, thereby extinguishing the hard disk status indicator light.

103. The method for monitoring a hard disk according to claim 82, wherein the method is applied to a complex programmable logic device of the baseboard management controller, the complex programmable logic device being connected to a baseboard management controller chip of the baseboard management controller via an inter-integrated circuit bus; and

monitoring the hard disk according to the hard disk log data comprises:

sending, via an interrupt signal line, an interrupt signal to the baseboard management controller chip, such that, upon receiving the interrupt signal, the baseboard management controller chip reads the hard disk log data from the complex programmable logic device via the inter-integrated circuit bus and monitors the hard disk according to the hard disk log data.

**104.**
The method for monitoring a hard disk according to claim 82, wherein the method is applied to a complex programmable logic device of the baseboard management controller, the complex programmable logic device being connected to a baseboard management controller chip of the baseboard management controller via an inter-integrated circuit bus; and

monitoring the hard disk according to the hard disk log data comprises:

receiving polling from the baseboard management controller chip, such that, upon polling the complex programmable logic device, the baseboard management controller chip reads the hard disk log data and monitors the hard disk according to the hard disk log data.

**105.**
The method for monitoring a hard disk according to claim 82, further comprising:

when hard disk status data obtained by demodulating the first signal is non-control data or when the demodulated first signal does not comprise the hard disk status data, and when the current time falls within a negotiation time period agreed upon with the hard disk, sending a reverse transmission request to the hard disk status pin, and, upon receiving an allow signal sent by the hard disk, sending a control command for the hard disk to the hard disk status pin.

**106.**
The method for monitoring a hard disk according to claim 82, wherein demodulating the first signal to obtain the hard disk log data comprises:

measuring a pulse amplitude of the first signal to obtain digital data corresponding to the hard disk log data, and parsing the digital data into the hard disk log data.

**107.**
The method for monitoring a hard disk according to claim 82, wherein demodulating the first signal to obtain the hard disk log data comprises:

measuring level widths of the first signal that fall within a target width range to obtain digital data corresponding to the hard disk log data, and parsing the digital data into the hard disk log data, wherein the target width range is a width range obtained from level widths corresponding to the digital data.

**108.**
The method for monitoring a hard disk according to claim 107, wherein measuring a level width of the first signal that fall within a target width range to obtain digital data corresponding to the hard disk log data, and parsing the digital data into the hard disk log data comprises:

measuring a level width of the current level in the first signal;
detecting whether the level width of the current level falls within the target width range;
when the level width of the current level falls within the target width range, determining the level width of the current level as the digital data corresponding to the current level; and
looking up, from a correspondence between digital data and data encoding, data encoding corresponding to the digital data of the current level to obtain the hard disk log data.

**109.**
The method for monitoring a hard disk according to claim 108, after detecting whether the level width of the current level falls within the target width range, further comprising:

when the level width of the current level does not fall within the target width range, discarding a level width of a target level.

**110.**
The method for monitoring a hard disk according to claim 82, wherein demodulating the first signal to obtain the hard disk log data comprises:

measuring a level width of level of a target type in the first signal to obtain digital data corresponding to the hard disk log data, and parsing the digital data into the hard disk log data, wherein the target type is a level type in the first signal that is permitted to carry the hard disk log data.

**111.** The method for monitoring a hard disk according to claim 110, before measuring the level width of the level of the target type in the first signal to obtain digital data corresponding to the hard disk log data and parsing the digital data into the hard disk log data, further comprising:

determining, according to the levels in the first signal, the hard disk status; and
determining, according to the hard disk status, the target type.

**112.**
The method for monitoring a hard disk according to claim 111, wherein determining, according to the level in the first signal, the hard disk status comprises:

> detecting a level width of an inverted-level signal in the first signal, wherein the hard disk status signal is a constant-level signal being configured to indicate that the hard disk is in an idle state, and the inverted-level signal is a level opposite in polarity to the constant-level signal; and
> determining, according to the level width of the inverted-level signal, the hard disk status.

**113.**
The method for monitoring a hard disk according to claim 111, wherein determining, according to the hard disk status, the target type comprises:
when the hard disk status is in an idle state, determining the target type as a level type having the same polarity as the constant-level signal.

**114.**
The method for monitoring a hard disk according to claim 111, wherein determining, according to the hard disk status, the target type comprises:
when the hard disk status is in an active state, determining the target type as a high-level type or a low-level type.

**115.**
A method for monitoring a hard disk, applied to a hard disk, comprising:

> modulating, according to hard disk log data and a hard disk status signal that corresponds to a hard disk status pin, to obtain a first signal; and
> sending the first signal to a baseboard management controller via the hard disk status pin, the baseboard management controller demodulates the first signal to obtain the hard disk log data before monitoring the hard disk according to the hard disk log data.

**116.**
A device for monitoring a hard disk, comprising:

> a memory configured to store a computer program; and
> a processor configured to execute the computer program that, when executed by the processor, performing steps of the method for monitoring a hard disk according to any one of claims 82 to 115.

**117.**
A non-volatile computer readable storage medium having a computer program stored thereon, the computer program, when executed by a processor, performing steps of the method for monitoring a hard disk according to any one of claims 82 to 115.

| Central processing unit | | Advanced host controller interface controller |

| Hard disk expansion card | | Hard disk backplane |

| Hard disk backplane | | Hard disk |

| Hard disk |

FIG. 1

| Central processing unit |

~101

| Hard disk expansion card | Baseboard management controller chip |

| Hard disk backplane |

| Hard disk |

FIG. 2

FIG. 3

FIG. 4

```
          ┌─────────────────────┐
          │       Switch        │
          └─────────────────────┘
```

| Central processing unit | Multiplexed bidirectional switch | Virtual pin port | Non-volatile memory express interface hard disk |
|---|---|---|---|

| Baseboard management controller chip | 101 | Complex programmable logic device | 102 |
|---|---|---|---|

| Electrically erasable programmable read-only memory | Sensor |
|---|---|

FIG. 5

| Sampling control circuit |
|---|

Parsing circuit

| Charging circuit |
|---|

| Sampling circuit |
|---|

First signal

| Discharge circuit |
|---|

| Pulse detection circuit |
|---|

| Loop control circuit |
|---|

FIG. 6

VDD

VDD

Hard disk status
indicator light

Hard
disk

Baseboard
management
controller

FIG. 7

| Value | Error | | 0 | 1 | 2 | 3 | 4 | 5 | 6 | 7 | Null | 8 | 9 | A | B | C | D | E | F | Error |
| Pulse width | | 41 | 42 | 43 | 44 | 45 | 46 | 47 | 48 | 49 | 50 | 51 | 52 | 53 | 54 | 55 | 56 | 57 | 58 | 59 |

FIG. 8

Inverted-level signal of hard
disk status signal

FIG. 9

Receive a first signal output by a hard disk through a hard disk status pin, the first signal being modulated according to hard disk log data and a hard disk status signal that corresponds to the hard disk status pin — S1

Demodulate the first signal to obtain the hard disk log data — S2

Monitor the hard disk according to the hard disk log data — S3

FIG. 10

Modulate, according to hard disk log data and a hard disk status signal that corresponds to a hard disk status pin, a first signal — S4

Send the first signal to a baseboard management controller via the hard disk status pin, such that the baseboard management controller demodulates the first signal to obtain the hard disk log data before monitoring the hard disk according to the hard disk log data — S5

FIG. 11

FIG. 12

Memory 1110

Computer program 1111

Operating system 1112

Data 1113

Processor 1120

Communication bus 1180

| Display screen 1130 | Power supply 1140 | Communication interface 1150 | Input/output interface 1160 | Sensor 1170 |

FIG. 13

**1** Originally planned to invert level at 42 milliseconds

**2** Determine before inversion whether there is enough time

**3** Delay the inversion to cause the current level width to exceed 58.25 milliseconds

**4** Retransmit the level

Level width (milliseconds)

50          42          42

Hard disk sends P11 signal

58.5

Baseboard management controller demodulates

50          58.5          42

Ignore abnormal level

50                    42

FIG. 14

Target level being sent is a high-level signal

Complete the sending of the current target level, then insert a low-level signal, modulate the next data encoding to be sent, and continue modulating the subsequent data encoding according to the modulation method used for an idle state of a hard disk

FIG. 15

Modulate, after the level is inverted to a high-level signal, the subsequent levels according to the modulation method used for an idle state of a hard disk

Target level being sent is a low-level signal

Perform the subsequent processing in a manner where the currently sent high-level signal is treated as a constant-level signal

FIG. 16

Target level
being sent is a
high-level signal

Complete the sending of the current target level, and
continue modulating, after the level is inverted, the
subsequent data encoding according to the modulation
method used for an active state of a hard disk

FIG. 17

Complete the sending of the current narrow
low-level signal, and modulate, after the level
is inverted to a high-level signal, the
subsequent data encoding according to the
modulation method used for an active state of
a hard disk

Target level being sent is a
low-level signal

FIG. 18

## INTERNATIONAL SEARCH REPORT

| International application No. |
|---|
| **PCT/CN2024/095299** |

| A. | CLASSIFICATION OF SUBJECT MATTER |
|---|---|

G06F 11/30(2006.01)i

According to International Patent Classification (IPC) or to both national classification and IPC

| B. | FIELDS SEARCHED |
|---|---|

Minimum documentation searched (classification system followed by classification symbols)

IPC:G06F11/-

Documentation searched other than minimum documentation to the extent that such documents are included in the fields searched

Electronic data base consulted during the international search (name of data base and, where practicable, search terms used)

CNTXT, CNABS, CJFD, ENTXTC, ENTXT, VEN, IEEE, CNKI: 插针, 端子, 管脚, 引脚, 针脚, 基板管理控制器, 连通, 连接, 跳线, 日志, 状态, BMC, 带外通信, 硬盘, hard disk, pin, status, hard disk, BMC, connect+, log, CPLD

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117971613 A (SUZHOU YUANNAO INTELLIGENT TECHNOLOGY CO., LTD.) 03 May 2024 (2024-05-03) <br> claims 1-68, and description, paragraphs [0142] and [0144] | 1-117 |
| X | CN 103176883 A (HONGFUJIN PRECISION INDUSTRY (SHENZHEN) CO., LTD. et al.) 26 June 2013 (2013-06-26) <br> description, paragraphs [0006]-[0017], and figures 1-2 | 1-117 |
| A | CN 111752790 A (HONGFUJIN PRECISION ELECTRONICS (TIANJIN) CO., LTD.) 09 October 2020 (2020-10-09) <br> entire document | 1-117 |
| A | US 2015127814 A1 (INVENTEC (PUDONG) TECHNOLOGY CORP. et al.) 07 May 2015 (2015-05-07) <br> entire document | 1-117 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 July 2024** | **12 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/095299**

| Patent document cited in search report | | | Publication date (day/month/year) | Patent family member(s) | | | Publication date (day/month/year) |
|---|---|---|---|---|---|---|---|
| CN | 117971613 | A | 03 May 2024 | CN | 117971613 | B | 16 August 2024 |
| CN | 103176883 | A | 26 June 2013 | TW | 201327569 | A | 01 July 2013 |
| | | | | US | 2013155601 | A1 | 20 June 2013 |
| | | | | US | 8514604 | B2 | 20 August 2013 |
| CN | 111752790 | A | 09 October 2020 | US | 2020311013 | A1 | 01 October 2020 |
| | | | | US | 11392440 | B2 | 19 July 2022 |
| US | 2015127814 | A1 | 07 May 2015 | CN | 104639380 | A | 20 May 2015 |
| | | | | CN | 104639380 | B | 09 March 2018 |

Form PCT/ISA/210 (patent family annex) (July 2022)

**EP 4 738 125 A1**

## REFERENCES CITED IN THE DESCRIPTION

**Patent documents cited in the description**

- CN 202410382672